# EUROPEAN PATENT APPLICATION

(11) **EP 4 529 197 A1**
(43) Date of publication of application: **26.03.2025**
(21) Application number: 23830337.4
(22) Date of filing: 28.06.2023
(51) Int. Cl.: H04N 21/485

(54) **DISPLAY METHOD AND RELATED APPARATUS**

(30) Priority: 30.06.2022 CN 202210761545
(71) Applicant: Huawei Technologies Co., Ltd., Shenzhen, Guangdong 518129 (CN)
(72) Inventor: JI, Ting, Shenzhen, Guangdong 518129 (CN); QIU, Bo, Shenzhen, Guangdong 518129 (CN)
(74) Representative: Goddar, Heinz J.
(86) International application number: PCT/CN2023/103212
(87) International publication number: WO 2024/002164

(57) **Abstract**

This application discloses a display method and a related apparatus. An electronic device displays a portrait-mode page including a portrait-mode video play window, where a picture of a first video is displayed in the portrait-mode video play window. The electronic device may receive landscape/portrait mode switching input, and capture and display an image of the portrait-mode page in response to the input. The electronic device may display, on the image of the portrait-mode page, a switching animation of switching the picture of the first video from the portrait-mode video play window to a landscape-mode video play window through rotation, movement, and zoom-in. When playing of the switching animation ends, the electronic device may display a landscape-mode page including the landscape-mode video play window. In this way, the electronic device can provide a smooth and aesthetic landscape/portrait mode switching animation for an application that supports a video play function.

## Description

This application claims priority to Chinese Patent Application No. 202210761545.9, filed with the China National Intellectual Property Administration on June 30, 2022 and entitled "DISPLAY METHOD AND RELATED APPARATUS", which is incorporated herein by reference in its entirety.

### TECHNICAL FIELD

This application relates to the field of terminal technologies, and in particular, to a display method and a related apparatus.

### BACKGROUND

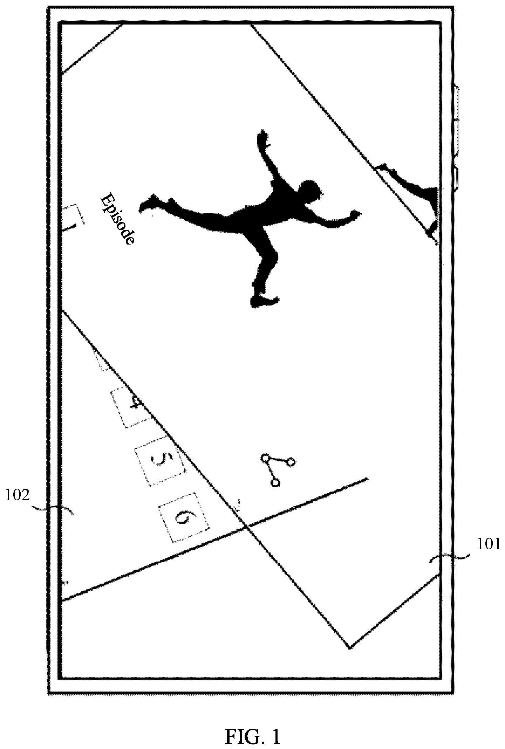

Currently, when an electronic device plays a video, a video play status varies with a handheld mode of a user. When the user holds the electronic device vertically, the electronic device is in a portrait play mode, the electronic device plays the video on a half screen, and a video play window is located at the top of a display of the electronic device. When the user holds the electronic device horizontally, the electronic device is in a landscape play mode, the electronic device plays the video on a full screen, and a video play window occupies the entire display of the electronic device. During video play, the user may switch the video play status at any time. For example, the user may switch from the landscape play mode to the portrait play mode, or may switch from the portrait play mode to the landscape play mode. During landscape/portrait mode switching, a landscape-mode page and a portrait-mode page overlap during the switching due to fade-out of a page displayed before the switching and fade-in of a page displayed after the switching. As shown in FIG. 1, during landscape/portrait mode switching, a landscape-mode play page 101 and a portrait-mode play page 102 overlap, and consequently, switching effect is unnatural, and user experience is poor.

### SUMMARY

This application provides a display method and a related apparatus, to achieve the following implementation: An electronic device displays a portrait-mode page including a portrait-mode video play window, where a picture of a first video is displayed in the portrait-mode video play window. The electronic device may receive landscape/portrait mode switching input, and capture an image of the portrait-mode page in response to the input, to obtain a first background image layer. The electronic device may display the first background image layer, and display, at the first background image layer, a switching animation of switching a first rotational image layer including the picture of the first video from the portrait-mode video play window to a landscape-mode video play window. When playing of the switching animation ends, the electronic device may display a landscape-mode page including the landscape-mode video play window, where the picture of the first video is displayed in the portrait-mode video play window, and the first rotational image layer is a transformed landscape-mode page or a screenshot of the portrait-mode video play window.

Further, the following implementation is achieved: When the electronic device displays the landscape-mode page including the landscape-mode video play window, the electronic device may receive landscape/portrait mode switching input, display a second background image layer in response to the input, and display, at the second background image layer, a switching animation of switching a second rotational image layer including the picture of the first video from the landscape-mode video play window to a portrait-mode video play window. When playing of the switching animation ends, the electronic device may display a portrait-mode page including the portrait-mode video play window. The second background image layer may be the portrait-mode page, and the second rotational image layer is a screenshot of the landscape-mode page; or the second background image layer may be an image of the portrait-mode page, and the second rotational image layer is a transformed portrait-mode page.

In this way, the electronic device can provide a smooth and aesthetic landscape/portrait mode switching animation for an application that supports a video play function.

According to a first aspect, this application provides a display method, including: An electronic device displays a first page, where a first window is displayed in a first region of the first page, and a picture of a first video is displayed in the first window. The electronic device receives first input for switching the electronic device from a portrait-mode display state to a landscape-mode display state. The electronic device displays a first background image layer after receiving the first input, where the first background image layer includes a screenshot of the first page. The electronic device displays a first rotational image layer above the first background image layer in a floating manner, and switches the first rotational image layer from the first region to a second region of a second page for display, where the first window is displayed in the second region of the second page, a direction of the picture of the first video on the second page is different from a direction of the picture of the first video on the first page, the first rotational image layer includes the picture of the first video, and a direction of the picture of the first video in a case in which the first rotational image layer is displayed in the second region is different from a direction of the picture of the first video in a case in which the first rotational image layer is displayed in the first region. The electronic device displays the second page after the first rotational image layer is switched to the second region for display.

In this way, during the switching from the portrait-mode display state to the landscape-mode display state, the electronic device may use a portrait-mode page as a background image layer, and rotate, zoom in, and translate a rotational image layer including the picture of the first video to obtain a rotational image layer whose size and location are the same as a size and a location of a landscape-mode page and in which a direction of the picture of the first video is the same as a direction of the picture of the first video on the landscape-mode page. During entire switching, the electronic device does not directly switch from the portrait-mode page to the landscape-mode page, and the landscape-mode page and the portrait-mode page do not overlap either. This makes landscape/portrait mode switching effect smoother and improves user experience. In addition, because the electronic device rotates, zooms in/out, and translates only the rotational image layer, if a status bar is displayed at the top of a page displayed on the electronic device, the rotational image layer does not include the status bar, and the status bar does not rotate along with the rotational image layer. This makes an animation of switching from the portrait-mode display state to the landscape-mode display state more aesthetic.

In a possible implementation, the switching the first rotational image layer from the first region to a second region of a second page for display specifically includes: performing rotation, translation, and zoom-in operations on the first rotational image layer to switch the first rotational image layer from the first region to the second region for display.

In this way, the electronic device can display an entire process of rotating, translating, and zooming in the first rotational image layer. This provides a user with a visual feeling that a portrait-mode video play window on the portrait-mode page changes to the landscape-mode page, and makes a switching process smoother.

In a possible implementation, during the displaying, by the electronic device, the first background image layer, the method further includes:
displaying a first blocking image layer in a floating manner at a display location of the first window at the first background image layer, where the first blocking image layer and the first window have a same size, the first blocking image layer is a preset image, and the first blocking image layer is blocked by the first rotational image layer.

In this way, during displaying, by the electronic device, the switching the first rotational image layer from the first region to the second region for display, the picture of the first video at the first background image layer is blocked by the first blocking image layer, the user cannot see the picture of the first video at the first background image layer, and two pictures of the first video do not simultaneously appear on a display of the electronic device. This provides the user with a visual feeling that the portrait-mode video play window on the portrait-mode page changes to the landscape-mode page, and makes a switching process smoother.

Optionally, when the first rotational image layer is displayed in the first region or the second region, the first blocking image layer is fully blocked by the first rotational image layer. During the switching the first rotational image layer to the second region for display, the first blocking image layer is partially blocked by the first rotational image layer within some time, and is fully blocked by the first rotational image layer within some other time.

In a possible implementation, during the displaying, by the electronic device, the first background image layer, the method further includes:

The electronic device draws the second page;
the electronic device obtains a size and a location of the first window on the first page based on image layer information of the first page and image layer information of the second page, where the size of the first window on the first page is the same as a size of the first region, and the location of the first window on the first page is the same as a location of the first region; and
the electronic device performs rotation, translation, and zoom-out transformation on the second page to obtain a transformed second page whose size and location are the same as the size and the location of the first region and in which a direction of the picture of the first video is the same as a direction of the picture of the first video in the first window on the first page, where the first rotational image layer is the transformed second page; or
the electronic device obtains an image of the first window in the screenshot of the first page based on the size and the location of the first window on the first page, where the first rotational image layer is the image of the first window on the first page.

In this way, because the electronic device cannot split the first page or the second page to obtain a separate first window, the electronic device may obtain the location and the size of the first window on the first page by comparing the image layer information of the first page with the image layer information of the second page. The electronic device may capture the image of the first window in the screenshot of the first page based on the location and the size of the first window to obtain a rotational image layer, or the electronic device may transform the second page based on the location and the size of the first window to obtain a rotational image layer. If the first rotational image layer is the transformed second page, a case in which some pictures of the first video are skipped is avoided because the picture of the first video is always played on the second page on the electronic device during landscape/portrait mode switching.

It can be understood that the electronic device may draw the second page in the background, and skip displaying the second page after drawing the second page, or display the second page at a lower layer of the first background image layer. The electronic device can display only one image layer including the first window in which the picture of the first video is played. Therefore, the first page no longer exists when the electronic device draws the second page. The electronic device may start drawing the second page only when displaying the first background image layer, to avoid a case in which the second page is immediately displayed after the electronic device cancels displaying the first page.

In a possible implementation, that the electronic device obtains a size and a location of the first window based on image layer information of the first page and image layer information of the second page specifically includes:
obtaining the image layer information of the first page, where the image layer information of the first page includes view information of one or more views on the first page, the one or more views on the first page include the first window, and the view information includes a view name, a parent-level view name, a view region parameter, and a view level;
obtaining the image layer information of the second page, where the image layer information of the second page includes view information of one or more views on the second page, the one or more views on the second page include the first window, and the view information includes a view name, a parent-level view name, a view region parameter, and a view level; and
determining the first window on the first page and the first window on the second page based on the image layer information of the first page and the image layer information of the second page, where a view region parameter of the first window on the first page includes the location and the size of the first window on the first page, the first window on the first page and the first window on the second page have a same view name and a same parent-level view name, the first window on the first page has a highest view level on the first page, and the first window on the second page has a highest view level on the second page.

In this way, the electronic device can obtain the location and the size of the first window on the first page by obtaining the image layer information of the first page and the image layer information of the second page.

In a possible implementation, the first window on the first page and the first window on the second page have a same view name, the first window on the first page and the first window on the second page have different view regions and have a same parent-level view name, the first window on the first page has a highest view level on the first page, and the first window on the second page has a highest view level on the second page. In this way, when obtaining the size and the location of the first window on the first page, the electronic device may further determine whether the first window on the first page and the first window on the second page have a same view region. If the first window on the first page on the electronic device and the first window on the second page have a same view region, the electronic device may not perform the display method provided in embodiments of this application. If the first window on the first page on the electronic device and the first window on the second page have different view regions, the electronic device may perform the display method provided in embodiments of this application. If the first window on the first page on the electronic device and the first window on the second page have a same view region, a process of switching the first rotational image layer is urgent. The electronic device obtains only a first window, on a first page, whose view region is different from a view region of the first window on the second page, so that a smoother switching animation can be obtained.

Optionally, a control, for example, a progress bar, may be displayed in the first window on the first page. Optionally, a control, for example, a progress bar, may be displayed in the first window on the second page.

It should be noted that, if the first rotational image layer is obtained based on the second page, when the first rotational image layer is switched to the second region for display, the second page displayed on the electronic device in this case is the first rotational image layer that is switched to the second region for display.

It should be further noted that the electronic device cancels displaying the first background image layer when the first rotational image layer is switched to the second region for display. If the first blocking image layer exists, the electronic device also cancels displaying the first blocking image layer when the first rotational image layer is switched to the second region for display.

In a possible implementation, after the electronic device displays the second page, the method further includes:

The electronic device receives second input of the user for switching the electronic device from the landscape-mode display state to the portrait-mode display state;
in response to the second input, the electronic device displays a second background image layer, and displays a second rotational image layer in a floating manner at a display location of the second background image layer, where the second background image layer includes a third page, the first window is displayed in a third region of the third page, and the third region is the same as the first region;
the electronic device switches the second rotational image layer from the second region to the third region for display, where the second rotational image layer includes the picture of the first video, and a direction of the picture of the first video in a case in which the second rotational image layer is displayed in the third region is different from a direction of the picture of the first video in a case in which the second rotational image layer is displayed in the second region; and
the electronic device displays the third page after the second rotational image layer is switched to the third region for display.

In this way, during the switching from the landscape-mode display state to the portrait-mode display state, the electronic device may use a portrait-mode page as a background image layer, and rotate, zoom out, and translate a rotational image layer including the picture of the first video to obtain a rotational image layer whose size and location are the same as a size and a location of a portrait-mode video play window on the portrait-mode page and in which a direction of the picture of the first video is the same as a direction of the picture of the first video in the portrait-mode video play window on the portrait-mode page. During entire switching, the electronic device does not directly switch from a landscape-mode page to the portrait-mode page, and the landscape-mode page and the portrait-mode page do not overlap either. This makes landscape/portrait mode switching effect smoother and improves user experience. In addition, because the electronic device rotates, zooms in/out, and translates only the rotational image layer, if a status bar is displayed at the top of a page displayed on the electronic device, the rotational image layer does not include the status bar, and the status bar does not rotate along with the rotational image layer. This makes an animation of switching from the landscape-mode display state to the portrait-mode display state more aesthetic.

In a possible implementation, that the electronic device switches the second rotational image layer from the second region to the third region for display specifically includes:
performing rotation, translation, and zoom-out operations on the second rotational image layer to switch the second rotational image layer from the second region to the third region for display.

In this way, the electronic device can display an entire process of rotating, translating, and zooming out the second rotational image layer. This provides the user with a visual feeling that a landscape-mode video play window on the landscape-mode page changes to the portrait-mode video play window on the portrait-mode page, and makes a switching process smoother.

In a possible implementation, that the electronic device displays a second background image layer, and displays a second rotational image layer in a floating manner at a display location of the second background image layer specifically includes:
capturing and displaying an image of the second page in response to the second input; and
displaying the image of the second page above the second background image layer in a floating manner, where the image of the second page is the second rotational image layer.

In this way, a screenshot of the second page is used as the second rotational image layer. This can reduce power consumption for composing a switching animation while making the switching animation smoother.

It should be noted that the displaying the image of the second page above the second background image layer in a floating manner may be understood as displaying the second background image layer below the image of the second page.

In some embodiments, the electronic device captures and displays the image of the second page in response to the second input, and the electronic device draws the third page, and displays the third page below the image of the second page as the second background image layer. The image of the second page is the second rotational image layer.

In a possible implementation, after the electronic device receives the second input, the method further includes:
capturing and displaying an image of the second page in response to the second input; and
canceling displaying the image of the second page before the second rotational image layer is displayed in a floating manner at the display location of the second background image layer, where the second rotational image layer includes an image, captured at first frequency, of the first window on the third page.

In this way, a screenshot, captured at the first frequency, of the first window on the third page is used as the second rotational image layer, to avoid a case in which the picture of the first video at the second rotational image layer remains unchanged during the switching, but the picture of the first video on the second page displayed before the switching is different from the picture of the first video on the third page displayed after the switching. For example, the electronic device sets the second rotational image layer (and a second blocking image layer) to an invisible state (or a transparent state), captures an image of the first window on the third page, and sets the second rotational image layer (and the second blocking image layer) to a visible state (or an opaque state) after the image of the first window on the third page is captured. For another example, the electronic device directly obtains an image of the third page, for example, obtains the image of the third page from a hardware composer, and then captures an image of the first window on the third page based on a location and a size of the first window on the third page.

In a possible implementation, during the displaying a second background image layer, and displaying a second rotational image layer in a floating manner at a display location of the second background image layer, the method further includes:
displaying the second blocking image layer in a floating manner at a display location of a third window at the second background image layer, where the second blocking image layer and the third window have a same size, the second blocking image layer is a preset image, and the second blocking image layer is blocked by the second rotational image layer.

In this way, the electronic device can display an entire process of rotating, translating, and zooming out the second rotational image layer. This provides the user with a visual feeling that the landscape-mode video play window on the landscape-mode page changes to the portrait-mode video play window on the portrait-mode page, and makes a switching process smoother. Optionally, when the second rotational image layer is displayed in the second region or the third region, the second blocking image layer is fully blocked by the second rotational image layer. During the switching the second rotational image layer to the third region for display, the second blocking image layer is partially blocked by the second rotational image layer within some time, and is fully blocked by the second rotational image layer within some other time.

It can be understood that the electronic device may cancel displaying the second rotational image layer after switching the second rotational image layer to the third region for display, so that the second background image layer is displayed on the display. If the second blocking image layer exists on the electronic device, the electronic device may cancel displaying the second blocking image layer after switching the second rotational image layer to the third region for display, so that the picture of the first video at the second background image layer is displayed on the display. When the electronic device cancels displaying the second rotational image layer, the second page displayed on the electronic device in this case is the second background image layer.

In a possible implementation, after the electronic device displays the second page, the method further includes:

The electronic device receives third input of the user for switching the electronic device from the landscape-mode display state to the portrait-mode display state;
the electronic device displays a third background image layer in response to the third input, and displays a third rotational image layer in a floating manner at a display location of the third background image layer, where the third background image layer includes a screenshot of a third page, the first window is displayed in a third region of the third page, and the third region is the same as the first region;
the electronic device switches the third rotational image layer from the second region to the third region for display, where the third rotational image layer includes the picture of the first video, and a direction of the picture of the first video in a case in which the third rotational image layer is displayed in the third region is different from a direction of the picture of the first video in a case in which the third rotational image layer is displayed in the second region; and
the electronic device displays the third page after the third rotational image layer is switched to the third region for display.

It can be understood that, that the third region is the same as the first region means that the third region and the first region have a same size and location.

In a possible implementation, before the electronic device displays the third background image layer, the method further includes: The electronic device captures and displays an image of the second page; the electronic device draws the third page; the electronic device captures an image of the third page to obtain the third background image layer, and
obtains a size and a location of the third window based on the image layer information of the second page and image layer information of the third page, where the size and the location of the third window are the same as a size and a location of the third region;
the electronic device performs rotation, translation, and zoom-in on the third page to obtain the third rotational image layer, where the first window at the third rotational image layer and the first window on the second page have a same size, a direction of the picture of the first video at the third rotational image layer is the same as the direction of the picture of the first video on the second page, and a location of the first window at the third rotational image layer is the same as a location of the first window on the second page; and
the electronic device cancels displaying the image of the second page.

In this way, the third page is used as the third rotational image layer, to avoid a case in which the picture of the first video at the third rotational image layer remains unchanged during the switching, but the picture of the first video on the second page displayed before the switching is different from the picture of the first video on the third page displayed after the switching.

In a possible implementation, that the electronic device switches the third rotational image layer from the second region to the third region for display specifically includes: The electronic device skips displaying a part of the third rotational image layer other than the third window; the electronic device performs rotation, translation, and zoom-out operations on the third window at the third rotational image layer to switch the third window at the third rotational image layer from the second region to the third region for display; and when the electronic device switches the third window at the third rotational image layer from the second region to the third region for display, the electronic device displays the part of the third rotational image layer other than the third window.

In this way, a case in which a part of a third selection image layer other than the first window is displayed on the display and two portrait-mode pages are displayed on the display during playing of a switching animation can be avoided, so that a switching process is more aesthetic.

In a possible implementation, during the displaying, by the electronic device, a third background image layer, and displaying a third rotational image layer in a floating manner at a display location of the third background image layer, the method further includes:
displaying a third blocking image layer in a floating manner at a display location of the third window at the background image layer, where the third blocking image layer and the third window have a same size, the third blocking image layer is a preset image, and the third blocking image layer is blocked by the second rotational image layer.

In this way, during displaying, by the electronic device, the switching the second rotational image layer from the second region to the third region for display, the picture of the first video at the second background image layer is blocked by the second blocking image layer, the user cannot see the picture of the first video at the second background image layer, and two pictures of the first video do not simultaneously appear on the display of the electronic device, so that a switching process is smoother.

Optionally, when the second rotational image layer is displayed in the second region or the third region, the second blocking image layer is fully blocked by the second rotational image layer. During the switching the second rotational image layer to the third region for display, the second blocking image layer is partially blocked by the second rotational image layer within some time, and is fully blocked by the second rotational image layer within some other time.

In a possible implementation, the first window on the first page includes a first control, and the first input is input for the first control, or the first input is input of rotating the electronic device clockwise or counterclockwise by a first angle, and/or the first input is input of rotating the electronic device at a first acceleration.

In this way, the electronic device may receive a plurality of types of different input, and perform a landscape/portrait mode switching operation, to adapt to more application scenarios. For example, when the user holds the electronic device only with one hand, the electronic device may be rotated to trigger the electronic device to perform a landscape/portrait mode switching operation.

In a possible implementation, a size of the second region is the same as a size of the display of the electronic device. In this way, the electronic device can determine the size and a location of the second region without obtaining the location or the size of the first window on the second page.

In a possible implementation, after receiving landscape/portrait mode switching input, the electronic device may indicate a landscape/portrait mode switching unit of the electronic device to perform a landscape/portrait mode switching operation, where the landscape/portrait mode switching operation includes a step performed by the electronic device in any one of the foregoing possible implementations. The landscape/portrait mode switching unit belongs to an application framework layer of the electronic device. The landscape/portrait mode switching unit and a first application are different modules of the electronic device. The landscape/portrait mode switching unit does not belong to the first application, and the first application does not belong to the landscape/portrait mode switching unit either. The first application is an application that provides display content of the first page, the second page, and the third page.

In this way, all applications that are installed on the electronic device and that support a video play function may obtain, by using the landscape/portrait mode switching unit, a landscape/portrait mode switching animation composed by the landscape/portrait mode switching unit. To be specific, even if no landscape/portrait mode switching animation is set for an application, when receiving a landscape/portrait mode switching operation for the application for which no landscape/portrait mode switching animation is set, the electronic device may directly obtain a smooth and aesthetic switching animation by using the landscape/portrait mode switching unit, and the electronic device may play the switching animation, without overlapping between a landscape-mode page and a portrait-mode page. In addition, the landscape/portrait mode switching unit of the electronic device may provide a switching animation with a same switching style for all applications. This avoids a case in which different switching animations are provided for different applications and experience is poor.

In some embodiments, the landscape/portrait mode switching unit of the electronic device is divided into a window management module, a page composition module, a screen rotation module, and an animation module. The window management module is configured to obtain a screenshot. The page composition module is configured to compose the first page and the third page. The animation module is configured to compose a switching animation. The screen rotation module is configured to schedule the page composition module and the animation module, and is further configured to transmit data between the window management module, the animation module, and the page composition module. In this way, different modules cooperate with each other to compose a landscape/portrait mode switching animation, and the electronic device may hand over some operations of composing the landscape/portrait mode switching animation to an original module of the electronic device for execution, to properly utilize resources provided by the electronic device. This avoids deploying a plurality of modules with a same function on the electronic device.

According to a second aspect, this application provides another display method, including:

An electronic device displays a fourth page, where a first window is displayed in a fourth region of the fourth page, and a picture of a first video is displayed in the first window;
the electronic device receives fourth input for switching the electronic device from a landscape-mode display state to a portrait-mode display state;
in response to the fourth input, the electronic device displays a fourth background image layer, and displays a fourth rotational image layer in a floating manner at a display location of the fourth background image layer, where the fourth background image layer includes a fifth page, the first window is displayed in a fifth region of the fifth page, and a direction of the picture of the first video on the fifth page is different from a direction of the picture of the first video on the fourth page;
an animation module of the electronic device switches the fourth rotational image layer from the fourth region to the fifth region for display, where the fourth rotational image layer includes the picture of the first video, and a direction of the picture of the first video in a case in which the fourth rotational image layer is displayed in the fifth region is different from a direction of the picture of the first video in a case in which the fourth rotational image layer is displayed in the fourth region; and
the electronic device displays the fifth page after the fourth rotational image layer is switched to the fifth region for display.

In this way, during the switching from the landscape-mode display state to the portrait-mode display state, the electronic device may use a portrait-mode page as a background image layer, and rotate, zoom out, and translate a rotational image layer including the picture of the first video to obtain a rotational image layer whose size and location are the same as a size and a location of a portrait-mode video play window on the portrait-mode page and in which a direction of the picture of the first video is the same as a direction of the picture of the first video in the portrait-mode video play window on the portrait-mode page.

In a possible implementation, that the electronic device switches the fourth rotational image layer from the fourth region to the fifth region for display specifically includes: performing rotation, translation, and zoom-out operations on the fourth rotational image layer to switch the fourth rotational image layer from the fourth region to the fifth region for display.

In this way, the electronic device can display an entire process of rotating, translating, and zooming out the fourth rotational image layer. This provides a user with a visual feeling that a landscape-mode video play window on a landscape-mode page changes to the portrait-mode video play window on the portrait-mode page, and makes a switching process smoother.

In a possible implementation, that the electronic device displays a fourth background image layer, and displays a fourth rotational image layer in a floating manner at a display location of the fourth background image layer specifically includes:
capturing and displaying a screenshot of the fourth page in response to the fourth input; and
displaying the screenshot of the fourth page above the fourth background image layer in a floating manner, where the screenshot of the fourth page is the fourth rotational image layer.

In this way, the screenshot of the fourth page is used as the fourth rotational image layer. This can reduce power consumption for composing a switching animation while making the switching animation smoother.

It should be noted that displaying an image of the fourth page above the fourth background image layer in a floating manner may be understood as displaying the fourth background image layer below the image of the fourth page. In some embodiments, the electronic device captures and displays the image of the fourth page in response to the fourth input, and the electronic device draws the fifth page, and displays the fifth page below the image of the fourth page as the fourth background image layer. The image of the fourth page is the fourth rotational image layer.

In a possible implementation, after the electronic device receives the fourth input, the method further includes:
capturing and displaying a screenshot of the fourth page in response to the fourth input; and
canceling displaying the screenshot of the fourth page before the fourth rotational image layer is displayed in a floating manner at the display location of the fourth background image layer, where the fourth rotational image layer includes a screenshot, captured at first frequency, of the first window on the fifth page.

For example, the electronic device sets the fourth rotational image layer (and a fourth blocking image layer) to an invisible state (or a transparent state), captures an image of the first window on a third page, and sets the fourth rotational image layer (and the fourth blocking image layer) to a visible state (or an opaque state) after the image of the first window on the third page is captured. For another example, the electronic device directly obtains an image of the fifth page, for example, obtains the image of the fifth page from a hardware composer, and then captures an image of the first window on the fifth page based on a location and a size of the first window on the fifth page.

In a possible implementation, during the displaying a fourth background image layer, and displaying a fourth rotational image layer in a floating manner at a display location of the fourth background image layer, the method further includes:
displaying the fourth blocking image layer in a floating manner at a display location of the first window at the fourth background image layer, where the fourth blocking image layer and the first window have a same size, the fourth blocking image layer is a preset image, and the fourth blocking image layer is blocked by the fourth rotational image layer.

In this way, the electronic device can display an entire process of rotating, translating, and zooming out the fourth rotational image layer. This provides the user with a visual feeling that the landscape-mode video play window on the landscape-mode page changes to the portrait-mode video play window on the portrait-mode page, and makes a switching process smoother. Optionally, when the fourth rotational image layer is displayed in the fourth region or the fifth region, the fourth blocking image layer is fully blocked by the fourth rotational image layer. During the switching the fourth rotational image layer to the fifth region for display, the fourth blocking image layer is partially blocked by the fourth rotational image layer within some time, and is fully blocked by the fourth rotational image layer within some other time.

It can be understood that the electronic device may cancel displaying the fourth rotational image layer after switching the fourth rotational image layer to the fifth region for display, so that the fourth background image layer is displayed on a display. If the fourth blocking image layer exists on the electronic device, the electronic device may cancel displaying the fourth blocking image layer after switching the fourth rotational image layer to the fifth region for display, so that the picture of the first video at the fourth background image layer is displayed on the display. When the electronic device cancels displaying the fourth rotational image layer, the fourth page displayed on the electronic device in this case is the fourth background image layer.

In a possible implementation, after the electronic device displays the fifth page, the method further includes:

The electronic device receives fifth input of the user for switching the electronic device from the portrait-mode display state to the landscape-mode display state;
the electronic device displays a fifth background image layer after receiving the fifth input, and displays a fifth rotational image layer above the fifth background image layer in a floating manner, where the fifth background image layer includes a screenshot of the fifth page;
the electronic device switches the fifth rotational image layer from the fifth region to a sixth region of a sixth page for display, where the sixth region of the sixth page is used to display the first window, the sixth region is the same as the fourth region, the fifth rotational image layer includes the picture of the first video, and a direction of the picture of the first video in a case in which the fifth rotational image layer is displayed in the sixth region is different from a direction of the picture of the first video in a case in which the fifth rotational image layer is displayed in the fifth region; and
the electronic device displays the sixth page after the fifth rotational image layer is switched to the sixth region for display.

It can be understood that, that the sixth region is the same as the fourth region means that the sixth region and the fourth region have a same size and location.

In this way, after performing an operation of switching from the landscape-mode display state to the portrait-mode display state, the electronic device may receive landscape/portrait mode switching input from the user, and perform an operation of switching from the portrait-mode display state to the landscape-mode display state. Regardless of whether the electronic device switches from a landscape mode to a portrait mode or switches from the portrait mode to the landscape mode, styles of displayed switching animations are similar: Content of the portrait-mode page is used as a background, and the picture of the first video is a rotational image layer. This is uniform and aesthetic.

In a possible implementation, the switching the fifth rotational image layer from the fifth region to a sixth region of a sixth page for display specifically includes:
performing rotation, translation, and zoom-in operations on the fifth rotational image layer to switch the fifth rotational image layer from the fifth region to the sixth region for display.

In a possible implementation, during the displaying, by the electronic device, the fifth background image layer, the method further includes:
displaying a fifth blocking image layer in a floating manner at a display location of the first window at the fifth background image layer, where the fifth blocking image layer and the first window have a same size, the fifth blocking image layer is a preset image, and the fifth blocking image layer is blocked by the fifth rotational image layer.

In a possible implementation, during the displaying, by the electronic device, the fifth background image layer, the method further includes:

The electronic device draws the sixth page; the electronic device obtains a size and a location of the first window on the fifth page based on image layer information of the fifth page and image layer information of the sixth page, where the size of the first window on the fifth page is the same as a size of the fifth region, and the location of the first window on the fifth page is the same as a location of the fifth region; and
the electronic device performs rotation, translation, and zoom-out transformation on the sixth page to obtain a transformed sixth page whose size and location are the same as the size and the location of the fifth region and in which a direction of the picture of the first video is the same as a direction of the picture of the first video in the first window on the fifth page, where the fifth rotational image layer is the transformed sixth page; or
the electronic device obtains an image of the first window on the fifth page based on the size and the location of the first window on the fifth page, where the fifth rotational image layer is the image of the first window on the fifth page.

In a possible implementation, after receiving landscape/portrait mode switching input, the electronic device may indicate a landscape/portrait mode switching unit of the electronic device to perform a landscape/portrait mode switching operation, where the landscape/portrait mode switching operation includes a step performed by the electronic device in any one of the foregoing possible implementations. The landscape/portrait mode switching unit belongs to an application framework layer of the electronic device. The landscape/portrait mode switching unit and a first application are different modules of the electronic device. The landscape/portrait mode switching unit does not belong to the first application, and the first application does not belong to the landscape/portrait mode switching unit either. The first application is an application that provides display content of the fourth page, the fifth page, and the sixth page.

In this way, all applications that are installed on the electronic device and that support a video play function may obtain, by using the landscape/portrait mode switching unit, a landscape/portrait mode switching animation composed by the landscape/portrait mode switching unit. To be specific, even if no landscape/portrait mode switching animation is set for an application, when receiving a landscape/portrait mode switching operation for the application for which no landscape/portrait mode switching animation is set, the electronic device may directly obtain a smooth and aesthetic switching animation by using the landscape/portrait mode switching unit, and the electronic device may play the switching animation, without overlapping between a landscape-mode page and a portrait-mode page. In addition, the landscape/portrait mode switching unit of the electronic device may provide a switching animation with a same switching style for all applications. This avoids a case in which different switching animations are provided for different applications and experience is poor.

In some embodiments, the landscape/portrait mode switching unit of the electronic device is divided into a window management module, a page composition module, a screen rotation module, and an animation module. The window management module is configured to obtain a screenshot. The page composition module is configured to compose the fifth page and the sixth page. The animation module is configured to compose a switching animation. The screen rotation module is configured to schedule the page composition module and the animation module, and is further configured to transmit data between the window management module, the animation module, and the page composition module. In this way, different modules cooperate with each other to compose a landscape/portrait mode switching animation, and the electronic device may hand over some operations of composing the landscape/portrait mode switching animation to an original module of the electronic device for execution, to properly utilize resources provided by the electronic device. This avoids deploying a plurality of modules with a same function on the electronic device.

According to a third aspect, this application provides another display method, including: An electronic device displays a fourth page, where a first window is displayed in a fourth region of the fourth page, and a picture of a first video is displayed in the first window;
the electronic device receives fourth input for switching the electronic device from a landscape-mode display state to a portrait-mode display state;
in response to the fourth input, the electronic device displays a fourth background image layer, and displays a fourth rotational image layer in a floating manner at a display location of the fourth background image layer, where the fourth background image layer includes a screenshot of a fifth page, the first window is displayed in a fifth region of the fifth page, and a direction of the picture of the first video on the fifth page is different from a direction of the picture of the first video on the fourth page;
the electronic device switches the fourth rotational image layer from the fourth region to the fifth region for display, where the fourth rotational image layer includes the picture of the first video, and a direction of the picture of the first video in a case in which the fourth rotational image layer is displayed in the fifth region is different from a direction of the picture of the first video in a case in which the fourth rotational image layer is displayed in the fourth region; and
the electronic device displays the fifth page after the fourth rotational image layer is switched to the fifth region for display.

In this way, the electronic device can smoothly switch from the landscape-mode display state to the portrait-mode display state.

In a possible implementation, before the electronic device displays the fourth background image layer, the method further includes: The electronic device captures and displays an image of the fourth page;
the electronic device draws the fifth page;
the electronic device captures an image of the fifth page to obtain the fourth background image layer, and
obtains a size and a location of the first window on the fifth page based on image layer information of the fifth page and image layer information of the fourth page, where the size and the location of the first window on the fifth page are the same as a size and a location of the fifth region;
the electronic device performs rotation, translation, and zoom-in on the fifth page to obtain the fourth rotational image layer, where the first window at the fourth rotational image layer and the first window on the fourth page have a same size, a direction of the picture of the first video at the fourth rotational image layer is the same as the direction of the picture of the first video on the fourth page, and a location of the first window at the fourth rotational image layer is the same as a location of the first window on the fourth page; and
the electronic device cancels displaying the image of the fourth page.

In this way, the electronic device can display the image of the fourth page in a process of drawing the fifth page, to avoid switching from the fourth page to the fifth page.

In a possible implementation, that the electronic device switches the fourth rotational image layer from the fourth region to the fifth region for display specifically includes: The electronic device skips displaying a part of the fourth rotational image layer other than the first window;
the electronic device performs rotation, translation, and zoom-out operations on the first window at the fourth rotational image layer to switch the first window at the fourth rotational image layer from the fourth region to the fifth region for display; and
when the electronic device switches the first window at the fourth rotational image layer from the fourth region to the fifth region for display, the electronic device displays the part of the fourth rotational image layer other than the first window.

In a possible implementation, during the displaying, by the electronic device, a fourth background image layer, and displaying a fourth rotational image layer in a floating manner at a display location of the fourth background image layer, the method further includes:
displaying a fourth blocking image layer in a floating manner at a display location of the first window at the background image layer, where the fourth blocking image layer and the first window have a same size, the fourth blocking image layer is a preset image, and the fourth blocking image layer is blocked by a fifth rotational image layer.

In a possible implementation, during the displaying a fourth background image layer, and displaying a fourth rotational image layer in a floating manner at a display location of the fourth background image layer, the method further includes: displaying a fourth blocking image layer in a floating manner at a display location of the first window at the fourth background image layer, where the fourth blocking image layer and the first window have a same size, the fourth blocking image layer is a preset image, and the fourth blocking image layer is blocked by the fourth rotational image layer.

In a possible implementation, after the electronic device displays the fifth page, the method further includes: The electronic device receives fifth input of a user for switching the electronic device from the portrait-mode display state to the landscape-mode display state;
the electronic device displays a fifth background image layer after receiving the fifth input, and displays the fifth rotational image layer above the fifth background image layer in a floating manner, where the fifth background image layer includes a screenshot of the fifth page;
the electronic device switches the fifth rotational image layer from the fifth region to a sixth region of a sixth page for display, where the sixth region of the sixth page is used to display the first window, the sixth region is the same as the fourth region, the fifth rotational image layer includes the picture of the first video, and a direction of the picture of the first video in a case in which the fifth rotational image layer is displayed in the sixth region is different from a direction of the picture of the first video in a case in which the fifth rotational image layer is displayed in the fifth region; and
the electronic device displays the sixth page after the fifth rotational image layer is switched to the sixth region for display.

It can be understood that, that the sixth region is the same as the fourth region means that the sixth region and the fourth region have a same size and location.

In this way, after performing an operation of switching from the landscape-mode display state to the portrait-mode display state, the electronic device may receive landscape/portrait mode switching input from the user, and perform an operation of switching from the portrait-mode display state to the landscape-mode display state. Regardless of whether the electronic device switches from a landscape mode to a portrait mode or switches from the portrait mode to the landscape mode, styles of displayed switching animations are similar: Content of a portrait-mode page is used as a background, and the picture of the first video is a rotational image layer. This is uniform and aesthetic.

In a possible implementation, the switching the fifth rotational image layer from the fifth region to a sixth region of a sixth page for display specifically includes: performing rotation, translation, and zoom-in operations on the fifth rotational image layer to switch the fifth rotational image layer from the fifth region to the sixth region for display.

In a possible implementation, during the displaying, by the electronic device, the fifth background image layer, the method further includes:
displaying a fifth blocking image layer in a floating manner at a display location of the first window at the fifth background image layer, where the fifth blocking image layer and the first window have a same size, the fifth blocking image layer is a preset image, and the fifth blocking image layer is blocked by the fifth rotational image layer.

In a possible implementation, during the displaying, by the electronic device, the fifth background image layer, the method further includes: The electronic device draws the sixth page;
the electronic device obtains a size and a location of the first window on the fifth page based on image layer information of the fifth page and image layer information of the sixth page, where the size of the first window on the fifth page is the same as a size of the fifth region, and the location of the first window on the fifth page is the same as a location of the fifth region; and
the electronic device performs rotation, translation, and zoom-out transformation on the sixth page to obtain a transformed sixth page whose size and location are the same as the size and the location of the fifth region and in which a direction of the picture of the first video is the same as a direction of the picture of the first video in the first window on the fifth page, where the fifth rotational image layer is the transformed sixth page; or
the electronic device obtains an image of the first window on the fifth page based on the size and the location of the first window on the fifth page, where the fifth rotational image layer is the image of the first window on the fifth page.

In a possible implementation, after receiving landscape/portrait mode switching input, the electronic device may indicate a landscape/portrait mode switching unit of the electronic device to perform a landscape/portrait mode switching operation, where the landscape/portrait mode switching operation includes a step performed by the electronic device in any one of the foregoing possible implementations. The landscape/portrait mode switching unit belongs to an application framework layer of the electronic device. The landscape/portrait mode switching unit and a first application are different modules of the electronic device. The landscape/portrait mode switching unit does not belong to the first application, and the first application does not belong to the landscape/portrait mode switching unit either. The first application is an application that provides display content of the fourth page, the fifth page, and the sixth page.

In this way, all applications that are installed on the electronic device and that support a video play function may obtain, by using the landscape/portrait mode switching unit, a landscape/portrait mode switching animation composed by the landscape/portrait mode switching unit. To be specific, even if no landscape/portrait mode switching animation is set for an application, when receiving a landscape/portrait mode switching operation for the application for which no landscape/portrait mode switching animation is set, the electronic device may directly obtain a smooth and aesthetic switching animation by using the landscape/portrait mode switching unit, and the electronic device may play the switching animation, without overlapping between a landscape-mode page and a portrait-mode page. In addition, the landscape/portrait mode switching unit of the electronic device may provide a switching animation with a same switching style for all applications. This avoids a case in which different switching animations are provided for different applications and experience is poor.

In some embodiments, the landscape/portrait mode switching unit of the electronic device is divided into a window management module, a page composition module, a screen rotation module, and an animation module. The window management module is configured to obtain a screenshot. The page composition module is configured to compose the fifth page and the sixth page. The animation module is configured to compose a switching animation. The screen rotation module is configured to schedule the page composition module and the animation module, and is further configured to transmit data between the window management module, the animation module, and the page composition module. In this way, different modules cooperate with each other to compose a landscape/portrait mode switching animation, and the electronic device may hand over some operations of composing the landscape/portrait mode switching animation to an original module of the electronic device for execution, to properly utilize resources provided by the electronic device. This avoids deploying a plurality of modules with a same function on the electronic device.

According to a fourth aspect, this application provides an electronic device, including a display, one or more processors, and one or more memories. The display and the one or more memories are coupled to the one or more processors. The one or more memories are configured to store computer program code, and the computer program code includes computer instructions. When the one or more processors execute the computer instructions, the electronic device is enabled to perform the display method in any one of the possible implementations of any one of the foregoing aspects.

According to a fifth aspect, this application provides a computer-readable storage medium, including instructions. When the instructions are run on an electronic device, the electronic device is enabled to perform the display method in any one of the possible implementations of any one of the foregoing aspects.

According to a sixth aspect, this application provides a chip system. The chip system is used in an electronic device. The chip system includes one or more processors. The processor is configured to invoke computer instructions, so that the electronic device performs the display method in any one of the possible implementations of any one of the foregoing aspects.

According to a seventh aspect, this application provides a computer program product including instructions. When the computer program is run on an electronic device, the electronic device is enabled to perform the display method in any one of the possible implementations of any one of the foregoing aspects.

### BRIEF DESCRIPTION OF DRAWINGS

FIG. 1 is a diagram of overlapping between a landscape-mode page and a portrait-mode page according to an embodiment of this application;
FIG. 2A to FIG. 2G are diagrams of a group of interfaces according to an embodiment of this application;
FIG. 3 is a diagram of a display status according to an embodiment of this application;
FIG. 4 is a schematic flowchart of a display method according to an embodiment of this application;
FIG. 5 is a diagram of a hierarchical relationship according to an embodiment of this application;
FIG. 6A to FIG. 6F are diagrams of a group of image layer changes according to an embodiment of this application;
FIG. 7A and FIG. 7B are a schematic flowchart of obtaining a view region of a shared element by an electronic device 100 according to an embodiment of this application;
FIG. 8 is a diagram of switching a rotational image layer according to an embodiment of this application;
FIG. 9 is a schematic flowchart of a display method according to an embodiment of this application;
FIG. 10A to FIG. 10F are diagrams of another group of image layer changes according to an embodiment of this application;
FIG. 11 is a diagram of switching a rotational image layer according to an embodiment of this application;
FIG. 12A and FIG. 12B are diagrams of another group of image layer changes according to an embodiment of this application;
FIG. 13A and FIG. 13B are diagrams of another group of interfaces according to an embodiment of this application;
FIG. 14A to FIG. 14D are diagrams of another group of image layer changes according to an embodiment of this application;
FIG. 15A and FIG. 15B are diagrams of another group of image layer changes according to an embodiment of this application;
FIG. 16 is a diagram of a structure of an electronic device 100 according to an embodiment of this application;
FIG. 17 is a block diagram of a software structure of an electronic device 100 according to an embodiment of this application; and
FIG. 18 is a diagram of modules of an electronic device 100 according to an embodiment of this application.

### DESCRIPTION OF EMBODIMENTS

The following clearly describes technical solutions in embodiments of this application in detail with reference to accompanying drawings. In descriptions of embodiments of this application, "/" indicates "or", unless otherwise specified. For example, A/B may indicate A or B. The term "and/or" in this specification describes only an association relationship between associated objects, and indicates that three relationships may exist. For example, A and/or B may indicate the following three cases: Only A exists, both A and B exist, and only B exists.

The terms "first" and "second" used below are merely intended for a purpose of description, and shall not be construed as an indication or an implication of relative importance or an implicit indication of a quantity of indicated technical features. Therefore, a feature limited by "first" or "second" may explicitly or implicitly include one or more features. In descriptions of embodiments of this application, "a plurality of" means two or more than two, unless otherwise specified.

Embodiments of this application provide a display method. An electronic device 100 displays a portrait-mode page including a portrait-mode video play window, where a picture of a first video is displayed in the portrait-mode video play window. The electronic device 100 may receive landscape/portrait mode switching input, and capture an image of the portrait-mode page in response to the input, to obtain a first background image layer. The electronic device 100 may display the first background image layer, and display, at the first background image layer, a switching animation of switching a first rotational image layer including the picture of the first video from the portrait-mode video play window to a landscape-mode video play window. When playing of the switching animation ends, the electronic device 100 may display a landscape-mode page including the landscape-mode video play window, where the picture of the first video is displayed in the portrait-mode video play window, and the first rotational image layer is a transformed landscape-mode page or a screenshot of the portrait-mode video play window.

When the electronic device 100 displays the landscape-mode page including the landscape-mode video play window, the electronic device 100 may receive landscape/portrait mode switching input, display a second background image layer in response to the input, and display, at the second background image layer, a switching animation of switching a second rotational image layer including the picture of the first video from the landscape-mode video play window to a portrait-mode video play window. When playing of the switching animation ends, the electronic device 100 may display a portrait-mode page including the portrait-mode video play window. The second background image layer may be the portrait-mode page, and the second rotational image layer is a screenshot of the landscape-mode page; or the second background image layer may be an image of the portrait-mode page, and the second rotational image layer is a transformed portrait-mode page.

In this way, during landscape/portrait mode switching, the electronic device 100 may perform rotation, zooming, and translation operations only on the picture of the first video by using the portrait-mode page or a screenshot of the portrait-mode page as a background. During entire switching, direct switching between the landscape-mode page and the portrait-mode page without a transition is avoided, and the landscape-mode page and the portrait-mode page do not overlap either. This makes landscape/portrait mode switching effect smoother and improves user experience. In addition, because the electronic device 100 rotates, zooms in/out, and translates only a video picture, if a status bar is displayed at the top of a page displayed on the electronic device 100, the status bar does not rotate along with the video picture, so that a landscape/portrait mode switching animation is more aesthetic.

The following describes some application scenarios provided in embodiments of this application.

In some application scenarios, the electronic device 100 displays a portrait-mode page, and the portrait-mode page includes a portrait-mode video play window. When receiving input for switching to landscape-mode display, the electronic device 100 may display a screenshot of the portrait-mode page in response to the input, and play a first switching animation on the screenshot of the portrait-mode page. The first switching animation includes a process of performing rotation, translation, zoom-in, and other operations on a screenshot of a video picture to switch the screenshot of the video picture from a location of the portrait-mode video play window to a location of a landscape-mode video play window. When playing of the animation ends, the electronic device 100 may display a landscape-mode page including the landscape-mode video play window. In this way, in a process of switching from a portrait play mode to a landscape play mode, the electronic device 100 may keep page content on the portrait-mode page other than a video window unchanged, and perform the rotation, zoom-in, and translation operations only on the video picture, to smoothly switch from the portrait-mode page to the landscape-mode page. During entire switching, direct switching between the landscape-mode page and the portrait-mode page without a transition is avoided, and the landscape-mode page and the portrait-mode page do not overlap either. This makes landscape/portrait mode switching effect smoother and improves user experience.

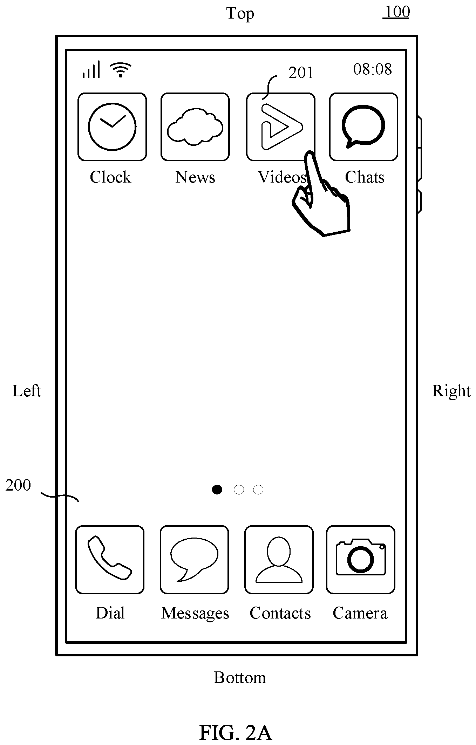

As shown in FIG. 2A, the electronic device 100 may display a desktop 200. The desktop 200 may include a plurality of application icons (for example, a Chat application icon, a News application icon, and a Video application icon 201). Optionally, a status bar is further displayed at the top of the desktop 200, and the status bar may include a communication signal strength indicator, a battery level value, time, and other information. Optionally, there may be a dock (dock) region at the bottom of the desktop 200, and the dock region may include one or more dock icons (for example, a Dial application icon, a Messages application icon, a Contacts application icon, and a Camera application icon). The Video application icon 201 may be used to trigger the electronic device 100 to display a page of a video application.

It should be noted that relative locations of the top, the bottom, the left, and the right of the electronic device 100 in a case in which the electronic device 100 is placed in a manner shown in FIG. 2A are identified in FIG. 2A. These locations are used to describe locations on a touchscreen of the electronic device 100. In addition, "upward" is a direction from the bottom to the top, "downward" is a direction from the top to the bottom, "rightward" is a direction from the left to the right, and "leftward" is a direction from the right to the left. The descriptions of the locations are also applicable to descriptions of subsequent accompanying drawings.

It should be further noted that, when the electronic device 100 is in a portrait-mode display state (also referred to as a portrait play mode), the top of a page displayed on the electronic device 100 is at the top or the bottom of the touchscreen shown in FIG. 2A. When the electronic device 100 is in a landscape-mode display state (also referred to as a landscape play mode), the top of a page displayed on the electronic device 100 is on the left or the right of the touchscreen shown in FIG. 2A.

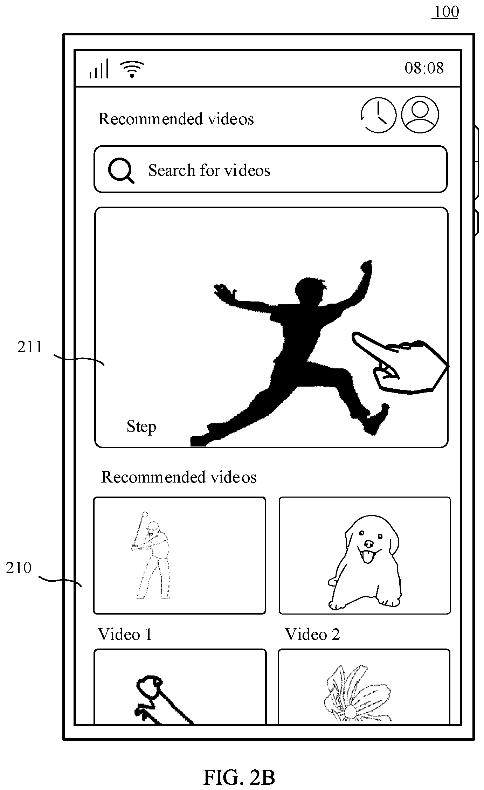

The electronic device 100 may receive input of a user on the Video application icon 201 shown in FIG. 2A, and display, in response to the input, a video recommendation interface 210 shown in FIG. 2B. As shown in FIG. 2B, the video recommendation interface 210 is a page of the video application. The video recommendation interface 210 may include one or more video options. The video option may be used to trigger the electronic device 100 to display a corresponding video play page. The one or more video options may include a video option 211.

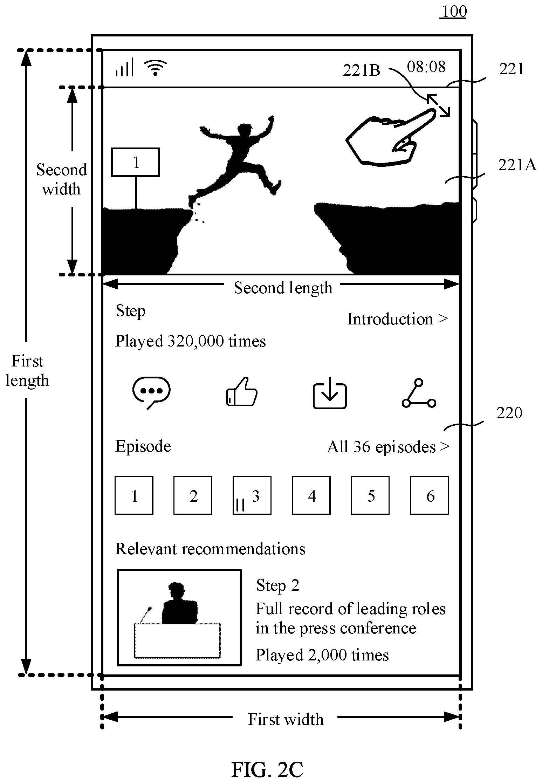

The electronic device 100 may receive input of the user on the video option 211 shown in FIG. 2B, and display, in response to the input, a video play interface 220 shown in FIG. 2C.

As shown in FIG. 2C, the video play interface 220 may be used to play a video in a portrait mode. A length and a width of the video play interface 220 are a first length and a first width respectively. It can be understood that a size of the video play interface 220 is the same as a size of a display. The video play interface 220 may include a video play window 221. Optionally, the video play interface 220 may further include but is not limited to video introduction information, a video episode option, a video recommendation option, a comment control, a share control, and the like. Optionally, the video play interface 220 may further include a status bar, and the status bar is displayed at the top of the video play interface 220.

The video play window 221 is located at the top of the video play interface 220, and the video play window 221 may be used to play a video picture. Herein, a length and a width of the video play window 221 is a second length and a second width respectively. A value of the second length is the same as a value of the first width. A value of the second width is less than a value of the first length. The video play window 221 may include but is not limited to a video image 221A and a switching icon 221B. The video image 221A is a video frame of a video resource played in the video play window 221. The switching icon 221B may be used to trigger the electronic device 100 to switch from portrait-mode display to landscape-mode display.

The electronic device 100 may receive input of the user on the switching icon 221B shown in FIG. 2C, and perform, in response to the input, an operation of switching the electronic device 100 from the portrait-mode display state to the landscape-mode display state.

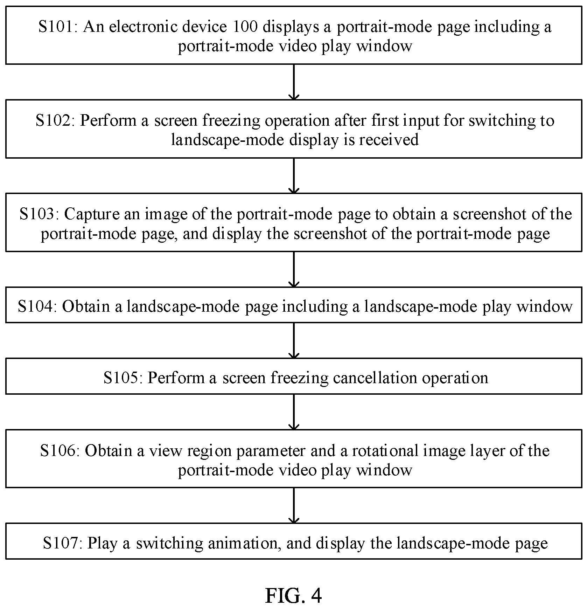

When receiving input (for example, tap input) performed by the user on the switching icon 221B shown in FIG. 2C, the electronic device 100 may capture an image displayed on the display to obtain a screenshot image 231. The screenshot image 231 includes all page content of the video play interface 220. The electronic device 100 may display the screenshot image 231. The electronic device 100 may further capture the video image 221A played in the video play window 221 to obtain a screenshot image 232. A length and a width of the screenshot image 232 are the second length and the second width respectively. The electronic device 100 may display the screenshot image 232 at a location, on the display, for placing the video play window 221. The screenshot image 232 is displayed above the screenshot image 231, and the screenshot image 232 may block some display content of the screenshot image 231. The electronic device 100 may rotate the screenshot image 232 clockwise or counterclockwise by 90°, and zoom in and translate, downward, the screenshot image 232 during rotation. When the screenshot image 232 is rotated clockwise or counterclockwise by 90°, the length of the screenshot image 232 is increased to the first length, and the width of the screenshot image 232 is increased to the first width. Specifically, a specific process of switching, by the electronic device 100, from the portrait-mode display state to the landscape-mode display state is shown in FIG. 4. Details are not described herein.

Further, to avoid a scenario in which the electronic device 100 displays two video images during landscape/portrait mode switching, the electronic device 100 may display a blocking image layer above a video image of the screenshot image 231. It can be understood that the blocking image layer is located below the screenshot image 232, and blocks only the video image of the screenshot image 231, but does not block the screenshot image 232, and may be blocked by the screenshot image 232.

Specifically, a size of the blocking image layer is the same as a size of the video image. The blocking image layer is a preset image. The preset image may be an image of any color (for example, black or white), or the preset image may be an image including a specified pattern. In this way, the electronic device 100 may display only one video image in a process of switching from the portrait-mode display to the landscape-mode display.

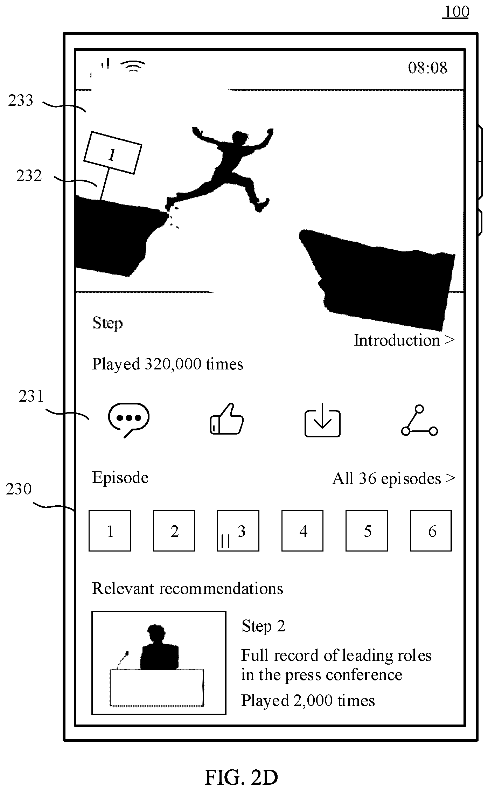

For example, after receiving input of the user on the switching icon 221B shown in FIG. 2C, the electronic device 100 may display a landscape/portrait mode switching interface 230 shown in FIG. 2D.

As shown in FIG. 2D, the landscape/portrait mode switching interface 230 includes the screenshot image 231, and a blocking image layer 233 is displayed at an upper layer of the screenshot image 231. The screenshot image 232 is displayed at an upper layer of the blocking image layer 233. A size of the screenshot image 232 shown in FIG. 2D is greater than a size of the blocking image layer 233. A location of the screenshot image 232 is different from a location of the blocking image layer 233. Herein, a color of the blocking image layer 233 is white.

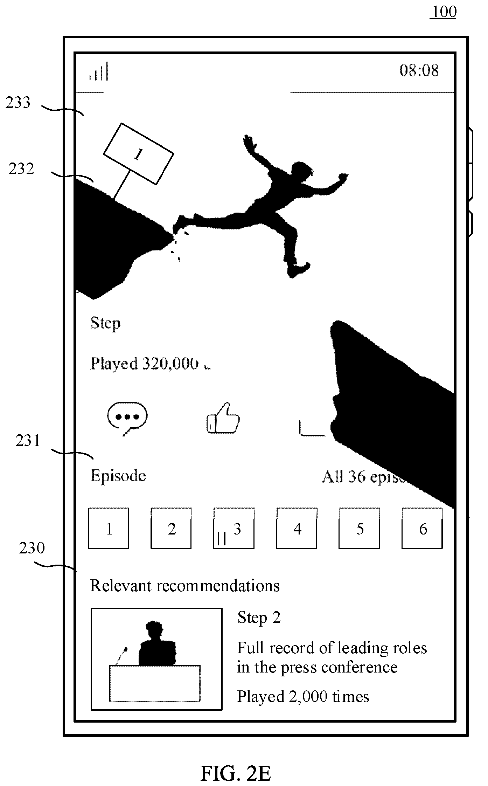

Then the electronic device 100 may control the screenshot image 232 to continue to rotate along a clockwise direction, and the electronic device 100 may display a landscape/portrait mode switching interface 230 shown in FIG. 2E. A size of the screenshot image 232 shown in FIG. 2E is greater than a size of the screenshot image 232 shown in FIG. 2D.

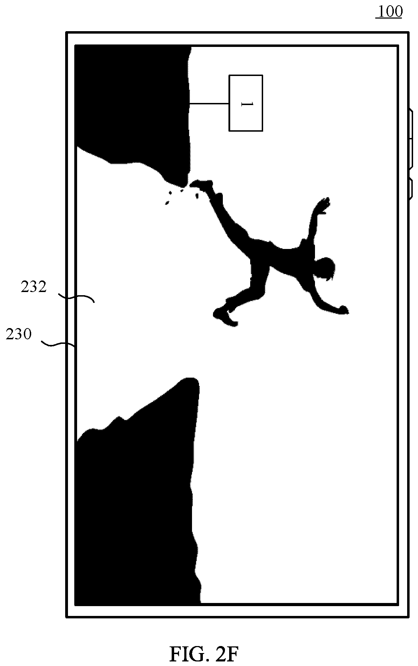

The electronic device 100 may control the screenshot image 232 to continue to rotate along the clockwise direction until a rotational angle of the screenshot image 232 is equal to 90°, and then the electronic device 100 may display a landscape/portrait mode switching interface 230 shown in FIG. 2F.

As shown in FIG. 2F, a size of the screenshot image 232 is the same as a size of the touchscreen of the electronic device 100. Both the screenshot image 231 and the blocking image layer 233 are blocked by the screenshot image 232.

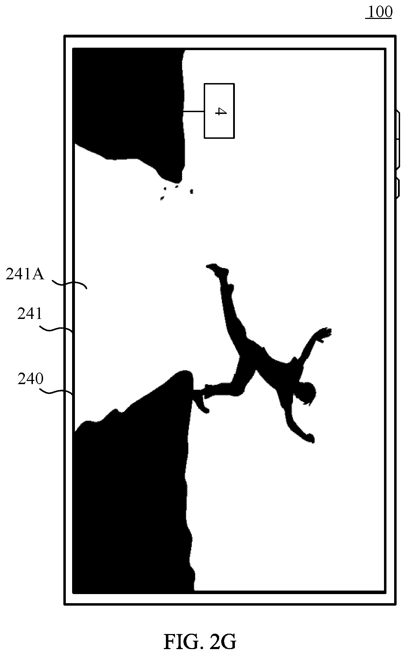

Then the electronic device 100 may display a video play interface 240 shown in FIG. 2G. As shown in FIG. 2G, the video play interface 240 may be used to play a video in a landscape mode. The video play interface 240 may include a video play window 241. The video play window 241 may be used to play a video picture. Herein, a length and a width of the video play window 241 are the first length and the first width respectively. The video play window 241 may include but is not limited to a video image 241A. The video image 241A is a video frame of a video resource played in the video play window 241. Optionally, the video play window 241 may further include a switching icon, and the switching icon may be used to trigger the electronic device 100 to switch from the landscape-mode display to the portrait-mode display. Optionally, the video play interface 240 may further include a status bar. The status bar is displayed at the top of the video play window 241. To be specific, this may be understood as that the status bar is displayed near a right-side bezel of the touchscreen.

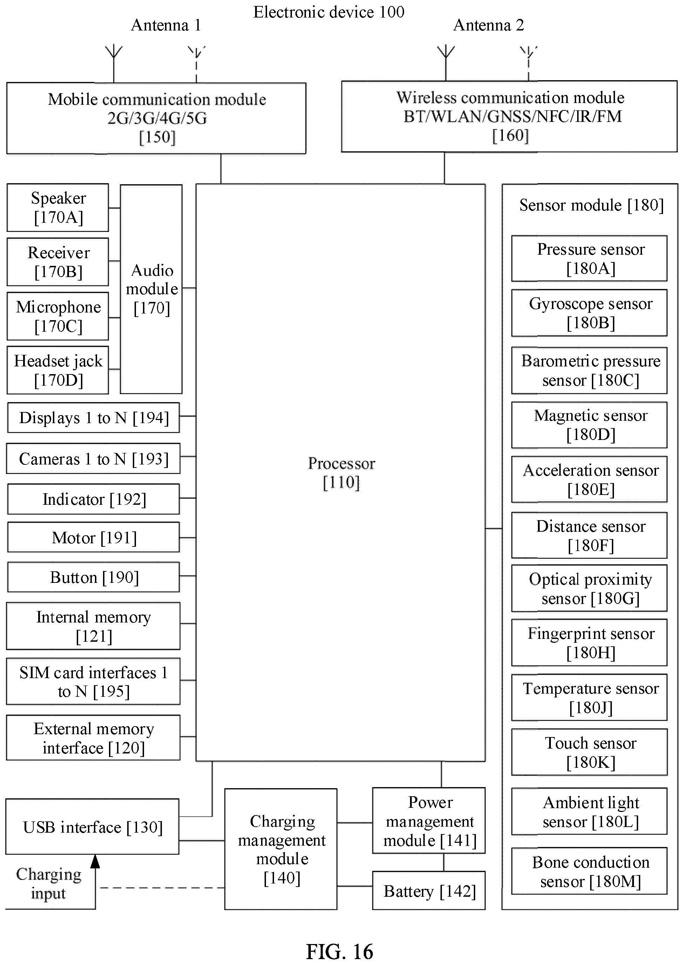

It should be further noted that, in addition to the input for the switching icon 221B shown in FIG. 2C, the electronic device 100 may alternatively receive other input to perform a landscape/portrait mode switching operation. For example, the electronic device 100 may receive input of rotating the electronic device 100 by the user to perform a landscape/portrait mode switching operation. The electronic device 100 may detect, by using an acceleration sensor (for example, an acceleration sensor 180E shown in FIG. 16) and/or a gyroscope, the input of rotating the electronic device 100 by the user. For example, when the electronic device 100 is placed in the manner shown in FIG. 2A, the electronic device 100 may switch from the portrait-mode display state to the landscape-mode display state when detecting that an angle by which the electronic device 100 is rotated to the left or the right reaches a first angle (for example, 80 degrees or 90 degrees).

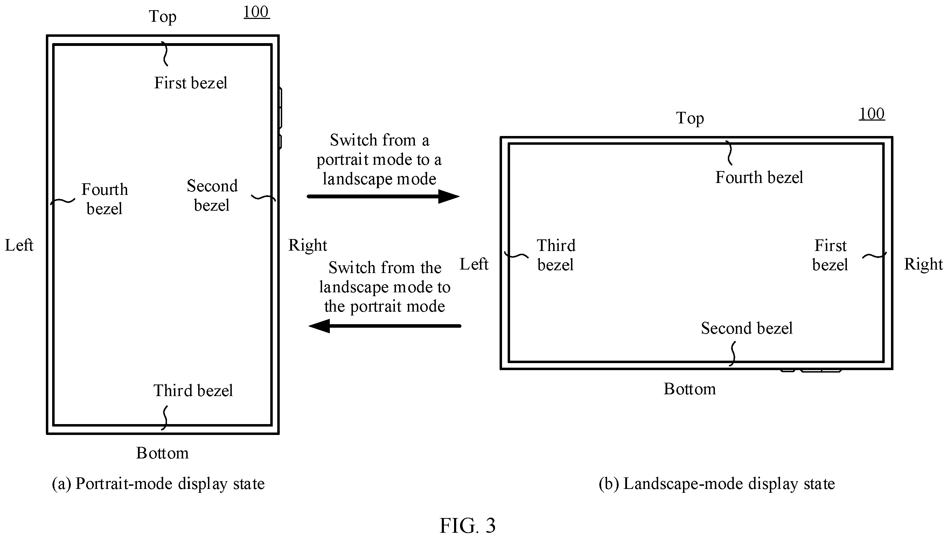

Specifically, as shown in FIG. 3, the electronic device 100 may determine a display status of the electronic device 100 based on the acceleration sensor. When the electronic device 100 is placed in the manner shown in FIG. 2A, the electronic device 100 may determine, based on the acceleration sensor, that the electronic device 100 is in the portrait-mode display state. For a correspondence between each bezel and an orientation of the electronic device 100, refer to (a) in FIG. 3. A first bezel and a third bezel of the electronic device 100 have a same length, the first bezel is located at the top, and the third bezel is located at the bottom. A second bezel and a fourth bezel have a same length, the second bezel is located on the right, and the fourth bezel is located on the left. The length of the first bezel or the third bezel is less than the length of the second bezel or the fourth bezel. In other words, this may be understood as that the electronic device 100 is in the portrait-mode display state when a shorter bezel is located at the top or the bottom. When the electronic device 100 is placed in a manner shown in (b) in FIG. 3, the electronic device 100 may determine, based on the acceleration sensor, that the electronic device 100 is in the landscape-mode display state. The fourth bezel is located at the top, the second bezel is located at the bottom, the third bezel is located on the left, and the first bezel is located on the right. In addition to the placement manner shown in (b) in FIG. 3, when the second bezel is located at the top, the electronic device 100 may alternatively determine, based on the acceleration sensor, that the electronic device 100 is in the landscape-mode display state. In other words, this may be understood as that the electronic device 100 is in the landscape-mode display state when a longer bezel is located at the top or the bottom.

In some embodiments, when the electronic device 100 is in the portrait-mode display state, an angle of the electronic device 100 that is obtained by the electronic device 100 by using the acceleration sensor is 0 degrees or 180 degrees. When the electronic device 100 is in the landscape-mode display state, an angle of the electronic device 100 that is obtained by the electronic device 100 by using the acceleration sensor is 90 degrees or -90 degrees (or 270 degrees). It should be noted that the angle obtained by the electronic device 100 may have a deviation due to a holding gesture of the user. When a difference between the obtained angle and 0 degrees or 180 degrees is less than an angle difference (for example, 5 degrees), the electronic device 100 may determine that the angle of the electronic device 100 is 0 degrees or 180 degrees, in other words, determine that the electronic device 100 is in the portrait-mode display state. When a difference between the obtained angle and 90 degrees or -90 degrees is less than an angle difference (for example, 5 degrees), the electronic device 100 may determine that the angle of the electronic device 100 is 90 degrees or -90 degrees, in other words, determine that the electronic device 100 is in the landscape-mode display state.

In some embodiments, in a process in which the electronic device 100 switches from the portrait-mode display state to the landscape-mode display state, if the electronic device 100 is playing a video file, because the switching operation lasts for specific duration (for example, 1s), a video picture displayed by the electronic device 100 in the landscape-mode state is different from a video picture displayed in the portrait-mode state. Herein, the video picture 241A shown in FIG. 2G is different from the video picture 221A shown in FIG. 2C. The video picture 241A is a video frame located after the video picture 221A in the video file.

The following describes a schematic flowchart of a display method according to an embodiment of this application.

As shown in FIG. 4, the display method includes the following steps.

S101: The electronic device 100 displays a portrait-mode page including a portrait-mode video play window.

The electronic device 100 is in a portrait-mode display state, and displays the portrait-mode page including the portrait-mode video play window. The portrait-mode video play window may be used to play a video file.

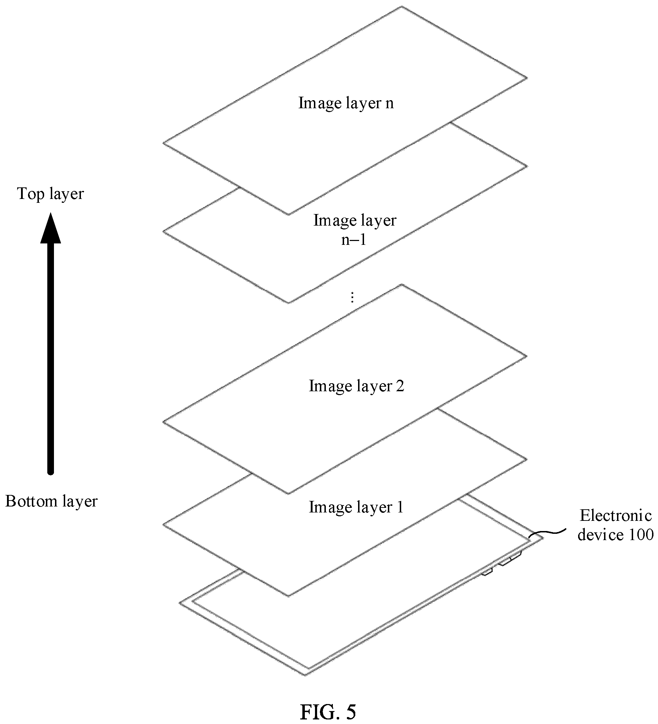

It should be noted that an interface displayed on the electronic device 100 may include one or more image layers, and an image layer at an upper layer may block an image layer at a lower layer. For a hierarchical relationship between image layers, refer to FIG. 5. As shown in FIG. 5, an image layer 1 is an image layer at a bottom layer, an image layer 2 is an image layer above the image layer 1, the image layer 2 may block the image layer 1, an image layer n-1 is an image layer above the image layer 2, the image layer n-1 may block the image layer 2 and the image layer 1, an image layer n is an image layer above the image layer n-1, and the image layer n may block the image layer n-1, the image layer 2, and the image layer 1. In this way, some or all of display content of an image layer at a lower layer may be blocked by an image layer at an upper layer.

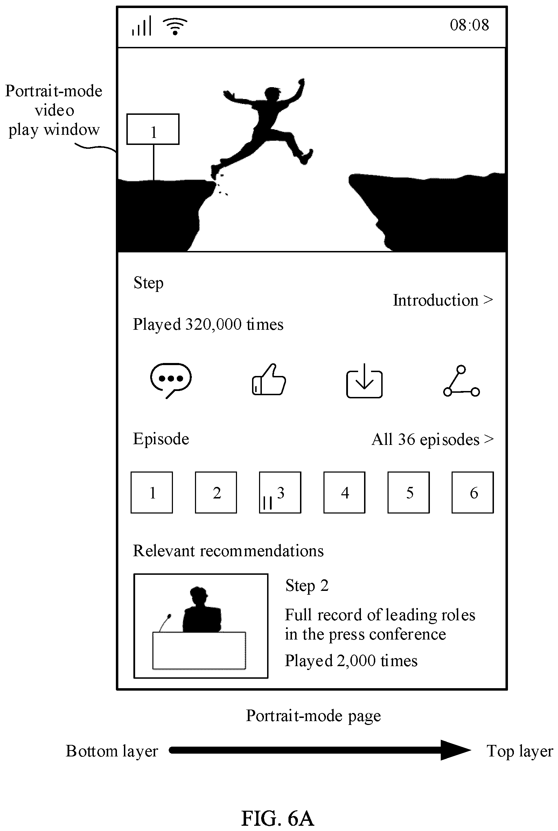

Herein, the portrait-mode page displayed on the electronic device 100 may be considered as an image layer. The following describes steps of the display method by using the video play interface 220 shown in FIG. 2C as an example. When the electronic device 100 displays the video play interface 220 shown in FIG. 2C, an image layer included in the video play interface 220 is a portrait-mode page shown in FIG. 6A.

It should be further noted that one image layer may include one or more views. Herein, the portrait-mode page includes a plurality of views. For a hierarchical relationship between views, refer to the hierarchical relationship between image layers shown in FIG. 5. A view at a highest level among the views on the portrait-mode page is displayed at a top layer, and a view at a lowest level is displayed at a bottom layer. A view at a higher level may block a view at a lower level. For example, the video play window may be the view at the highest level among the plurality of views included in the portrait-mode page.

S102: The electronic device 100 performs a screen freezing operation after receiving first input for switching to landscape-mode display.

The first input may be input for a switching control (for example, the switching icon 221B shown in FIG. 2C) for a video play application.

In some embodiments, the first input may be input of rotating the electronic device 100 clockwise (or counterclockwise) by a first angle, and/or the first input is input of rotating the electronic device 100 clockwise (or counterclockwise) at a first acceleration. The first angle is a preset angle, for example, 45 degrees, 60 degrees, 90 degrees, -45 degrees, -60 degrees, or -90 degrees. The first acceleration is a preset angular acceleration. The electronic device 100 may obtain the angle and/or the acceleration of the electronic device 100 by using a sensor (for example, an acceleration sensor or a gyroscope).

After the electronic device 100 performs the screen freezing operation, a touchscreen of the electronic device 100 stops receiving user input. The electronic device 100 may invoke a screen freezing function (for example, a startFreezingDisplayLocked function) to perform the screen freezing operation.

In some embodiments, the electronic device 100 may further monitor a screen freezing event, or monitor a first input receiving event, to obtain image layer information of the portrait-mode page. The image layer information obtained by the electronic device 100 may include view information of one or more views and damage region information. The view information may include but is not limited to a view name, a view region parameter, a parent-level view name, a view level, and the like. The view name (also referred to as a view identifier) is identification information of a view. The view region parameter includes a location and a size of the view on a display. The parent-level view name is a name of a parent-level view of the view. A view can be displayed only in a region of a parent-level view, and content beyond the region of the parent-level view is invisible to a user. The view level may represent a level of the view among all views of an image layer. A damage region is a region, at the image layer, in which content changes. Generally, the electronic device 100 compares a currently displayed page with a previous frame of page to obtain the damage region.

S103: Capture an image of the portrait-mode page to obtain a screenshot of the portrait-mode page, and display the screenshot of the portrait-mode page.

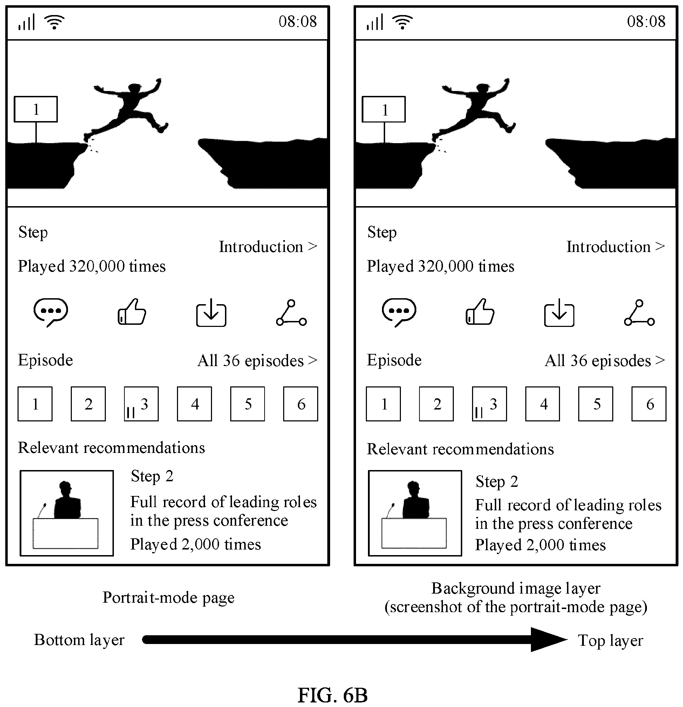

During screen freezing, the electronic device 100 may further capture an image of the portrait-mode page, and display the captured screenshot of the portrait-mode page. Herein, the screenshot of the portrait-mode page may be referred to as a background image layer. As shown in FIG. 6B, the electronic device 100 may capture the video play interface 220 shown in FIG. 2C to obtain a background image layer (the screenshot of the portrait-mode page), and display the background image layer at an upper layer of (or above) the portrait-mode page. The background image layer may block the portrait-mode page. Herein, the screenshot of the portrait-mode page may be used as a background of a switching animation.

Alternatively, when obtaining the screenshot of the portrait-mode page, the electronic device 100 may display only the background image layer (the screenshot of the portrait-mode page).

S104: Obtain a landscape-mode page including a landscape-mode play window.

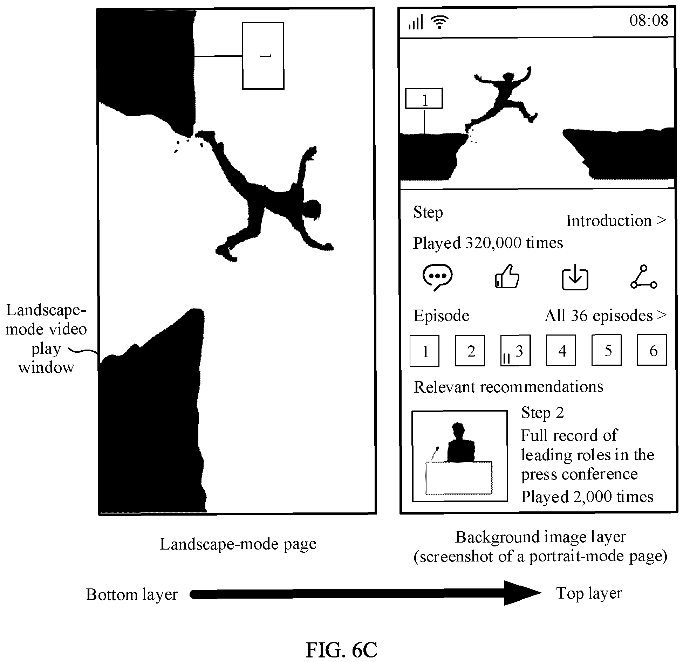

After displaying the screenshot of the portrait-mode page, the electronic device 100 may draw, at a lower layer of the screenshot of the portrait-mode page, the landscape-mode page including the landscape-mode play window. As shown in FIG. 6C, the electronic device 100 continues to display the background image layer (the screenshot of the portrait-mode page), and draws and displays the landscape-mode page at the lower layer of (or below) the screenshot of the portrait-mode page. The landscape-mode page includes a landscape-mode video play window, and a video picture is displayed in the landscape-mode video play window. Optionally, the landscape-mode page may include a status bar.

S105: Perform a screen freezing cancellation operation.

The electronic device 100 may perform a screen freezing cancellation operation after completing drawing the landscape-mode page. After the electronic device 100 performs the screen freezing cancellation operation, the touchscreen of the electronic device 100 may receive user input.

In some embodiments, the electronic device 100 may further monitor a screen freezing cancellation event, or monitor a landscape-mode page obtaining event, to obtain image layer information of the landscape-mode page. Preferably, the electronic device 100 may monitor the screen freezing cancellation event to obtain the image layer information of the landscape-mode page.

Optionally, the electronic device 100 is playing a video file. After the electronic device 100 performs the screen freezing operation, the electronic device 100 may pause playing the video file. After the electronic device 100 performs the screen freezing cancellation operation, the electronic device 100 may continue to play the video file. In this way, in a process in which the electronic device 100 obtains the landscape-mode page, a video frame does not change, and a quantity of video frames played during the switching is reduced.

S106: Obtain a view region parameter and a rotational image layer of the portrait-mode video play window.

For ease of description of step S106, a specific process, provided in embodiments of this application, of identifying a region of a shared element by the electronic device 100 is first described. A shared element may be understood as a view that exists on both an interface displayed before the electronic device 100 performs a landscape/portrait mode switching operation and an interface displayed after the electronic device 100 performs the landscape/portrait mode switching operation. Herein, the shared element may be understood as a video play window. In some embodiments, the shared element may further include a function control provided by a video application displayed in the video play window, for example, a switching control, a pause (start) control, or a progress bar. The region, obtained by the electronic device 100, of the shared element is a display region in which the portrait-mode video play window of the portrait-mode page is located. In some embodiments, the region, obtained by the electronic device 100, of the shared element includes both the display region in which the portrait-mode video play window of the portrait-mode page is located and a display region in which the landscape-mode video play window of the landscape-mode page is located.

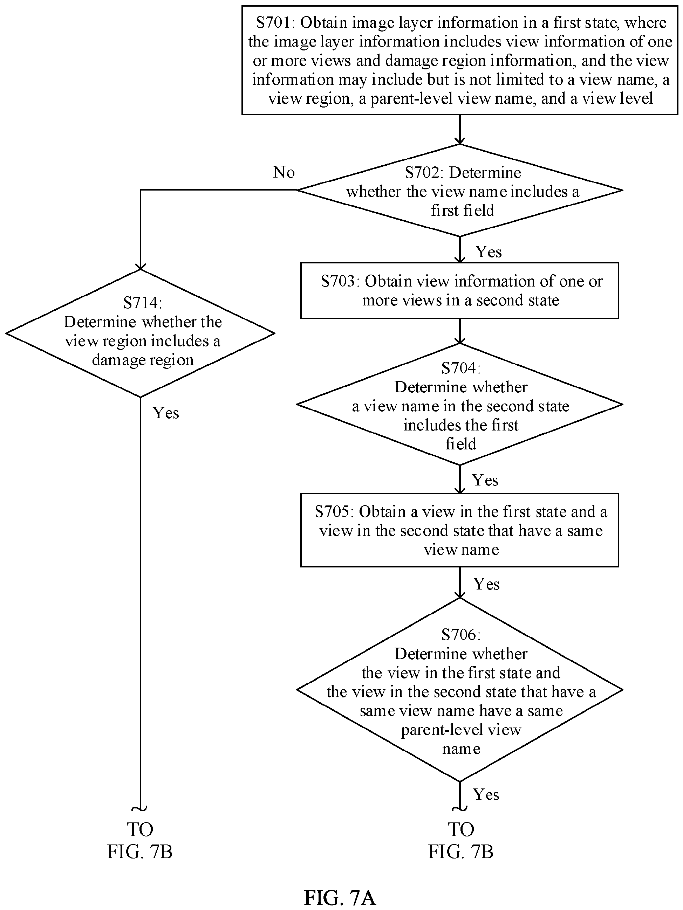

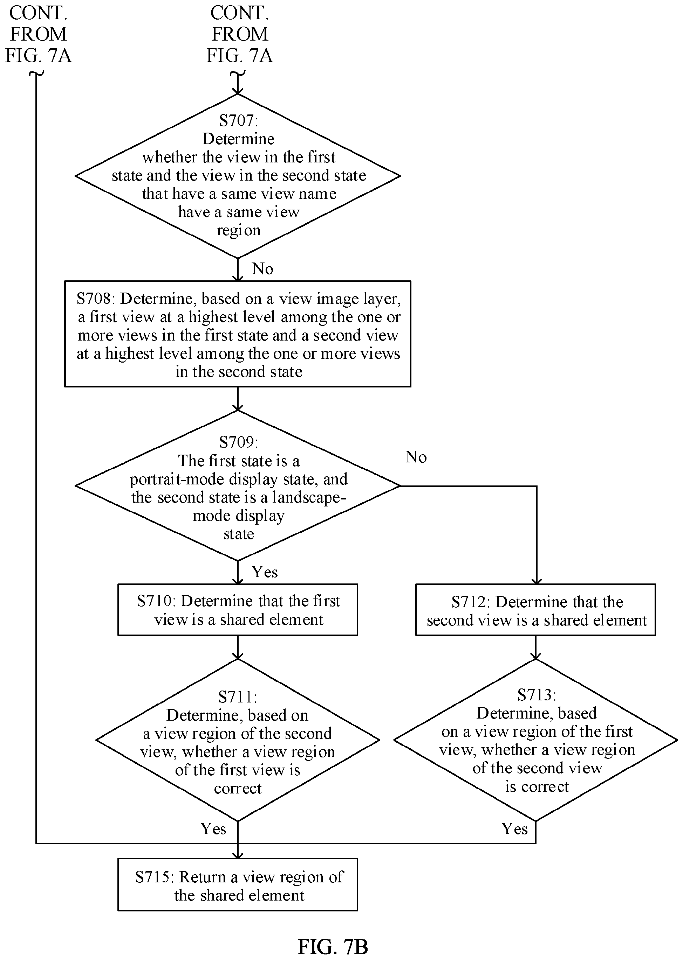

For example, as shown in FIG. 7A and FIG. 7B, steps of obtaining the view region of the shared element by the electronic device 100 are as follows.

S701: Obtain image layer information in a first state, where the image layer information includes view information of one or more views and damage region information, and the view information may include but is not limited to a view name, a view region, a parent-level view name, and a view level.

When receiving landscape/portrait mode switching input, the electronic device 100 may use a current display status as the first state, and use a display status obtained after the electronic device 100 performs a landscape/portrait mode switching operation as a second state. When the first state is the portrait-mode display state, the second state is the landscape-mode display state; or when the first state is the landscape-mode display state, the second state is the portrait-mode display state. The electronic device 100 may obtain the image layer information in the first state after receiving the landscape/portrait mode switching input. Specifically, the electronic device 100 may further monitor a screen freezing event, or monitor a landscape/portrait mode switching input receiving event, to obtain the image layer information in the first state.

In some examples, the electronic device 100 may invoke an interface provided by SurfaceFlinger to obtain image layer information from a hardware composer (hardware composer, HWC). Specifically, the electronic device 100 may first obtain code data of an image layer through the interface, and then obtain the image layer information indicated in the code data. For specific descriptions of the image layer information, refer to the embodiment shown in step S102. Details are not described herein again.

Herein, switching from the portrait-mode page to the landscape-mode page is used as an example. In this case, the first state is the portrait-mode display state. For example, code data, obtained in step S701, of an image layer in the first state (namely, the portrait-mode display state) may be represented as follows:

```
          ...
          Layer=Surface View-
 com.youku.phone/com.youku.activityDetailActivity#1,0,103,1228,794,com.youku.ui.activity.
 DetailActivity#0,-2
          Layer=SurfaceView-
 com.youku.phone/com.youku.activityDetailActivity#2,0,103,1228,793,com.youku.ui.activity
 DetailActivity#0,-1
          Layer=com.youku.ui.activity.DetailActivity#0,0,0,2700,1228,5c2966fcom.youku.ui.a
 ctivity.DetailActivity#0,0
          ...
          RegionSurfaceDamageRegion(this=5e1167ce2c00f737 count=1)
           { 0,103,1228,793
          ...
```

A layer represents a view. Data following "Layer=" is sequentially a view name, a view region parameter, a parent-level view name, and a view level of the view. The view region parameter may indicate a size and a location of a view region, and the view region may be determined based on the view region parameter. The electronic device 100 may obtain view information of the view correspondingly.

Herein, the one or more views in the first state include a view with a view name of "SurfaceView-com.youku.phone/com.youku.activity.DetailActivity#1", and a view region parameter of the view is "0,103,1228,794", where 0 represents a distance between the left border of the view and the left-side bezel of the electronic device 100, 103 represents a distance between the top border of the view and the top bezel of the electronic device 100, 1228 represents a horizontal length of the view, and 793 represents a vertical length of the view. "com.youku.ui.activity.DetailActivity#0" indicates the parent-level view name of the view. "-2" indicates level information of the view. It should be noted that, for examples of the left-side bezel and a right-side bezel herein, refer to (a) in FIG. 3.

The one or more views in the first state further include a view with a view name of "SurfaceView-com.youku.phone/com.youku.activity.DetailActivity#2", and a view region parameter of the view is "0,103,1228,793", where 0 represents a distance between the left border of the view and the left-side bezel of the electronic device 100, 103 represents a distance between the top border of the view and the top bezel of the electronic device 100, 1228 represents a horizontal length of the view, and 794 represents a vertical length of the view. "com.youku.ui.activity.DetailActivity#0" indicates the parent-level view name of the view. "-1" indicates level information of the view.

The one or more views in the first state further include a view with a view name of "com.youku.ui.activity.DetailActivity#0", and a view region parameter of the view is "0,0,1228,2700", where 0 represents a distance between the left border of the view and the left-side bezel of the electronic device 100, 0 represents a distance between the top border of the view and the top bezel of the electronic device 100, 1228 represents a horizontal length of the view, and 2700 represents a vertical length of the view. "5c2966f" indicates identification information of the image layer. "com.youku.ui.activity.DetailActivity#0" indicates the parent-level view name of the view. "0" indicates level information of the view.

SurfaceDamageRegion represents a damage region in the first state. The electronic device 100 may obtain the damage region information correspondingly. Herein, a region of the damage region is "0,103,1228,793", where 0 represents a distance between the left border of the damage region and the left-side bezel of the electronic device 100, 103 represents a distance between the top border of the damage region and the top bezel of the electronic device 100, 1228 represents a horizontal length of the damage region, and 793 represents a vertical length of the damage region.

The image layer information obtained by the electronic device 100 may be represented in a form of a linked list, an array, or the like. This is not limited in this application. Alternatively, the electronic device 100 may store a selected code location of an image layer, and obtain corresponding image layer information when performing a subsequent determining operation.

S702: Determine whether the view name includes a first field.

The electronic device 100 determines, based on whether the view name includes the first field, one or more views whose view names include the first field. The first field may be a character string indicating that the view is a video picture, for example, "SurfaceView".

When determining that the view name (of some views) includes the first field, the electronic device 100 may retain one or more views whose view names include the first field among all views in the first state, and perform step S703.

When determining that the view name (of all views) does not include the first field, the electronic device 100 may perform step S714.

In the example provided in step S701, because view names of only two views include "SurfaceView", the electronic device 100 performs a subsequent determining operation only on the two views.

S703: Obtain view information of one or more views in the second state.

The electronic device 100 may obtain the view information in the second state after completing drawing a display interface in the second state. Specifically, the electronic device 100 may further monitor a screen freezing cancellation event, or monitor an event of receiving completion of the drawing of the display interface in the second state, to obtain image layer information in the second state.

Herein, switching from the portrait-mode page to the landscape-mode page is used as an example. In this case, the second state is the landscape-mode display state. For example, code data of an image layer in the second state (namely, the landscape-mode display state) may be represented as follows:

```
          ...
          Layer=SurfaceView-
 com.youku.phone/com.youku.activity.DetailActivity#1,0,0,1228,691,com.youku.ui.activity.
 DetailActivity#0,-2
          Layer=SurfaceView-
 com.youku.phone/com.youku.activity.DetailActivity#2,259,0,2441,1228,com.youku.ui.activity.
 DetailActivity#0,-1
          Layer=com.youku.ui.activity.DetailActivity#0,0,0,2700,1228,5c2966fcom.youku.ui.a
 ctivity.DetailActivity#0,0
          ...
```

A layer represents a view. Data following "Layer=" is sequentially a view name, a view region parameter, a parent-level view name, and a view level of the view. The electronic device 100 may obtain view information of the view correspondingly.

Herein, the one or more views in the second state include a view with a view name of "SurfaceView-com.youku.phone/com.youku.activity.DetailActivity#1", and a view region parameter of the view is "0,0,1228,691 ", where 0 represents a distance between the left border of the view and the left-side bezel of the electronic device 100, 0 represents a distance between the top border of the view and the top bezel of the electronic device 100, 1228 represents a horizontal length of the view, and 691 represents a vertical length of the view. "com.youku.ui.activity.DetailActivity#0" indicates the parent-level view name of the view. "-2" indicates level information of the view. It should be noted that, for examples of the left-side bezel and a right-side bezel herein, refer to (b) in FIG. 3.

The one or more views in the second state further include a view with a view name of "SurfaceView-com.youku.phone/com.youku.activity.DetailActivity#2", and a view region parameter of the view is "259,0,2441,1228", where 259 represents a distance between the left border of the view and the left-side bezel of the electronic device 100, 0 represents a distance between the top border of the view and the top bezel of the electronic device 100, 2441 represents a horizontal length of the view, and 1228 represents a vertical length of the view. "com.youku.ui.activity.DetailActivity#0" indicates the parent-level view name of the view. "-1" indicates level information of the view.

The one or more views in the second state further include a view with a view name of "com.youku.ui.activity.DetailActivity#0", and a view region parameter of the view is "0,0,1228,2700", where 0 represents a distance between the left border of the view and the left-side bezel of the electronic device 100, 0 represents a distance between the top border of the view and the top bezel of the electronic device 100, 2700 represents a horizontal length of the view, and 1228 represents a vertical length of the view. "5c2966f" indicates identification information of the image layer. "com.youku.ui.activity.DetailActivity#0" indicates the parent-level view name of the view. "0" indicates level information of the view.

S704: Determine whether a view name in the second state includes the first field.

Similarly, the electronic device 100 determines, based on whether the view name includes the first field, one or more views whose view names include the first field.

When determining that the view name (of some views) includes the first field, the electronic device 100 may retain one or more views whose view names include the first field among all views in the second state, and perform step S705.

In some examples, when determining that the view name (of all views) does not include the first field, the electronic device 100 may determine that a page in the first state does not include a shared element, and no longer perform a subsequent step.

In the example provided in step S703, because view names of only two views include "SurfaceView", the electronic device 100 performs a subsequent determining operation only on the two views.

S705: Obtain a view in the first state and a view in the second state that have a same view name.

The electronic device 100 may compare a view whose view name includes the first field in the first state with a view whose view name includes the first field in the second state one by one, and determine a view in the first state and a view in the second state that have a same view name.

In some examples, the electronic device 100 may store views with a same view name together, to facilitate a subsequent comparison operation.

In the example provided in step S701 to step S704, the electronic device 100 obtains views whose view names are "SurfaceView-com.youku.phone/com.youku.activity.DetailActivity#1" and in the first state and the second state, and the electronic device 100 further obtains views whose view names are "SurfaceView-com.youku.phone/com.youku.activity.DetailActivity#2" and in the first state and the second state.

S706: Determine whether the view in the first state and the view in the second state that have a same view name have a same parent-level view name.

After the electronic device 100 performs a landscape/portrait mode switching operation, a parent-level view of a video play window does not change. Therefore, views with different parent-level views may be eliminated through comparison between parent-level view names of views. The electronic device 100 may determine whether the view in the first state and the view in the second state that have a same view name have a same parent-level view name.

When determining that parent-level view names (of some views in the first state and some views in the second state that have same view names) are the same, the electronic device 100 may retain these views, and perform step S707.

In some examples, when determining that parent-level view names (of all views in the first state and all views in the second state that have same view names) are different, the electronic device 100 may determine that the page in the first state does not include a shared element, and no longer perform a subsequent step.

In the example provided in step S701 to step S705, the electronic device 100 determines that the views whose view names are "SurfaceView-com.youku.phone/com.youku.activity.DetailActivity#1" and in the first state and the second state have a same parent-level view name, and the electronic device 100 further determines that the views whose view names are "SurfaceView-com.youku.phone/com.youku.activity.DetailActivity#2" and in the first state and the second state have a same parent-level view name.

S707: Determine whether the view in the first state and the view in the second state that have a same view name have a same view region.

After the electronic device 100 performs a landscape/portrait mode switching operation, both a location and a size of a video play window vary. Therefore, a view whose view region does not change may be eliminated through comparison between view regions of views. The electronic device 100 may determine, based on the view region parameter, whether a view in the first state and a view in the second state that have a same view name and a same parent-level view name have a same view region.

When determining that view regions (of some views in the first state and some views in the second state that have same view names) are different, the electronic device 100 may retain these views, and perform step S708.

In some examples, when determining that view regions (of all views in the first state and all views in the second state that have same view names) are the same, the electronic device 100 may determine that the page in the first state does not include a shared element, and no longer perform a subsequent step.

In the example provided in step S701 to step S706, the electronic device 100 determines that two views whose view names are "SurfaceView-com.youku.phone/com.youku.activity.DetailActivity#1" and in the first state and the second state have different view regions, and the electronic device 100 further determines that two views whose view names are "SurfaceView-com.youku.phone/com.youku.activity.DetailActivity#2" and in the first state and the second state also have different view regions.

S708: Determine, based on a view image layer, a first view at a highest level among the one or more views in the first state and a second view at a highest level among the one or more views in the second state.

A video window is always displayed at a top layer of the display of the electronic device 100. Therefore, to obtain a shared element, the electronic device 100 may directly obtain a view at a highest level among a plurality of views. The first view is a view at a highest view level among the one or more views in the first state, and the second view is a view at a highest view level among the one or more views in the second state. It can be understood that, if a view is a shared element, the shared element has a same view name and a same view level in the first state and the second state.

In the example provided in step S701 to step S707, view levels of the two views whose view names are "SurfaceView-com.youku.phone/com.youku.activity.DetailActivity#1" and in the first state and the second state are "-2", and view levels of the two views whose view names are "SurfaceView-com.youku.phone/com.youku.activity.DetailActivity#2" and in the first state and the second state are "-1". A larger number of a view level indicates a higher view level and a higher layer at which a view is displayed on the display. Therefore, herein, a view level of the view at the highest view level is "-1".

S709: The first state is the portrait-mode display state, and the second state is the landscape-mode display state.

The electronic device 100 determines whether the first state is the portrait-mode display state and whether the second state is the landscape-mode display state. When the first state is the portrait-mode display state and the second state is the landscape-mode display state, the electronic device 100 performs step S710; or when the first state is not the portrait-mode display state and the second state is not the landscape-mode display state (herein, this may be equivalent to that the first state is the landscape-mode display state and the second state is the portrait-mode display state), the electronic device 100 performs step S712.

The electronic device 100 may invoke a preset universal interface of an application framework layer (for example, a HarmonyOS framework) to obtain a rotation delta value, and may determine, based on the delta value, that the first state is the landscape-mode display state or the portrait-mode display state. In some examples, the preset universal interface may be provided by a window management module at the application framework layer. In some examples, the preset universal interface may be a deltaRotation interface.

For example, when the delta value is "3", it may be determined that the electronic device 100 has performed an operation of rotating clockwise by 90 degrees; when the delta value is "2", it may be determined that the electronic device 100 has performed an operation of rotating clockwise or counterclockwise by 180 degrees; or when the delta value is "1", it may be determined that the electronic device 100 has performed an operation of rotating counterclockwise by 90 degrees. Therefore, when the obtained delta value is "1" or "3", the electronic device 100 may determine that a current scenario is a landscape/portrait mode switching scenario. The electronic device 100 may further obtain an angle of the electronic device 100 in the first state (or the second state) based on a sensor (for example, the acceleration sensor or the gyroscope), and determine, based on the angle of the electronic device 100 in the first state (or the second state), that the first state is the landscape-mode display state or the portrait-mode display state. If the delta value is "1" or "3", when the angle of the electronic device 100 in the first state is 0 degrees or 180 degrees (or the angle of the electronic device 100 in the second state is 90 degrees or -90 degrees), the first state is the portrait-mode display state, and the second state is the landscape-mode display state; or when the angle of the electronic device 100 in the first state is 90 degrees or -90 degrees (or the angle of the electronic device 100 in the second state is 0 degrees or 180 degrees), the first state is the landscape-mode display state, and the second state is the portrait-mode display state. If the delta value is "2", the electronic device 100 determines that the electronic device 100 has switched from the landscape-mode display state to the landscape-mode display state or has switched from the portrait-mode display state to the portrait-mode display state, and no longer performs a subsequent step.

In some embodiments, the electronic device 100 may directly obtain, based on a sensor (for example, the acceleration sensor or the gyroscope), an angle of the electronic device 100 in the first state and an angle of the electronic device 100 in the second state. When the angle of the electronic device 100 in the first state is 0 degrees or 180 degrees and the angle of the electronic device 100 in the second state is 90 degrees or -90 degrees, the first state is the portrait-mode display state, and the second state is the landscape-mode display state. When the angle of the electronic device 100 in the first state is 90 degrees or -90 degrees and the angle of the electronic device 100 in the second state is 0 degrees or 180 degrees, the first state is the landscape-mode display state, and the second state is the portrait-mode display state.

It should be noted that the angle obtained by the electronic device 100 may have a deviation due to a holding gesture of the user. When a difference between the obtained angle and 0 degrees or 180 degrees is less than an angle difference (for example, 5 degrees or 10 degrees), the electronic device 100 may determine that the angle of the electronic device 100 is 0 degrees or 180 degrees. When a difference between the obtained angle and 90 degrees or -90 degrees is less than an angle difference (for example, 5 degrees or 10 degrees), the electronic device 100 may determine that the angle of the electronic device 100 is 90 degrees or -90 degrees.

In some other embodiments, because a size of the portrait-mode video play window is less than a size of the landscape-mode video play window, the electronic device 100 may determine, based on whether a size of a view region of the first view is greater than a first size, whether the first state is the portrait-mode state. For example, the first size may be a half of a size of the touchscreen, or the first size may be a size of a view region of the second view. When the size of the view region of the first view is less than or equal to the first size, it may be determined that the first state is the portrait-mode state. When the size of the view region of the first view is greater than the first size, it may be determined that the first state is not the portrait-mode state.

In some other embodiments, the landscape/portrait mode switching input received by the electronic device 100 is input for the switching control in the video play window, and the electronic device 100 may obtain only a posture of the electronic device 100 in a case in which the electronic device 100 receives the landscape/portrait mode switching input, to determine whether the first state of the electronic device 100 is the portrait-mode display state or the landscape-mode display state. If the posture of the electronic device 100 is a vertical orientation, it may be determined that the first state of the electronic device 100 is the portrait-mode display state. If the posture of the electronic device 100 is a horizontal orientation, it may be determined that the first state of the electronic device 100 is the landscape-mode display state. For example, the electronic device 100 may obtain the posture of the electronic device 100 by using the sensor.

In the example provided in step S701 to step S708, the first state is the portrait-mode display state, and the electronic device 100 may perform step S710.

S710: Determine that the first view is a shared element.

The electronic device 100 may determine that the first view is a shared element. In this way, the electronic device 100 obtains a view region parameter of the video play window (including a location and a size of the video play window) in the portrait-mode display state. In other words, herein, the first view is the portrait-mode video play window.

In the example provided in step S701 to step S709, the first view is a view whose view name is "SurfaceView-com.youku.phone/com.youku.activity.DetailActivity#2" among views in the first state, and the electronic device 100 may perform step S711.

Optionally, before determining that the first view is a shared element, the electronic device 100 may further determine, based on the damage region, whether the first view is a shared element. Because content of the video play window changes with playing of the video file, the damage region definitely includes a part of the video window. The electronic device 100 may determine, by determining whether the damage region overlaps the view region of the first view, whether the first view is a shared element. If the damage region overlaps the view region of the first view, the first view is a shared element. If the damage region does not overlap the view region of the first view, the first view is not a shared element.

S711: Determine, based on the view region of the second view, whether the view region of the first view is correct.

A length of a longer edge of the video play window in the portrait-mode display state is the same as a length of a shorter edge of the video play window in the landscape-mode display state. Therefore, the electronic device 100 may further determine, based on view region parameters of view regions in the first state and the second state, whether the first view is the portrait-mode video play window on the portrait-mode page.

When determining that a length of an edge of the first view is the same as a length of an edge of the second view, the electronic device 100 determines that the view region of the first view is correct, and performs step S715.

In the example provided in step S701 to step S710, the horizontal length of the view region of the first view in the first state is 1228, and the vertical length of the view region of the second view in the second state is 1228. Therefore, a length of an edge of the first view is the same as a length of an edge of the second view, and the view region of the first view is correct. The electronic device 100 may perform step S715.

S712: Determine that the second view is a shared element.

The electronic device 100 may determine that the second view is a shared element. In this way, the electronic device 100 obtains a view region parameter of the video play window (including a location and a size of the video play window) in the portrait-mode display state. In other words, herein, the second view is the portrait-mode video play window.

Optionally, before determining that the second view is a shared element, the electronic device 100 may further determine, based on the damage region, whether the second view is a shared element. Because content of the video play window changes with playing of the video file, the damage region definitely includes a part of the video window. The electronic device 100 may determine, by determining whether the damage region overlaps the view region of the second view, whether the second view is a shared element. If the damage region overlaps the view region of the second view, the second view is a shared element. If the damage region does not overlap the view region of the second view, the second view is not a shared element.

S713: Determine, based on the view region of the first view, whether the view region of the second view is correct.

When determining that a length of an edge of the second view is the same as a length of an edge of the first view, the electronic device 100 determines that the view region of the second view is correct, and performs step S715.

S714: Determine whether the view region includes the damage region.

When the electronic device 100 determines that none of view fields of views in the first state includes the first field, the electronic device 100 may determine, based on the damage region information, whether a view region of a view includes the damage region, in other words, whether the view region of the view overlaps the damage region. If only one view overlaps the damage region, it is determined that the view is a shared element. If a plurality of views overlap the damage region, it is determined that a view at a highest level among the plurality of views is a shared element.

Optionally, when determining that none of view fields of views in the first state includes the first field, the electronic device 100 may directly use the damage region as a view region of a shared element.

S715: Return the view region of the shared element.

The electronic device 100 determines the shared element, and may obtain the view region of the shared element.

It should be noted that an execution sequence of the foregoing steps may be changed. For example, step S705 may be performed before step S701 to step S704. This is not limited in this application.

It should be further noted that some of the foregoing steps are optional, and an optional step includes one or more of steps S706, S707, S711, and S713. In other words, the electronic device 100 may not perform one or more of steps S706, S707, S711, and S713. It can be understood that a parent-level view name of a view may not be obtained when the electronic device 100 does not perform step S706, or a parent-level view name of a view may not be obtained when the electronic device 100 does not perform step S707.

It should be further noted that, because the electronic device 100 may not perform step S714, the electronic device 100 may not obtain the damage region information when performing step S701, and may obtain the damage region information when performing step S714.

In the embodiment shown in FIG. 4, the first state is the portrait-mode state, and the shared element is the portrait-mode video play window. Therefore, the electronic device 100 may obtain the view region parameter of the portrait-mode video play window in the portrait mode through the process of identifying a region of a shared element in FIG. 7A and FIG. 7B. In the example shown in FIG. 7A and FIG. 7B, the view region parameter of the portrait-mode video play window is "0,103,1228,793".

The electronic device 100 may further obtain a rotational image layer (for example, the screenshot image 232 shown in FIG. 2D). The electronic device 100 may obtain the rotational image layer in the following manner: (1) The electronic device 100 may directly capture the landscape-mode page to obtain a screenshot of the landscape-mode page, and then perform rotation, translation, and zoom-out operations on the screenshot of the landscape-mode page to obtain a rotational image layer that is located in the portrait-mode video play window, whose size is the same as a size of the portrait-mode video play window, and in which a direction of the video picture is the same as a direction of the video picture in the portrait-mode video play window. (2) The electronic device 100 may capture, based on an obtained view region of the portrait-mode video play window, a screenshot image of the view region to obtain a rotational image layer.

Optionally, the electronic device 100 may further set a blocking image layer between the screenshot of the portrait-mode page and the rotational image layer. For specific descriptions of the blocking image layer, refer to the embodiment shown in FIG. 2D. Details are not described herein again.

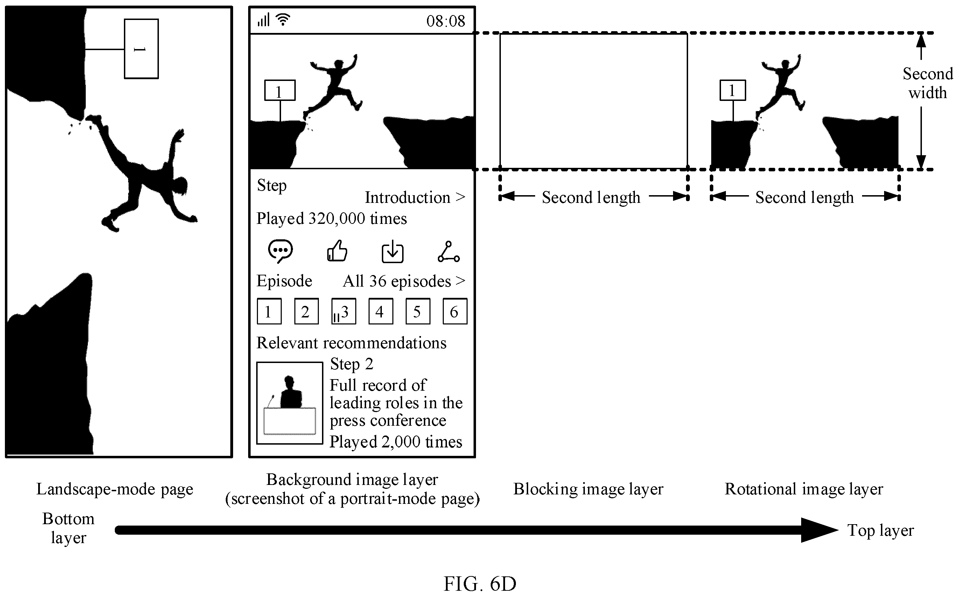

It should be noted that the electronic device 100 does not display a process of obtaining the rotational image layer. After an unfreezing operation is performed, the electronic device 100 may directly display a background image layer (namely, the screenshot of the portrait screen), the rotational image layer, and the blocking image layer. Image layer composition of an interface displayed on the electronic device 100 may be shown in FIG. 6D.

S107: Play a switching animation, and display the landscape-mode page.

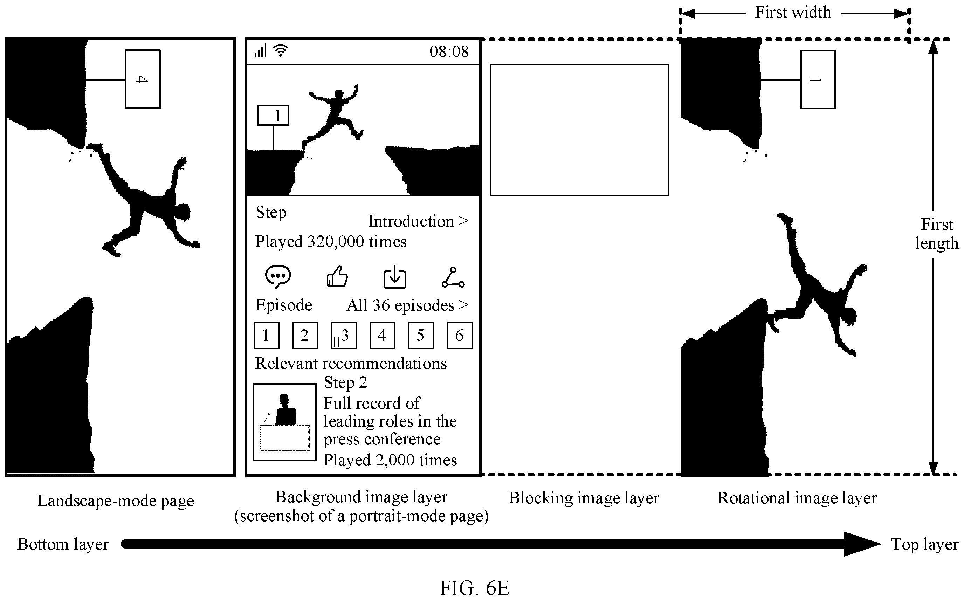

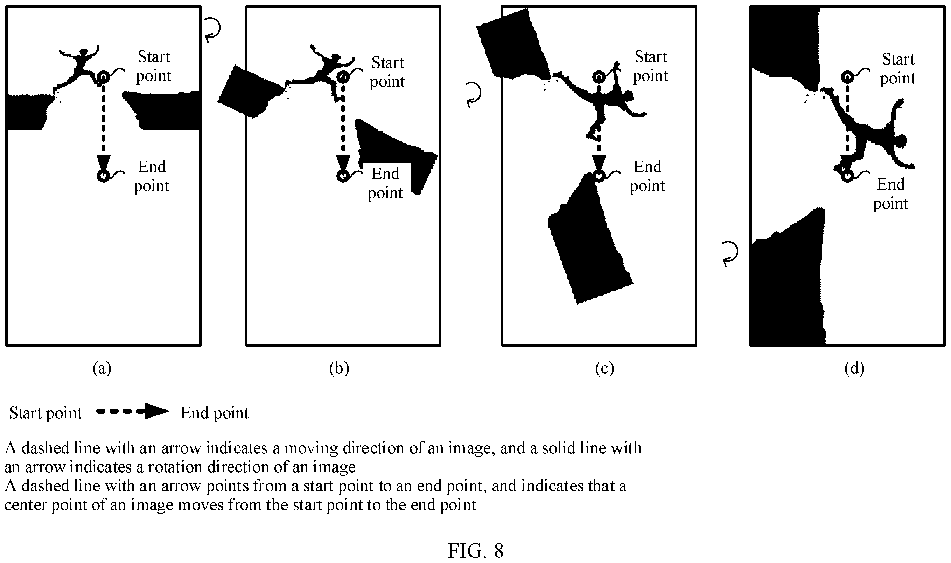

After obtaining the rotational image layer and the view region of the portrait-mode video play window, the electronic device 100 may start to play the switching animation. During the playing of the switching animation, for a rotational image layer shown in FIG. 6D, the electronic device 100 may switch, in a switching manner shown in FIG. 8, the rotational image layer from a portrait-mode video play window shown in FIG. 6D to a landscape-mode video play window shown in FIG. 6E. As shown in FIG. 8, when the electronic device 100 displays an interface shown in FIG. 6D, an image layer center of the rotational image layer displayed on the electronic device 100 is at a start point in (a) in FIG. 8. A size of the rotational image layer is the same as a size of the portrait-mode video play window. The electronic device 100 may translate the rotational image layer in a direction (downward) indicated by a dashed line with an arrow in (a) in FIG. 8, to move a center point of the rotational image layer from the start point to an end point. During the movement, the electronic device 100 may rotate the rotational image layer in a direction (a clockwise direction) indicated by a solid line with an arrow in (a) in FIG. 8. During the movement, the electronic device 100 may gradually increase a size of the rotational image layer. During entire switching, a rotational image layer shown in (a) in FIG. 8, a rotational image layer shown in (b) in FIG. 8, a rotational image layer shown in (c) in FIG. 8, and a rotational image layer shown in (d) in FIG. 8 may sequentially appear. It should be noted that, that the rotational image layer is rotated in the clockwise direction is merely an example, and the electronic device 100 may alternatively control the rotational image layer to rotate in a counterclockwise direction. This is not limited in embodiments of this application. In some examples, the electronic device 100 may be set to rotate the rotational image layer in the clockwise or counterclockwise direction. In some other examples, the electronic device 100 may set a rotation direction of the rotational image layer based on a rotation direction of the electronic device 100. For example, the electronic device 100 rotates in the clockwise direction, and the rotation direction of the rotational image layer is also the clockwise direction; or the electronic device 100 rotates in the counterclockwise direction, and the rotation direction of the rotational image layer is also the counterclockwise direction. For another example, the electronic device 100 rotates in the clockwise direction, and the rotation direction of the rotational image layer is the counterclockwise direction; or the electronic device 100 rotates in the counterclockwise direction, and the rotation direction of the rotational image layer is the clockwise direction. It should be noted that, if the landscape/portrait mode switching input is input for a landscape/portrait mode switching control, it cannot be determined that the rotation direction of the electronic device 100 is the clockwise direction or the counterclockwise direction. The rotation direction of the rotational image layer may be directly set to the clockwise or counterclockwise direction.

Optionally, the image layer shown in FIG. 6D and the image layer shown in FIG. 6E each include a landscape-mode page. However, in this process, the landscape-mode page is blocked, and the user cannot see the landscape-mode page. In a process of FIG. 6D to FIG. 6E, the electronic device 100 may not compose or render the landscape-mode page. This reduces rendering power consumption of the electronic device 100.

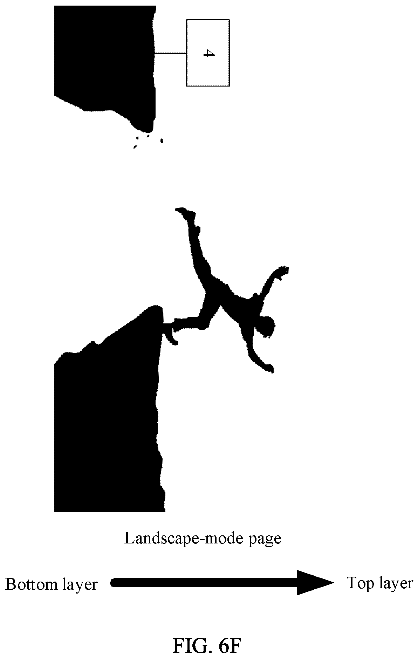

After completing playing the switching animation, the electronic device 100 may display a landscape-mode page shown in FIG. 6F.

In some examples, a size of a video picture on the landscape-mode page displayed on the electronic device 100 is less than a size of the touchscreen. For example, when the electronic device 100 displays the video picture in the display status shown in (b) in FIG. 3, because a width-to-height ratio of the video picture is different from a width-to-height ratio of the display, black borders may exist on the left and the right of the video picture. The electronic device 100 may determine, based on the width-to-height ratio of the video picture and the width-to-height ratio of the display, a region of a video picture obtained by removing the black borders in the landscape-mode video play window, and capture a video picture of the region. The electronic device 100 may use an image of the captured video picture as the rotational image layer. In a process of moving the rotational image layer, the electronic device 100 enlarges the rotational image layer only to a size of the video picture in the landscape-mode video play window.

It should be noted that, because the electronic device 100 takes specific duration to play the switching animation, if the electronic device 100 does not pause playing the video file in a process of playing the switching animation, a video picture displayed on the electronic device 100 in the landscape-mode state is different from a video picture displayed in the portrait-mode state. Herein, a video picture shown in FIG. 6F is located after a video picture shown in FIG. 6A.

In some other application scenarios, the electronic device 100 displays a landscape-mode page, and the landscape-mode page includes a landscape-mode video play window. When receiving input for switching to portrait-mode display, the electronic device 100 may obtain and display a screenshot of the landscape-mode page in response to the input. The electronic device 100 may draw, on the landscape-mode page, a portrait-mode page including a portrait-mode video play window, and play a second switching animation on the portrait-mode page after the drawing is completed. The second switching animation includes a process of performing rotation, translation, zoom-out, and other operations on the screenshot of the landscape-mode page to switch the screenshot of the landscape-mode page from a location of the landscape-mode video play window to a location of the portrait-mode video play window. When playing of the animation ends, the electronic device 100 may display the portrait-mode page including the portrait-mode video play window. In this way, in a process of switching from a landscape play mode to a portrait play mode, the electronic device 100 may perform rotation, zoom-in, and translation operations on the screenshot (which is a rotational image layer herein) of the landscape-mode page by using the portrait-mode page as a background image layer, to smoothly switch from the landscape-mode page to the portrait-mode page. During entire switching, direct switching between the landscape-mode page and the portrait-mode page without a transition is avoided, and the landscape-mode page and the portrait-mode page do not overlap either. This makes landscape/portrait mode switching effect smoother and improves user experience.

For example, the electronic device 100 may display a video play interface 240 shown in FIG. 2G. After receiving landscape/portrait mode switching input, the electronic device 100 may perform, in response to the landscape/portrait mode switching input, an operation of switching the electronic device 100 from the landscape-mode display state to the portrait-mode display state. For descriptions of the landscape/portrait mode switching input, refer to the embodiments shown in FIG. 2C to FIG. 2G. Details are not described herein again.

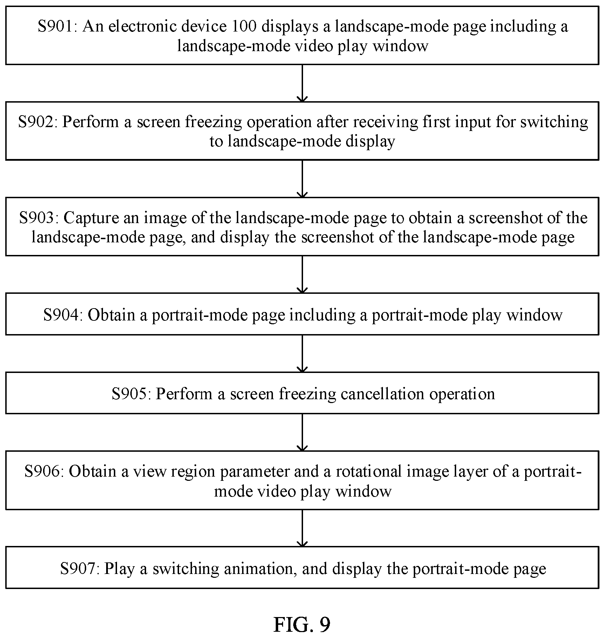

When receiving the landscape/portrait mode switching input, the electronic device 100 may capture an image displayed on a display to obtain a screenshot image 232 shown in FIG. 2F. The screenshot image 232 includes all content of the video play interface 240. The electronic device 100 may display the screenshot image 232, and draw a video play interface 220 shown in FIG. 2C at a lower layer of the screenshot image 232. A length and a width of the screenshot image 232 are a first length and a first width respectively. The electronic device 100 may display the screenshot image 232 at a location, on the display, for placing a video play window 241 shown in FIG. 2G. The screenshot image 232 may fully block the video play interface 220 shown in FIG. 2C. The electronic device 100 may rotate the screenshot image 232 clockwise or counterclockwise by 90°, and zoom out and translate, upward, the screenshot image 232 during rotation. When the screenshot image 232 is rotated clockwise or counterclockwise by 90°, the length of the screenshot image 232 is reduced to a second length, and the width of the screenshot image 232 is reduced to a second width. Specifically, a specific process of switching, by the electronic device 100, from the portrait-mode display state to the landscape-mode display state is shown in FIG. 9. Details are not described herein.

Further, to avoid a scenario in which the electronic device 100 displays two video images during landscape/portrait mode switching, the electronic device 100 may display a blocking image layer between the screenshot image 232 and the video play interface 220. For descriptions of the blocking image layer, refer to the embodiment shown in FIG. 2D. Details are not described herein again.

In a process of rotating the screenshot image 232 by the electronic device 100, landscape/portrait mode switching interfaces 230 shown in FIG. 2F, FIG. 2E, and FIG. 2D may sequentially appear. After the landscape/portrait mode switching is completed, the electronic device 100 may display the video play interface 220 shown in FIG. 2C.

In some embodiments, in a process in which the electronic device 100 switches from the landscape-mode display state to the portrait-mode display state, if the electronic device 100 is playing a video file, because the switching operation lasts for specific duration (for example, 1s), a video picture displayed by the electronic device 100 in the landscape-mode state is different from a video picture displayed in the portrait-mode state. Herein, a video picture 241A shown in FIG. 2G is different from a video picture 221A shown in FIG. 2C. The video picture 241A is a video frame located before the video picture 221A in the video file.

The following describes a schematic flowchart of a display method according to an embodiment of this application.

As shown in FIG. 9, the display method includes the following steps.

S901: The electronic device 100 displays a landscape-mode page including a landscape-mode video play window.

The electronic device 100 is in a landscape-mode display state, and displays the landscape-mode page including the landscape-mode video play window. The landscape-mode video play window may be used to play a video file.

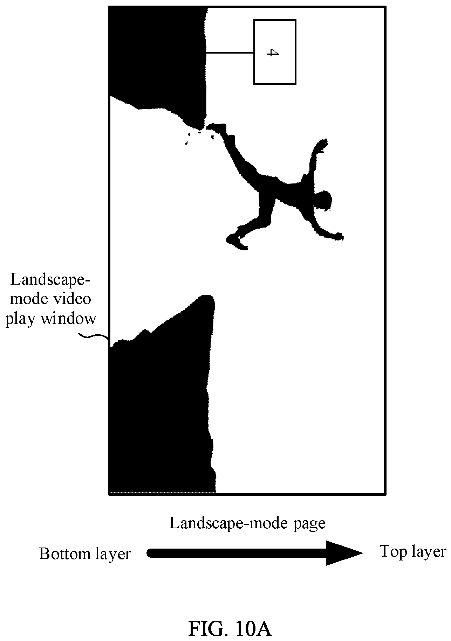

Herein, the landscape-mode page displayed on the electronic device 100 is an image layer. The following describes steps of the display method by using the video play interface 240 shown in FIG. 2G as an example. When the electronic device 100 displays the video play interface 240 shown in FIG. 2G, an image layer included in the video play interface 240 is a portrait-mode page shown in FIG. 10A.

S902: The electronic device 100 performs a screen freezing operation after receiving first input for switching to portrait-mode display.

The first input may be input for a switching control for a video play application.

In some embodiments, the first input may be input of rotating the electronic device 100 clockwise (or counterclockwise) by a first angle, and/or the first input is input of rotating the electronic device 100 clockwise (or counterclockwise) at a first acceleration. The first angle is a preset angle, for example, 45 degrees, 60 degrees, 90 degrees, -45 degrees, -60 degrees, or -90 degrees. The first acceleration is a preset angular acceleration. The electronic device 100 may obtain the angle and/or the acceleration of the electronic device 100 by using a sensor (for example, an acceleration sensor or a gyroscope).

After the electronic device 100 performs the screen freezing operation, a touchscreen of the electronic device 100 stops receiving user input.

In some embodiments, the electronic device 100 may further monitor a screen freezing event, or monitor a first input receiving event, to obtain image layer information of the landscape-mode page. The image layer information obtained by the electronic device 100 may include view information of one or more views and damage region information.

S903: Capture an image of the landscape-mode page to obtain a screenshot of the landscape-mode page, and display the screenshot of the landscape-mode page.

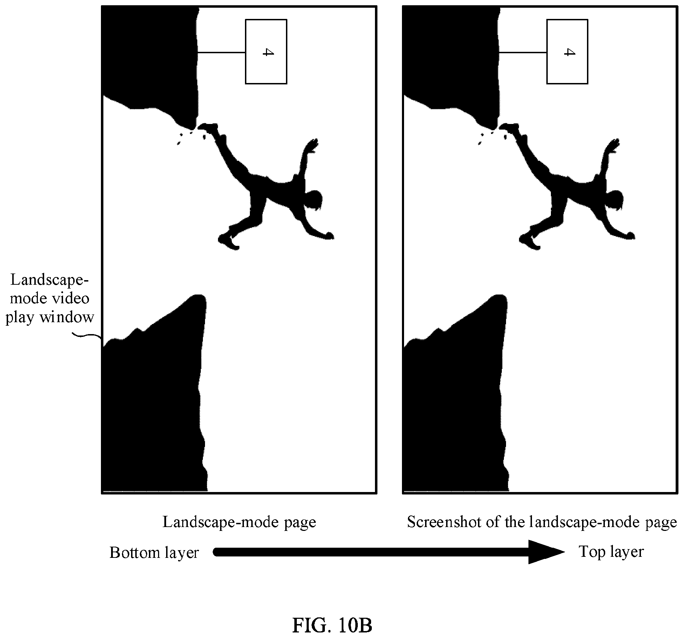

During screen freezing, the electronic device 100 may further capture an image of the landscape-mode page, and display the captured screenshot of the landscape-mode page. For example, as shown in FIG. 10B, the electronic device 100 may capture an image of the landscape-mode page shown in FIG. 10A, and display a screenshot of the landscape-mode page at an upper layer of (or above) the landscape-mode page. The screenshot of the landscape-mode page may block the landscape-mode page.

Alternatively, when obtaining the screenshot of the landscape-mode page, the electronic device 100 may cancel displaying the landscape-mode page, and display the screenshot of the landscape-mode page.

S904: Obtain a portrait-mode page including a portrait-mode play window.

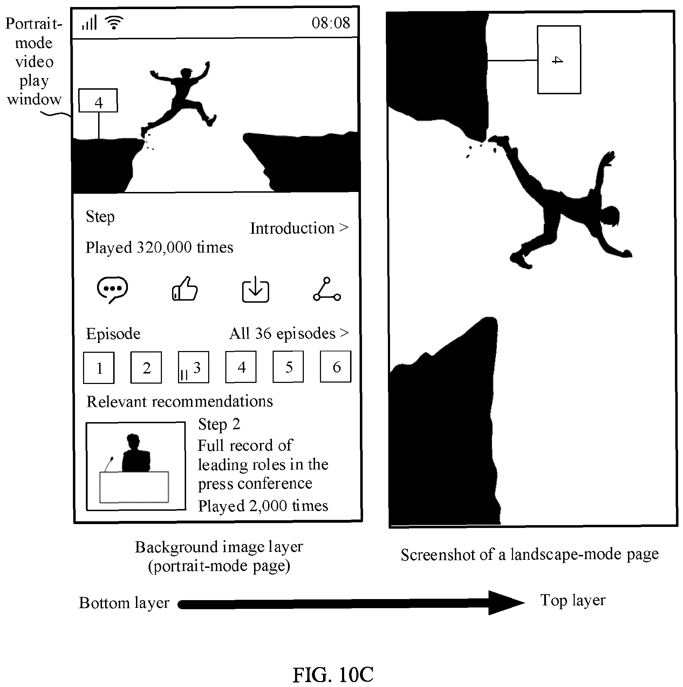

After displaying the screenshot of the landscape-mode page, the electronic device 100 may draw, at a lower layer of the screenshot of the landscape-mode page, the portrait-mode page including the portrait-mode play window. As shown in FIG. 10C, the electronic device 100 continues to display the screenshot of the landscape-mode page, and draws and displays the portrait-mode page below the screenshot of the landscape-mode page. Herein, the portrait-mode page is a background image layer. The portrait-mode page includes a portrait-mode video play window, and a video picture is displayed in the portrait-mode video play window. Optionally, the portrait-mode page may include a status bar.

S905: Perform a screen freezing cancellation operation.

The electronic device 100 may perform a screen freezing cancellation operation after completing drawing the portrait-mode page. After the electronic device 100 performs the screen freezing cancellation operation, the touchscreen of the electronic device 100 may receive user input.

In some embodiments, the electronic device 100 is playing a video file. After the electronic device 100 performs the screen freezing operation, the electronic device 100 may pause playing the video file. After the electronic device 100 performs the screen freezing cancellation operation, the electronic device 100 may continue to play the video file. In this way, in a process in which the electronic device 100 obtains the portrait-mode page, a video frame does not change, and a quantity of video frames played during the switching is reduced.

In some embodiments, the electronic device 100 may further monitor a screen freezing cancellation event, or monitor a portrait-mode page obtaining event, to obtain image layer information of the portrait-mode page.

For specific descriptions of step S901 to step S905, refer to the embodiment shown in FIG. 4. Details are not described herein again.

S906: Obtain a view region parameter and a rotational image layer of the portrait-mode video play window.

For descriptions of obtaining a view region of the portrait-mode video play window (namely, a second view), refer to the embodiment shown in FIG. 7A and FIG. 7B. Details are not described herein again. In the example provided in FIG. 7A and FIG. 7B, the view region parameter, obtained by the electronic device 100, of the portrait-mode video play window is "0,103,1228,793".

The electronic device 100 may further obtain a rotational image layer (for example, the screenshot image 232 shown in FIG. 2F). The electronic device 100 may obtain the rotational image layer in the following manner: (1) The electronic device 100 may directly use the screenshot of the landscape-mode page as a rotational image layer. (2) When obtaining a view region of the second view (in the portrait-mode display state), the electronic device 100 may capture, based on the obtained view region of the portrait-mode video play window, a screenshot image of the view region, and rotate, translate, and zoom in the screenshot image to obtain a rotational image layer whose size and location are the same as a size and a location of the landscape-mode video play window and in which a direction of a video picture is the same as a direction of a video picture in the landscape-mode video play window.

Optionally, the electronic device 100 may further set a blocking image layer between a screenshot of the portrait-mode page and the rotational image layer. For specific descriptions of the blocking image layer, refer to the embodiment shown in FIG. 2D. Details are not described herein again.

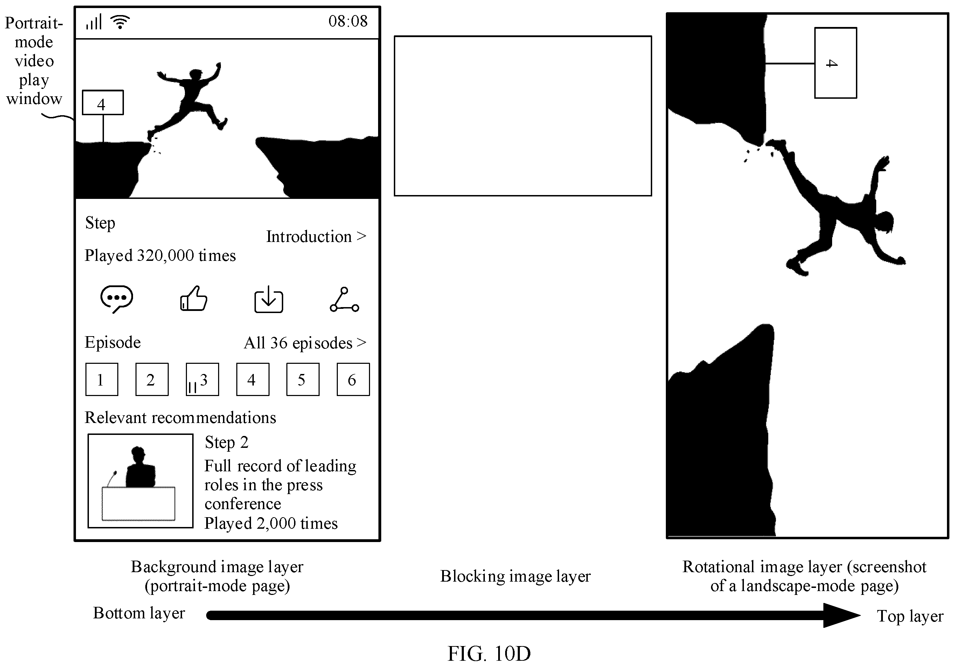

Herein, image layer composition of an interface displayed on the electronic device 100 may be shown in FIG. 10D.

S907: Play a switching animation, and display the portrait-mode page.

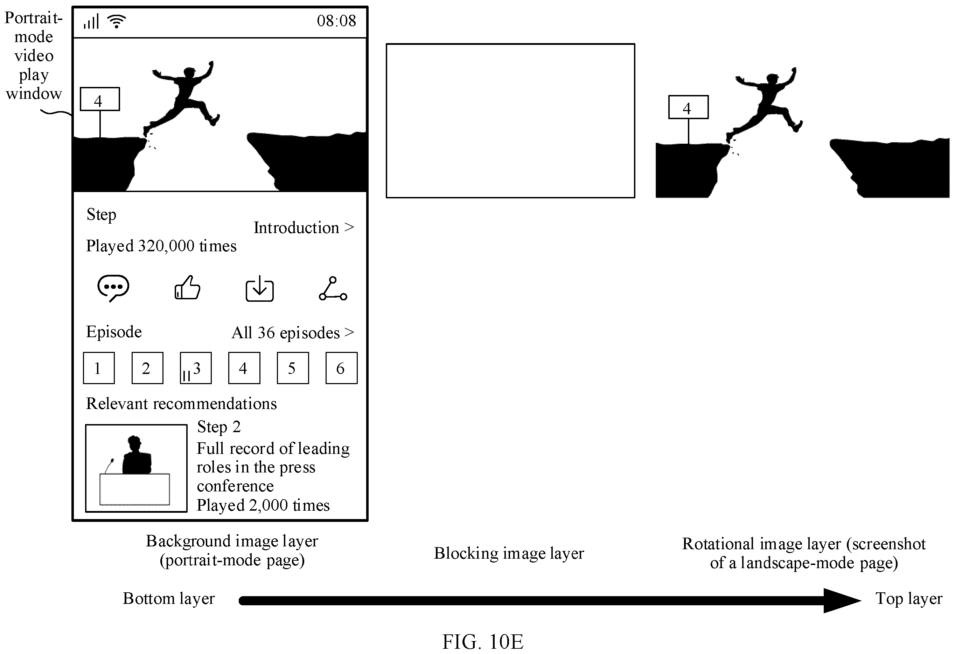

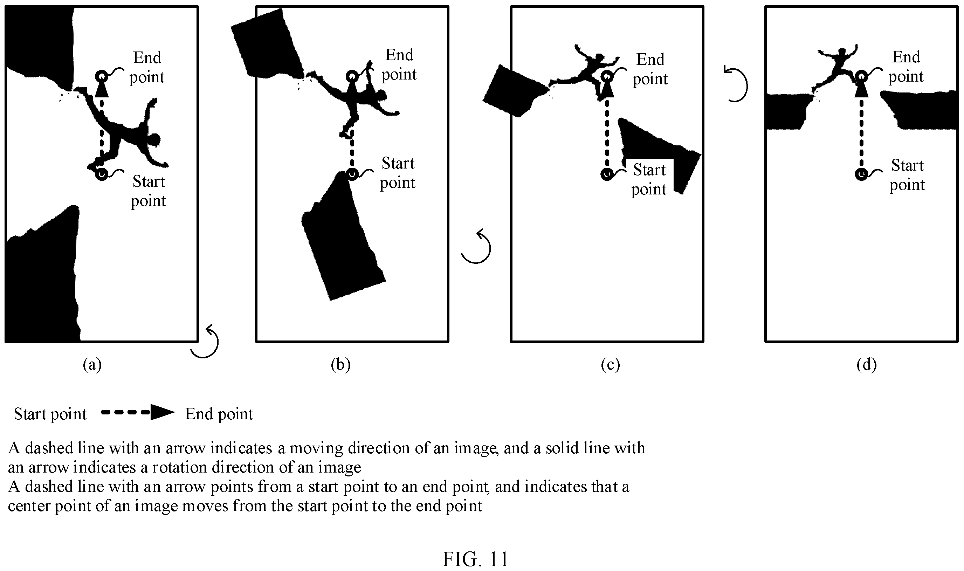

After obtaining the rotational image layer and a view region of a shared element, the electronic device 100 may start to play the switching animation. During the playing of the switching animation, for a rotational image layer shown in FIG. 10D, the electronic device 100 may switch, in a switching manner shown in FIG. 11, the rotational image layer from a landscape-mode video play window shown in FIG. 10D to a portrait-mode video play window shown in FIG. 10E. As shown in FIG. 11, when the electronic device 100 displays an interface shown in FIG. 10D, an image layer center of the rotational image layer displayed on the electronic device 100 is at a start point in (a) in FIG. 11. A size of the rotational image layer is the same as a size of the landscape-mode video play window. The electronic device 100 may translate the rotational image layer in a direction (a counterclockwise direction) indicated by a dashed line with an arrow in (a) in FIG. 11, to move a center point of the rotational image layer from the start point to an end point. During the movement, the electronic device 100 may rotate the rotational image layer in a direction (a counterclockwise direction) indicated by a solid line with an arrow in (a) in FIG. 11. During the movement, the electronic device 100 may gradually reduce a size of the rotational image layer. During entire switching, a rotational image layer shown in (a) in FIG. 11, a rotational image layer shown in (b) in FIG. 11, a rotational image layer shown in (c) in FIG. 11, and a rotational image layer shown in (d) in FIG. 11 may sequentially appear. It should be noted that, that the rotational image layer is rotated in the counterclockwise direction is merely an example, and the electronic device 100 may alternatively control the rotational image layer to rotate in a clockwise direction. This is not limited in embodiments of this application. In some examples, the electronic device 100 may be set to rotate the rotational image layer in the clockwise or counterclockwise direction. In some other examples, the electronic device 100 may set a rotation direction of the rotational image layer based on a rotation direction of the electronic device 100. For example, the electronic device 100 rotates in the clockwise direction, and the rotation direction of the rotational image layer is also the clockwise direction; or the electronic device 100 rotates in the counterclockwise direction, and the rotation direction of the rotational image layer is also the counterclockwise direction. For another example, the electronic device 100 rotates in the clockwise direction, and the rotation direction of the rotational image layer is the counterclockwise direction; or the electronic device 100 rotates in the counterclockwise direction, and the rotation direction of the rotational image layer is the clockwise direction. It should be noted that, if the landscape/portrait mode switching input is input for a landscape/portrait mode switching control, it cannot be determined that the rotation direction of the electronic device 100 is the clockwise direction or the counterclockwise direction. The rotation direction of the rotational image layer may be directly set to the clockwise or counterclockwise direction.

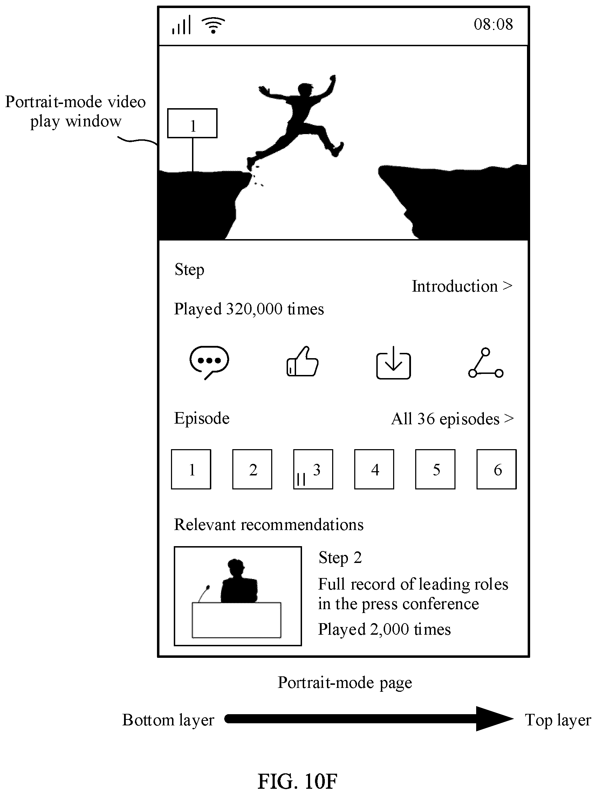

After completing playing the switching animation, the electronic device 100 may display the video play interface 220 shown in FIG. 2C. Image layer composition of the video play interface 220 may be shown in FIG. 10F. As shown in FIG. 10F, after completing playing the switching animation, the electronic device 100 may directly cancel displaying the blocking image layer and the rotational image layer, and display the portrait-mode page.

In some examples, a size of a video picture on the landscape-mode page displayed on the electronic device 100 is less than a size of the display. For example, when the electronic device 100 displays the video picture in the display status shown in (b) in FIG. 3, black borders may exist on the left and the right of the video picture. The electronic device 100 may obtain a width-to-height ratio of a video picture in the landscape-mode video play window and a width-to-height ratio of the display. The electronic device 100 may determine, based on the width-to-height ratio of the video picture and the width-to-height ratio of the display, a region of a video picture obtained by removing the black borders in the landscape-mode video play window, capture a video picture of the region, and use an image of the captured video picture as the rotational image layer. In a process of moving the rotational image layer, the electronic device 100 may move, rotate, and zoom out the rotational image layer from the video picture in the landscape-mode video play window to the portrait-mode video play window.

It should be noted that, because the electronic device 100 takes specific duration to play the switching animation, if the electronic device 100 does not pause playing the video file in a process of playing the switching animation, a video picture displayed on the electronic device 100 in the portrait-mode state is different from a video picture displayed in the landscape-mode state. Herein, a video picture shown in FIG. 10F is located after a video picture shown in FIG. 10A.

In a possible implementation, a rotational image layer may be a video picture played in real time. In this way, the electronic device 100 can make landscape/portrait mode switching effect smoother and improve user experience. In addition, the electronic device 100 does not skip some video frames of a video file while displaying a switching animation, so that a user can continue watching the video file.

In some embodiments, when the electronic device 100 switches from a portrait-mode display state to a landscape-mode display state, the electronic device 100 may directly use a landscape-mode page on which a video file is played in real time as a rotational image layer. It can be understood that, because a start location of the rotational image layer is a location of a portrait-mode video play window, the electronic device 100 needs to first rotate, translate, and zoom out the landscape-mode page to obtain a landscape-mode page whose location and size are the same as the location and a size of the portrait-mode video play window, and then use the obtained landscape-mode page whose location and size are the same as the location and the size of the portrait-mode video play window as the rotational image layer.

Specifically, the electronic device 100 displays a portrait-mode page including the portrait-mode video play window. When receiving input for switching to landscape-mode display, the electronic device 100 may obtain a screenshot of the portrait-mode page in response to the input, and obtain the landscape-mode page including a landscape-mode video play window. The electronic device 100 may zoom out, rotate, and move the landscape-mode page to a location of the landscape-mode video play window. A size and a location of a landscape-mode video play window obtained through the zoom-out, rotation, and movement operations are the same as the size and the location of the portrait-mode video play window, and a direction of a video picture in the landscape-mode video play window is the same as a direction of a video picture in the portrait-mode video play window. Then the electronic device 100 may display the screenshot of the portrait-mode page, and perform, on the screenshot of the portrait-mode page, rotation, translation, zoom-in, and other operations on a transformed landscape-mode page at a location of a portrait-mode video window, to switch the transformed landscape-mode page from the location of the portrait-mode video play window to the landscape-mode video play window. A location and a size of a landscape-mode page obtained through switching are the same as the location and the size of the landscape-mode page obtained by the electronic device 100. It can be understood that, when playing of a switching animation on the electronic device 100 ends, the landscape-mode video play window is right switched to an original view region and displayed. In this way, in a process of switching from the portrait play mode to the landscape play mode, the electronic device 100 may perform, by using a screenshot of the portrait-mode page as a background, rotation, zoom-in, and translation operations only on a video picture that is being played, to smoothly switch from the portrait-mode page to the landscape-mode page. During entire switching, the electronic device 100 may still display, on a display in real time, a video picture of a video file that is being played, to avoid a case in which some video frames are skipped during the switching.

For example, when the electronic device 100 displays the video play interface 220 shown in FIG. 2C, the electronic device 100 may receive input of a user on the switching icon 221B shown in FIG. 2C, and perform, in response to the input, an operation of switching the electronic device 100 from the portrait-mode display state to the landscape-mode display state.

When receiving the input (for example, tap input) performed by the user on the switching icon 221B shown in FIG. 2C, the electronic device 100 may capture an image of the video play interface 220 to obtain a screenshot image, where the screenshot image includes all page content of the video play interface 220. The electronic device 100 may display the screenshot image. When the electronic device 100 displays the screenshot image, composition of displayed image layers may be shown in FIG. 6B. The screenshot image is the background image layer (the screenshot of the portrait-mode page) shown in FIG. 6B. Optionally, the electronic device 100 may further display the portrait-mode page shown in FIG. 6B below the background image layer.

The electronic device 100 may further draw, at a lower layer of the screenshot image, the landscape-mode page including the landscape-mode video play window. For descriptions of the landscape-mode page, refer to the descriptions of the video play interface 240 displayed on the electronic device 100 in FIG. 2G. Herein, the electronic device 100 may display the landscape-mode page and the background image layer (the screenshot of the portrait-mode page) shown in FIG. 6C.

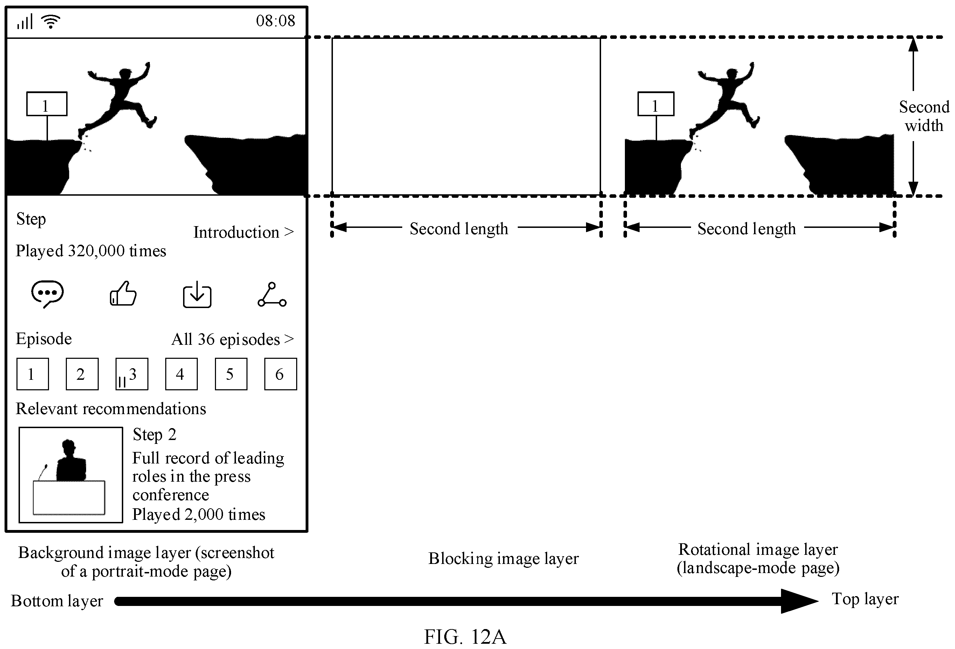

The electronic device 100 may zoom out, move, and rotate the landscape-mode page to obtain a landscape-mode page whose location and size are the same as a location and a size of the video play window 221 shown in FIG. 2C. It should be noted that the electronic device 100 does not display a process of zooming out, moving, and rotating the landscape-mode page. In this way, the user does not see a process of zooming out the landscape-mode page. For example, the electronic device 100 may display a background image layer (a screenshot of a portrait-mode page), a blocking image layer, and a rotational image layer (a landscape-mode page) shown in FIG. 12A. Sizes and locations of the rotational image layer and the blocking image layer are the same as the size and the location of the portrait-mode video play window. The rotational image layer is a landscape-mode page obtained through zoom-out, movement, and rotation. The blocking image layer is a preset image. The preset image may be an image of any color (for example, black or white), or the preset image may be an image including a specified pattern.

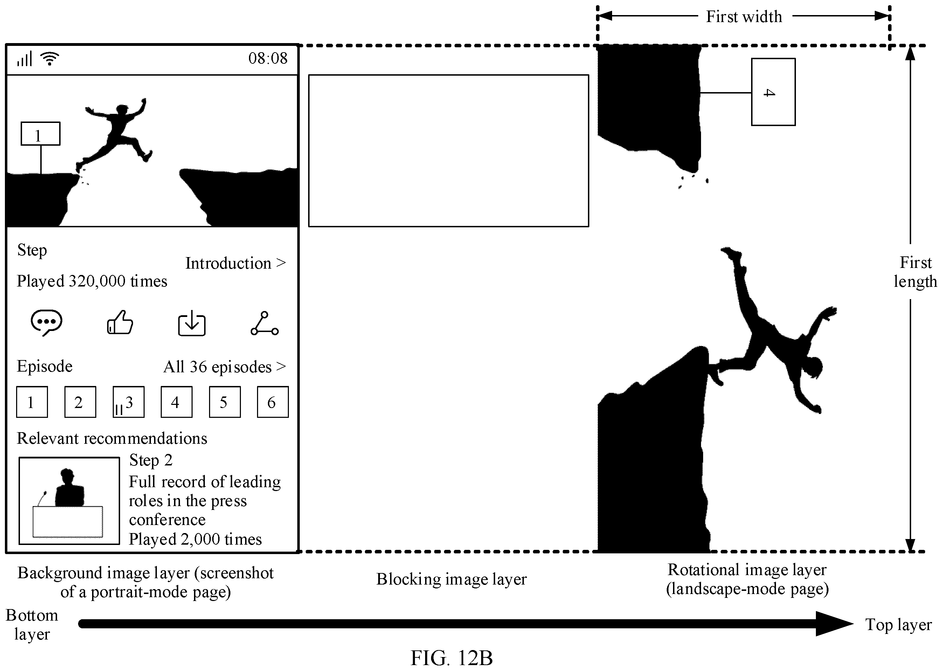

Then the electronic device 100 may rotate, translate, and zoom in the landscape-mode page in the video play window 221 shown in FIG. 2C to obtain the video play interface 240 shown in FIG. 2G. For example, the electronic device 100 may display a background image layer (a screenshot of a portrait-mode page), a blocking image layer, and a rotational image layer (a landscape-mode page) shown in FIG. 12B. A size of the rotational image layer is the same as a size of the portrait-mode page. It can be understood that, when the rotational image layer is transformed into a style shown in FIG. 12B, the electronic device 100 may cancel displaying the background image layer and the blocking image layer, and display only the rotational image layer.

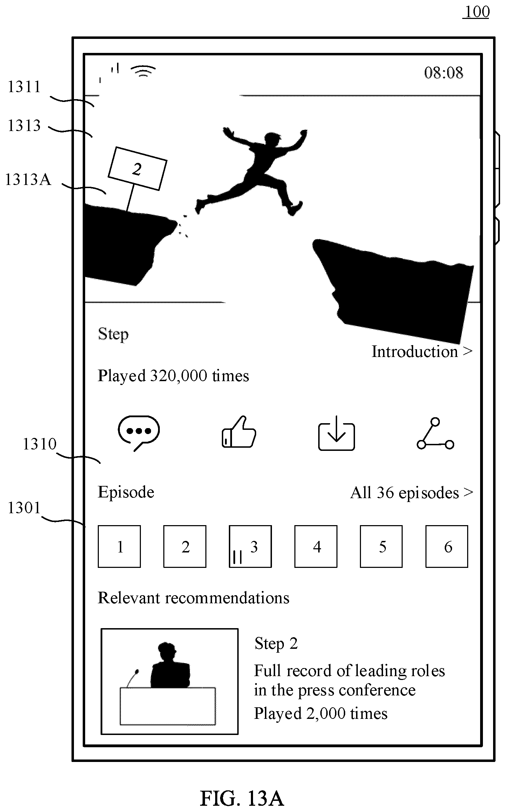

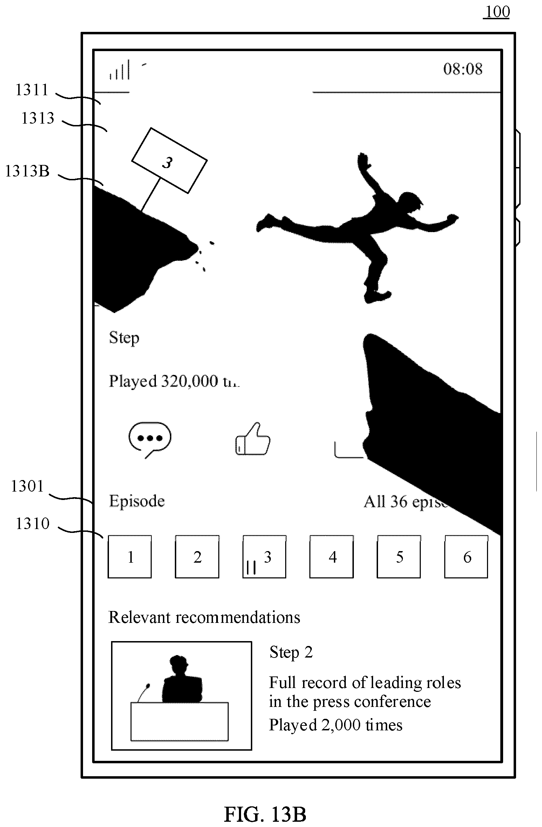

In a process of switching, by the electronic device 100, the landscape-mode page from the portrait-mode video play window to the landscape-mode video play window, a landscape/portrait mode switching interface 1301 shown in FIG. 13A and a landscape/portrait mode switching interface 1301 shown in FIG. 13B may be sequentially displayed.

As shown in FIG. 13A, the landscape/portrait mode switching interface 1301 includes a background image layer 1310, a blocking image layer 1311, and a rotational image layer 1313. The rotational image layer 1313 is obtained based on the landscape-mode page, and the landscape-mode page includes a landscape-mode video play window in which a video is being played. Therefore, a video picture 1313A at the rotational image layer 1313 is different from the video picture 221A shown in FIG. 2C. The video picture 1313A is a video picture located after the video picture 221A in the video file.

As shown in FIG. 13B, the landscape/portrait mode switching interface 1301 includes a background image layer 1310, a blocking image layer 1311, and a rotational image layer 1313. The rotational image layer 1313 is obtained based on the landscape-mode page, and the landscape-mode page includes a landscape-mode video play window in which a video is being played. Therefore, a video picture 1313B at the rotational image layer 1313 is different from the video picture 1313A shown in FIG. 13A. The video picture 1313B is a video picture located after the video picture 1313A in the video file.

The electronic device 100 may display the video play interface 240 shown in FIG. 2G after landscape/portrait mode switching is completed, to be specific, when the rotational image layer 1313 is transformed until a location and a size are the same as a location and a size of the landscape-mode video play window.

In addition to the descriptions of obtaining the rotational image layer, for descriptions of a specific process of switching, by the electronic device 100, from the portrait-mode display state to the landscape-mode display state and descriptions of identifying a region of a shared element, refer to the embodiments shown in FIG. 4 to FIG. 8. Details are not described herein again.

In some embodiments, a size of a video picture on the landscape-mode page may be less than a size of a touchscreen. Because the size of the video picture on the landscape-mod page is different from the size of the touchscreen, black borders may exist on the left and the right of the video picture. The electronic device 100 may obtain a width-to-height ratio of the video picture on the landscape-mode page and a width-to-height ratio of the display. The electronic device 100 may determine, based on the width-to-height ratio of the video picture and the width-to-height ratio of the display, a region of a video picture obtained by removing the black borders in the landscape-mode video play window. The electronic device 100 may switch content of a region other than the video picture on the landscape-mode page from a visible state (for example, transparency is 0%) to an invisible state (for example, transparency is 100%), zoom out the video picture on the landscape-mode page until a size is the same as a size of the portrait-mode video play window, rotate and move the video picture on the landscape-mode page to the portrait-mode video play window, and then use the landscape-mode page as a rotational image layer. When playing a switching animation, the electronic device 100 may rotate, move, and zoom in the rotational image layer to a region of the landscape-mode page, and then switch an invisible part from an invisible state to a visible state. This can avoid appearance of black borders during the switching.

In some other embodiments, when the electronic device 100 switches from a landscape-mode display state to a portrait-mode display state, the electronic device 100 may first capture and display a screenshot of a landscape-mode page, and obtain a portrait-mode page. Then the electronic device 100 may use a screenshot of the portrait-mode page as a background image layer, and use the portrait-mode page as a rotational image layer. It can be understood that, because a start location of a video window is a location of a landscape-mode video play window during the switching from the landscape-mode display state to the portrait-mode display state, the electronic device 100 needs to first switch a part of the portrait-mode page other than a portrait-mode video play window from a visible state to an invisible state, and then rotate, translate, and zoom in the portrait-mode page to transform the portrait-mode video play window on the portrait-mode page until a location and a size of the portrait-mode video play window are the same as the location and a size of the landscape-mode video play window and a direction of a video picture in the portrait-mode video play window is the same as a direction of a video picture in the landscape-mode video play window, and then use a transformed portrait-mode page as a rotational image layer.

Specifically, the electronic device 100 displays the landscape-mode page including the landscape-mode video play window. When receiving input for switching to portrait-mode display, the electronic device 100 may obtain and display the screenshot of the landscape-mode page in response to the input, and draw the portrait-mode page including the portrait-mode video play window below the screenshot of the landscape-mode page. After drawing the complete portrait-mode page, the electronic device 100 may capture an image of the portrait-mode page, use a screenshot of the portrait-mode page as a background image layer, and use the portrait-mode page as a rotational image layer. The electronic device 100 may perform rotation, movement, and zoom-in operations on the portrait-mode page to switch the portrait-mode video play window on the portrait-mode page from a first region to a second region. The first region is a display region of the portrait-mode video play window on the portrait-mode page. The second region is a display region of the landscape-mode video play window on the landscape-mode page. It can be understood that a location and a size of the portrait-mode video play window displayed after the switching are the same as a location and a size of the first region. The electronic device 100 does not display a process of switching the portrait-mode video play window on the portrait-mode page from the first region to the second region.

The electronic device 100 may alternatively set all page content on the portrait-mode page other than the portrait-mode video play window to an invisible state (for example, transparency is set to 100%), and then perform rotation, movement, and zoom-out operations on the portrait-mode page to switch the portrait-mode video window on the portrait-mode page from the second region to the first region. After the portrait-mode video window on the portrait-mode page is switched from the second region to the first region, the electronic device 100 may set all page content other than the portrait-mode video play window to a visible state (for example, transparency is set to 0%). The electronic device 100 may display a process of switching the portrait-mode video window on the portrait-mode page from the second region to the first region. In this process, playing of a video file continues in the portrait-mode video play window on the electronic device 100. In this way, in a process of switching from a landscape play mode to a portrait play mode, the electronic device 100 may smoothly switch from the landscape-mode page to the portrait-mode page by using the screenshot of the portrait-mode page as a background and by capturing the portrait-mode page as a rotational image layer. In a process in which the electronic device 100 switches from the landscape-mode display state to the portrait-mode display state, the electronic device 100 may still display, on a display in real time, a video picture of the video file that is being played, to avoid skipping some video frames of the video file during the switching. This enables a user to continuously watch a video picture.

For example, when the electronic device 100 displays the video play interface 240 shown in FIG. 2G, the electronic device 100 may receive landscape/portrait mode switching input of a user, and perform, in response to the input, an operation of switching the electronic device 100 from a landscape-mode display state to a portrait-mode display state. Herein, the landscape/portrait mode switching input may be input for a switching control (not shown in the figure) on a landscape-mode page, or may be input of rotating the electronic device 100. For details, refer to the embodiments shown in FIG. 2C to FIG. 2G. Details are not described herein again.

When receiving the landscape/portrait mode switching input, the electronic device 100 may capture an image of the video play interface 240 shown in FIG. 2G, and display a screenshot image of the video play interface 240. The electronic device 100 may display the screenshot image above the landscape-mode page, as shown in FIG. 10B, or the electronic device 100 may display only the screenshot image.

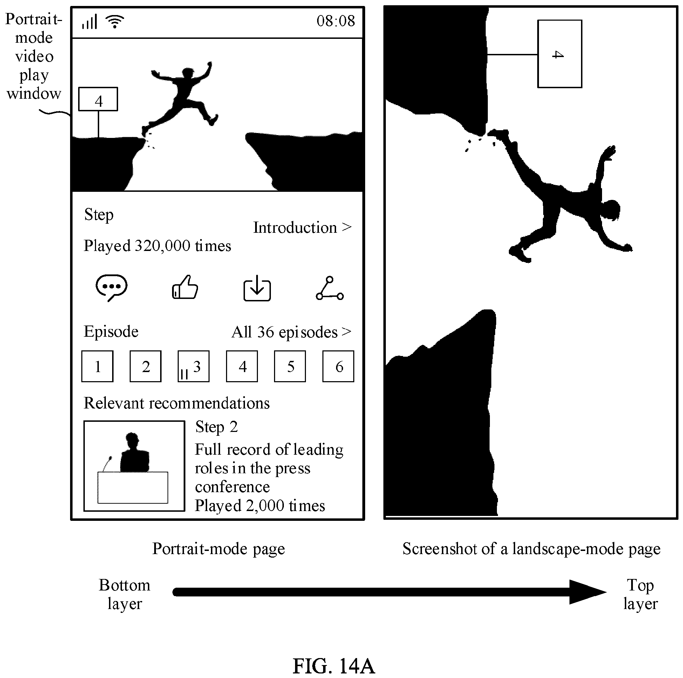

The electronic device 100 may draw, below the screenshot image, a portrait-mode page including a portrait-mode video play window. As shown in FIG. 14A, the electronic device 100 may display the portrait-mode page and a screenshot of the landscape-mode page.

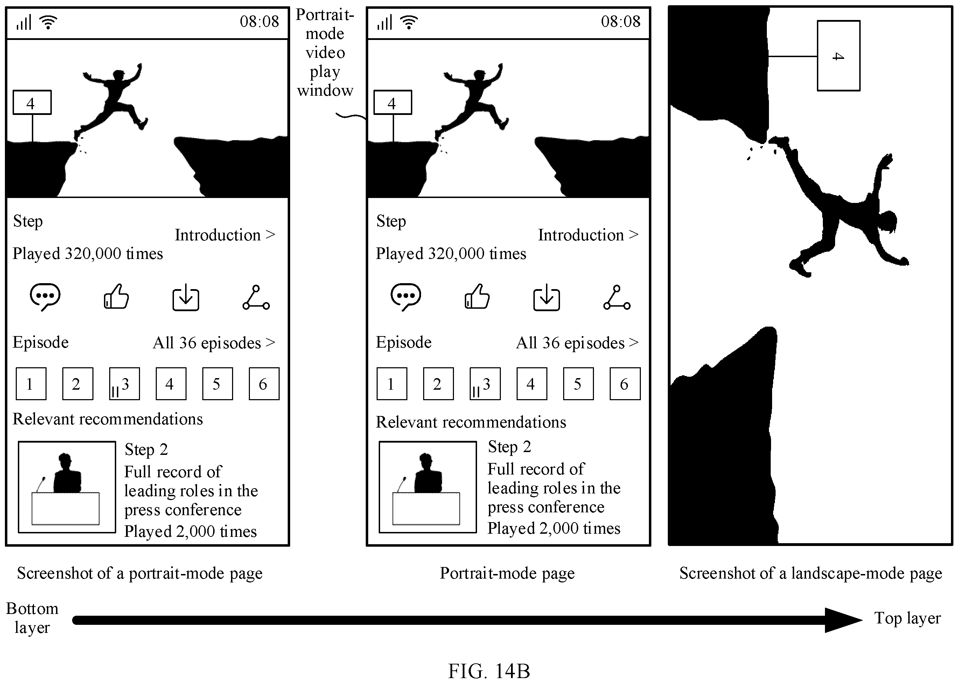

After drawing the portrait-mode page, the electronic device 100 may obtain a view region of the portrait-mode video window on the portrait-mode page, and obtain a screenshot of the portrait-mode page. The electronic device 100 may display the screenshot of the portrait-mode page below the portrait-mode page, as shown in FIG. 14B. In some embodiments, the electronic device 100 may set the screenshot of the landscape-mode page to an invisible state or a transparent state (for example, set transparency of the screenshot of the landscape-mode page to 100%), and then capture an image on a screen to obtain the screenshot of the portrait-mode page. It should be noted that, in addition to the screenshot of the portrait-mode page, the electronic device 100 may alternatively obtain an image of the portrait-mode page by using an HWC, and use the image as a background image layer. In this way, the electronic device 100 can obtain the background image layer without taking a screenshot.

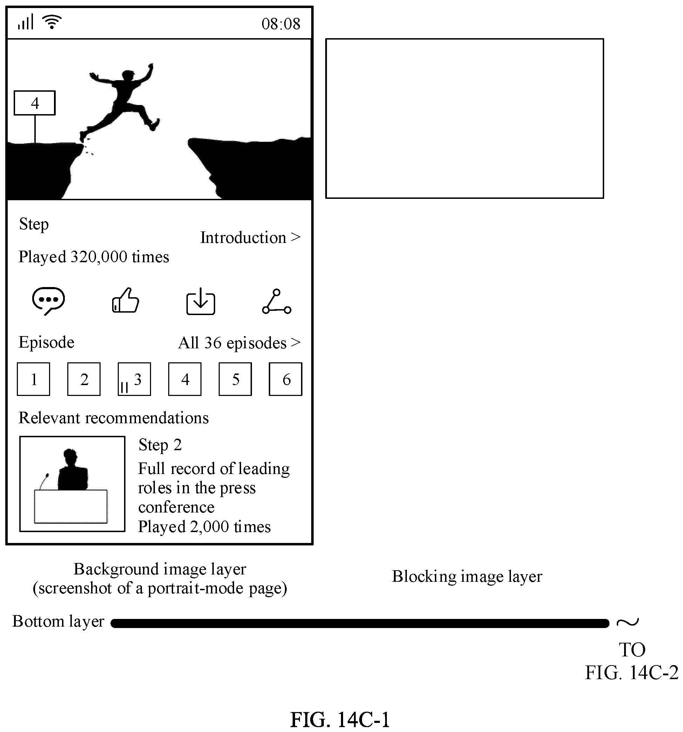

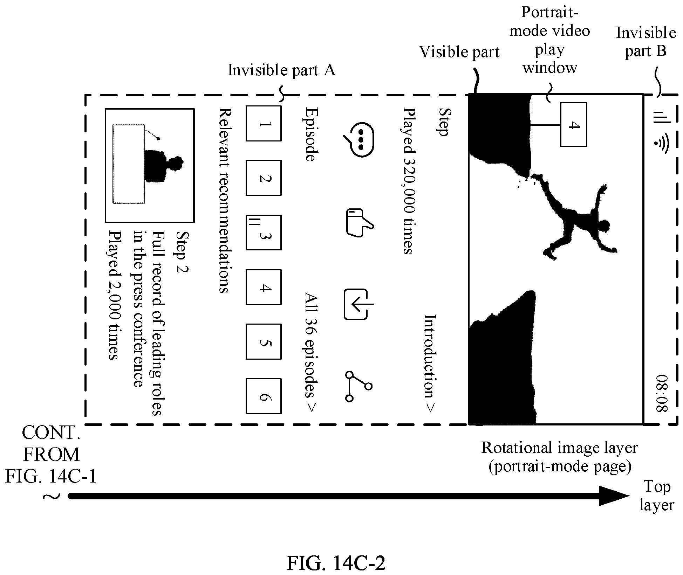

Because the electronic device 100 is currently switching from the landscape-mode display state to the portrait-mode display state, the electronic device 100 needs to obtain a portrait-mode video play window in which a location and a size of a display region are the same as a location and a size of a display region of a landscape-mode video play window. The electronic device 100 may rotate, translate, and zoom in the portrait-mode page to obtain a rotational image layer shown in FIG. 14C-2, where a visible part of the rotational image layer is the same as the view region of the landscape-mode video play window. It should be noted that, to prevent a page element (for example, a video episode or a status bar) other than a video window from appearing on the portrait-mode page in a process in which the rotational image layer switches from a view region of the landscape-mode video play window to a view region of the portrait-mode video play window, the electronic device 100 may switch a page part of the portrait-mode page other than the view region of the portrait-mode video play window from a visible state to an invisible state, for example, an invisible part A and an invisible part B shown in FIG. 14C-2. Both the invisible part A and the invisible part B are set to be transparent (for example, transparency is set to 100%). It can be understood that the portrait-mode video play window is a visible part, and herein, the rotational image layer is the portrait-mode page. It should be noted that the electronic device 100 does not display a process of switching from the portrait-mode page to the landscape-mode video play window.

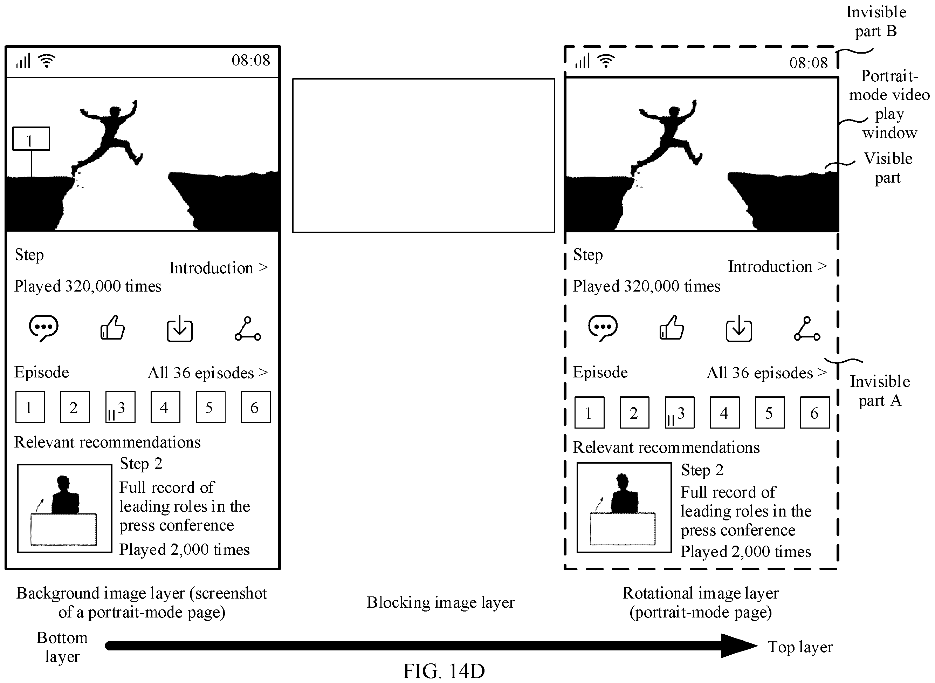

Then the electronic device 100 may rotate, translate, and zoom out the rotational image layer in the video play window 241 shown in FIG. 2G to obtain the video play interface 220 shown in FIG. 2C. For example, the electronic device 100 may display a background image layer (the screenshot of the portrait-mode page), a blocking image layer, and a rotational image layer (the portrait-mode page, where the portrait-mode page includes the invisible part A and the invisible part B) shown in FIG. 14D. A size of the rotational image layer is the same as a size of the portrait-mode page. It can be understood that, when the rotational image layer is transformed into a style shown in FIG. 14D, the electronic device 100 may cancel displaying the background image layer and the blocking image layer, and display only the rotational image layer. It should be noted that, when displaying only the rotational image layer, the electronic device 100 may switch the invisible part A and the invisible part B of the rotational image layer (the portrait-mode page) from an invisible state to a visible state. Optionally, some portrait-mode pages do not include the invisible part B.

In a process of switching, by the electronic device 100, the rotational image layer from the landscape-mode video play window to the portrait-mode video play window, a landscape/portrait mode switching interface 1301 shown in FIG. 13B and a landscape/portrait mode switching interface 1301 shown in FIG. 13A may be sequentially displayed. As shown in FIG. 13B, the landscape/portrait mode switching interface 1301 includes a background image layer 1310, a blocking image layer 1311, and a rotational image layer 1313. The rotational image layer 1313 is obtained based on the portrait-mode page. Because a video is being played in the portrait-mode video play window, content (a video picture displayed in the portrait-mode video play window) of the rotational image layer 1313 varies with playing of a video file. Therefore, a video picture 1313B at the rotational image layer 1313 is different from the video picture 241A shown in FIG. 2G. The video picture 1313B is a video picture located after the video picture 241A in the video file.

As shown in FIG. 13A, the landscape/portrait mode switching interface 1301 includes a background image layer 1310, a blocking image layer 1311, and a rotational image layer 1313. The rotational image layer 1313 is obtained based on the portrait-mode page. Because a video is being played in the portrait-mode video play window, content (a video picture displayed in the portrait-mode video play window) of the rotational image layer 1313 varies with playing of a video file. Therefore, a video picture 1313A at the rotational image layer 1313 is different from the video picture 1313B shown in FIG. 13B. Therefore, the video picture 1313B at the rotational image layer 1313 is different from the video picture 1313A shown in FIG. 13A. The video picture 1313A is a video picture located after the video picture 1313B in the video file.

The electronic device 100 may display the video play interface 220 shown in FIG. 2C after landscape/portrait mode switching is completed, to be specific, when the rotational image layer 1313 is transformed to be the same as the portrait-mode page.

In addition to the descriptions of obtaining the rotational image layer, for descriptions of a specific process of switching, by the electronic device 100, from the landscape-mode display state to the portrait-mode display state and descriptions of identifying a region of a shared element, refer to the embodiments shown in FIG. 9 to FIG. 11. Details are not described herein again.

In some other embodiments, when the electronic device 100 switches from a landscape-mode display state to a portrait-mode display state, a rotational image layer includes an image, captured at first frequency, of a portrait-mode video play window. It can be understood that, because a start location of a video window is a location of a landscape-mode video play window during the switching from the landscape-mode display state to the portrait-mode display state, the electronic device 100 needs to first rotate, translate, and zoom out the image of the portrait-mode video play window to obtain an image, of the portrait-mode video play window, whose location and size are the same as the location and a size of the landscape-mode video play window and in which a direction of a video picture is the same as a direction of a video picture in the landscape-mode video play window. The first frequency may be preset frequency. For example, 10 frames of images are captured per second. Alternatively, the first frequency may be a frame rate of a video picture.

Specifically, the electronic device 100 displays a landscape-mode page including the landscape-mode video play window. When receiving input for switching to portrait-mode display, the electronic device 100 may obtain and display a screenshot of the landscape-mode page in response to the input. The electronic device 100 may draw, below the screenshot of the landscape-mode page, a portrait-mode page including the portrait-mode video play window. Then the electronic device 100 may place the rotational image layer on the portrait-mode page, where the rotational image layer includes the image, captured at the first frequency, of the portrait-mode video play window.

The rotational image layer is at a display location of the landscape-mode video play window at the beginning, and a size of the rotational image layer and a direction of an image displayed at the rotational image layer are the same as the size and an image direction of the landscape-mode video play window. Therefore, the electronic device 100 may perform rotation, translation, and zoom-in operations on a captured image, and place the image on the landscape-mode video play window, and a size and a location of the image on which the zoom-in, rotation, and movement operations are performed are the same as the size and the location of the landscape-mode video play window. Then the electronic device 100 may cancel displaying the screenshot of the landscape-mode page, and display the rotational image layer above the portrait-mode page. The electronic device 100 may alternatively perform rotation, translation, and zoom-out operations on the rotation above the portrait-mode page at a location of a landscape-mode video window, to switch the rotational image layer from the location of the landscape-mode video play window to the portrait-mode video play window. A location and a size of the rotational image layer displayed after the switching are the same as a location and a size of the portrait-mode video play window. It can be understood that a size, a location, and a direction of the image, captured by the electronic device 100, of the portrait-mode video play window vary with the rotational image layer.

It can be understood that, when playing of a switching animation on the electronic device 100 ends, displaying of the real-time image may be canceled. In this way, in a process of switching from a landscape play mode to a portrait play mode, the electronic device 100 may smoothly switch from the landscape-mode page to the portrait-mode page by using the portrait-mode page as a background and by capturing a video picture of the portrait-mode video play window as a rotational image layer. During entire switching, the electronic device 100 may still display, on a display in real time, a video picture of a video file that is being played, to avoid a case in which some video frames are skipped during the switching.

For example, when the electronic device 100 displays the video play interface 240 shown in FIG. 2G, the electronic device 100 may receive landscape/portrait mode switching input of a user, and perform, in response to the input, an operation of switching the electronic device 100 from a landscape-mode display state to a portrait-mode display state. Herein, the landscape/portrait mode switching input may be input for a switching control (not shown in the figure) on a landscape-mode page, or may be input of rotating the electronic device 100. For details, refer to the embodiments shown in FIG. 2C to FIG. 2G. Details are not described herein again.

When receiving the landscape/portrait mode switching input, the electronic device 100 may capture an image of the video play interface 240 shown in FIG. 2G, and display a screenshot image of the video play interface 240. The electronic device 100 may display the screenshot image above the landscape-mode page, as shown in FIG. 10B, or the electronic device 100 may display only the screenshot image.

The electronic device 100 may draw, below the screenshot image, a portrait-mode page including a portrait-mode video play window. As shown in FIG. 10C, the electronic device 100 may display the portrait-mode page and a screenshot of the landscape-mode page. The portrait-mode page is a background image layer.

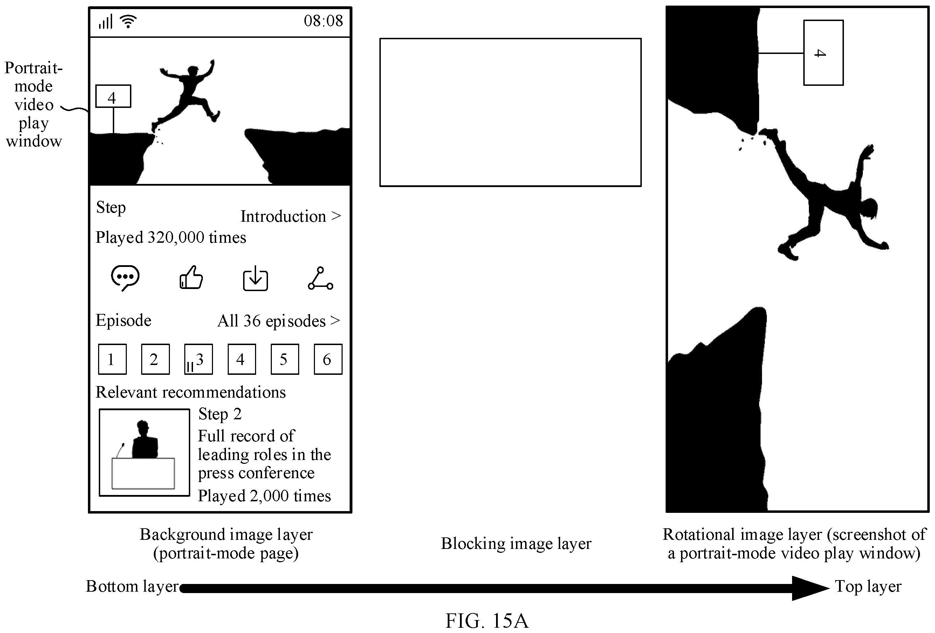

After drawing the portrait-mode page, the electronic device 100 may obtain a view region of a portrait-mode video window on the portrait-mode page, and capture an image of the portrait-mode video play window based on the view region, to obtain a screenshot of the portrait-mode video play window. Because the electronic device 100 is currently switching from the landscape-mode display state to the portrait-mode display state, the electronic device 100 needs to obtain a rotational image layer whose region is the same as a region of the landscape-mode video play window. The electronic device 100 may rotate, translate, and zoom in the screenshot of the portrait-mode video play window to obtain a rotational image layer shown in FIG. 15A, where a view region of the rotational image layer is the same as a view region of the landscape-mode video play window. It should be noted that the electronic device 100 does not display a process of switching from the screenshot of the portrait-mode video play window to the landscape-mode video play window.

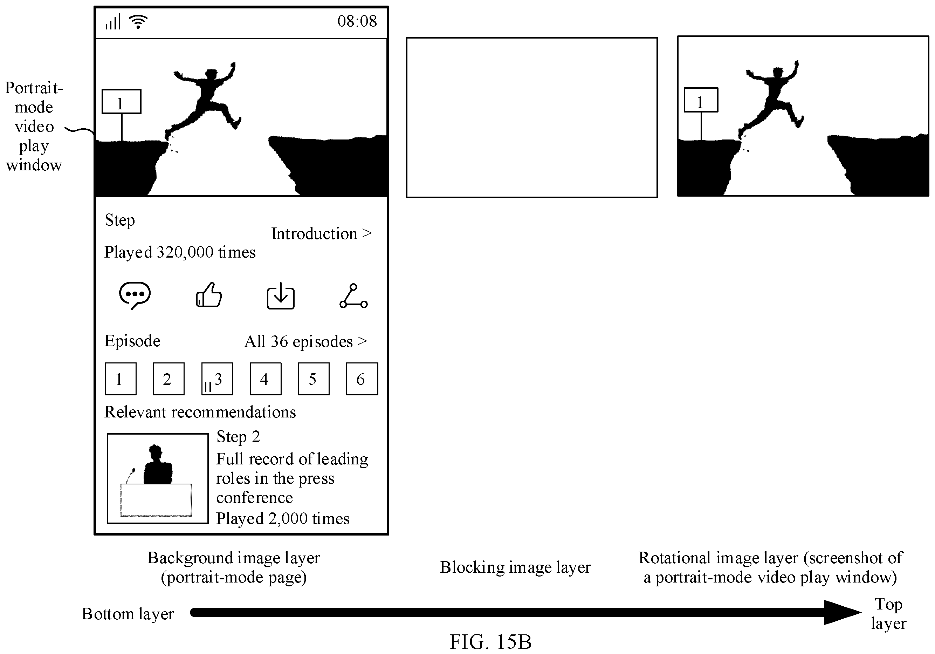

Then the electronic device 100 may rotate, translate, and zoom out the rotational image layer in the video play window 241 shown in FIG. 2G to obtain the video play interface 220 shown in FIG. 2C. For example, the electronic device 100 may display a background image layer (the portrait-mode page), a blocking image layer, and a rotational image layer (the screenshot of the portrait-mode video play window) shown in FIG. 15B. A size of the rotational image layer is the same as a size of the portrait-mode video play window. It can be understood that, when the rotational image layer is transformed into a style shown in FIG. 15B, the electronic device 100 may cancel displaying the rotational image layer and the blocking image layer, and display only the background image layer.

In a process of switching, by the electronic device 100, the rotational image layer from the landscape-mode video play window to the portrait-mode video play window, a landscape/portrait mode switching interface 1301 shown in FIG. 13B and a landscape/portrait mode switching interface 1301 shown in FIG. 13A may be sequentially displayed. As shown in FIG. 13B, the landscape/portrait mode switching interface 1301 includes a background image layer 1310, a blocking image layer 1311, and a rotational image layer 1313. The rotational image layer 1313 is obtained based on the screenshot of the portrait-mode video play window. Because a video is being displayed in the portrait-mode video play window, content of the screenshot of the portrait-mode video play window varies with a video picture in the portrait-mode video play window. Therefore, a video picture 1313B at the rotational image layer 1313 is different from the video picture 241A shown in FIG. 2G. The video picture 1313B is a video picture located after the video picture 241A in the video file.

As shown in FIG. 13A, the landscape/portrait mode switching interface 1301 includes a background image layer 1310, a blocking image layer 1311, and a rotational image layer 1313. The rotational image layer 1313 is obtained based on the screenshot of the portrait-mode video play window. Because a video is being displayed in the portrait-mode video play window, content of the screenshot of the portrait-mode video play window varies with the portrait-mode video play window. Therefore, a video picture 1313A at the rotational image layer 1313 is different from the video picture 1313B shown in FIG. 13B. Therefore, the video picture 1313B at the rotational image layer 1313 is different from the video picture 1313A shown in FIG. 13A. The video picture 1313A is a video picture located after the video picture 1313B in the video file.

The electronic device 100 may display the video play interface 220 shown in FIG. 2C after landscape/portrait mode switching is completed, to be specific, when the rotational image layer 1313 is transformed until a view region is the same as a view region of the portrait-mode video play window.

In addition to the descriptions of obtaining the rotational image layer, for descriptions of a specific process of switching, by the electronic device 100, from the landscape-mode display state to the portrait-mode display state and descriptions of identifying a region of a shared element, refer to the embodiments shown in FIG. 9 to FIG. 11. Details are not described herein again.

In a possible implementation, when switching from a landscape-mode display state to a portrait-mode display state, the electronic device 100 needs to take a screenshot of a video frame of a portrait-mode video window and then perform transformation, to be specific, needs to draw both content of the portrait-mode video window and content of a rotational image layer. Therefore, power consumption for displaying a video picture captured at first frequency in a process of switching from the landscape-mode display state to the portrait-mode display state is higher than power consumption for displaying a video picture played in real time in a process of switching from the portrait-mode display state to the landscape-mode display state. Therefore, to reduce power consumption, the electronic device 100 may use a frame of screenshot of the video picture as a rotational image layer in the process of switching from the landscape-mode display state to the portrait-mode display state, and may use the video picture played in real time as a rotational image layer in the process of switching from the portrait-mode display state to the landscape-mode display state. Specific descriptions of a landscape/portrait mode switching process of the electronic device 100 are shown in the foregoing embodiments. Details are not described herein again.

The following describes an electronic device 100 provided in embodiments of this application.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home appliance, and/or a smart city device. A specific type of the electronic device is not particularly limited in embodiments of this application.

FIG. 16 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device 100. In some other embodiments of this application, the electronic device 100 may include more or fewer components than those shown in the figure, some components may be combined, some components may be split, or there may be different component layouts. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to control instruction reading and instruction execution.

A memory may be further disposed in the processor 110 to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It can be understood that an interface connection relationship between the modules in this embodiment of the present invention is merely an example for description, and does not constitute a limitation on a structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive charging input from a charger. The charger may be a wireless charger or a wired charger. In some embodiments in which wired charging is used, the charging management module 140 may receive charging input from a wired charger through the USB interface 130. In some embodiments in which wireless charging is used, the charging management module 140 may receive wireless charging input through a wireless charging coil of the electronic device 100. The charging management module 140 may further supply power to the electronic device through the power management module 141 while charging the battery 142.

The power management module 141 is connected to the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery state of health (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium- or highfrequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, and the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution applied to the electronic device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more devices integrating at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 implements a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and color temperature of a photographing scene. In some embodiments, the ISP may be disposed in the camera 193.

The camera 193 is configured to capture a static image or a video. An optical image of an object is generated through the lens, and is projected onto the photosensitive element. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The internal memory 121 may be configured to store computer-executable program code. The executable program code includes instructions. The processor 110 implements various function applications and data processing of the electronic device 100 by running the instructions stored in the internal memory 121. The internal memory 121 may include a program storage region and a data storage region. The program storage region may store an operating system, an application program for at least one function (for example, a sound play function or an image play function), and the like. The data storage region may store data (for example, audio data and an address book) and the like that are created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music play and recording, through the audio module 170, the speaker 170A, the receiver 170B, the microphone 170C, the headset jack 170D, the application processor, and the like.

The audio module 170 is configured to convert digital audio information into analog audio signal output, and is also configured to convert analog audio input into a digital audio signal. The speaker 170A, also referred to as a "loudspeaker", is configured to convert an electrical audio signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal.

The headset jack 170D is used for connecting a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194.

The gyroscope sensor 180B may be configured to determine a motion attitude of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used in a navigation scenario and a somatic game scenario.

The barometric pressure sensor 180C is configured to measure barometric pressure. The magnetic sensor 180D includes a Hall effect sensor, and may detect opening and closing of a flip leather case by using the magnetic sensor 180D.

The acceleration sensor 180E may detect accelerations in various directions (usually on three axes) of the electronic device 100, may detect a magnitude and a direction of gravity when the electronic device 100 is still, and may be further configured to recognize an attitude of the electronic device and used in applications such as landscape/portrait mode switching and a pedometer.

The distance sensor 180F is configured to measure a distance. The optical proximity sensor 180G may also be used in a smart cover mode or a pocket mode for automatic screen unlocking or locking. The ambient light sensor 180L is configured to sense ambient light brightness. The fingerprint sensor 180H is configured to capture a fingerprint. The temperature sensor 180J is configured to detect temperature. The touch sensor 180K is also referred to as a "touch panel". The touch sensor 180K may be disposed on the display 194, and the touch sensor 180K and the display 194 constitute a touchscreen, which is also referred to as a "touch control screen". The touch sensor 180K is configured to detect a touch operation performed on or near the touch sensor. The touch sensor may transmit the detected touch operation to the application processor to determine a type of a touch event. Visual output related to the touch operation may be provided by using the display 194. In some other embodiments, the touch sensor 180K may alternatively be disposed on a surface of the electronic device 100 at a location different from a location of the display 194. The bone conduction sensor 180M may obtain a vibration signal. The button 190 includes a power button, a volume button, and the like. The motor 191 may generate a vibration prompt. The indicator 192 may be an indicator light, and may be configured to indicate a charging status and a battery level change, or may be configured to indicate a message, a missed call, a notification, and the like. The SIM card interface 195 is used for connecting a SIM card.

The following describes a diagram of a software structure of an electronic device 100 provided in embodiments of this application.

A software system of the electronic device 100 may use a hierarchical architecture, an event-driven architecture, a microkernel architecture, a micro service architecture, or a cloud architecture. In embodiments of the present invention, an operating system with a hierarchical architecture is used as an example to illustrate the software structure of the electronic device 100.

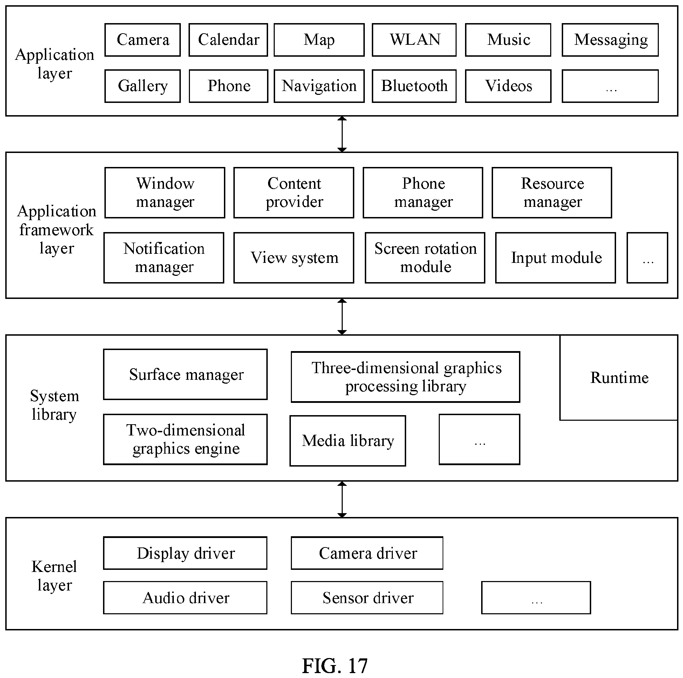

FIG. 17 is a block diagram of a software structure of an electronic device 100 according to an embodiment of the present invention.

In a hierarchical architecture, software is divided into several layers, and each layer has a clear role and task. The layers communicate with each other through a software interface. In some embodiments, an operating system is divided into four layers: an application layer, an application framework layer, a runtime (runtime) and system library, and a kernel layer from top to bottom.

The application layer may include a series of application packages.

As shown in FIG. 17, the application packages may include applications such as Camera, Gallery, Calendar, Phone, Map, Navigation, WLAN, Bluetooth, Music, Videos, and Messaging. A video application may be used to provide data for composing a portrait-mode page including a portrait-mode video play window and a landscape-mode page including a landscape-mode video play window. The display method provided in embodiments of this application may be used to provide a landscape/portrait mode switching animation for the video application. It should be noted that, in addition to the video application, all applications that can provide a video play function, such as a browser application and an information application, may be used to provide data for composing a portrait-mode page including a portrait-mode video play window and a landscape-mode page including a landscape-mode video play window. The display method provided in embodiments of this application may be used to provide landscape/portrait mode switching animations for these applications. The video application, the browser application, the information application, and the like may be referred to as a first application.

The application framework layer provides an application programming interface (application programming interface, API) and a programming framework for an application at the application layer. The application framework layer includes some predefined functions.

As shown in FIG. 17, the application framework layer may include a window manager, a content provider, a view system, a phone manager, a resource manager, a notification manager, a screen rotation module, an input module, and the like.

The input module may be configured to detect landscape/portrait mode switching input of a user, and notify the window manager when detecting landscape/portrait mode switching input.

The window manager is configured to manage a window program. The window manager may obtain a size of a display, determine whether there is a status bar, perform screen locking, capture a screen image, and the like. In this embodiment of this application, the window manager may be configured to take a screenshot to obtain a background image layer or a rotational image layer. The window management module may be further configured to perform a screen freezing operation and a screen freezing cancellation operation, and play a landscape/portrait mode switching animation after the screen freezing cancellation operation is performed.

The content provider is configured to store and obtain data, and enable the data to be accessed by an application. The data may include a video, an image, audio, calls that are made and answered, a browsing history, a bookmark, an address book, and the like. In this embodiment of this application, the content provider may be configured to provide video data.

The view system includes visual controls, such as a control for displaying text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on the screen in a form of a dialog window. For example, text information is displayed in the status bar, a prompt tone is played, the electronic device vibrates, or an indicator blinks.

The screen rotation module may be configured to: when receiving a notification message from the window management module, invoke the page composition module to compose a page to be displayed after a landscape/portrait mode switching operation is performed. The screen rotation module may be further configured to transmit data (for example, a page to be displayed after switching and a display region of a shared element) for composing a switching animation to an animation module, and indicate the animation module to load the switching animation.

It should be noted that division into the modules at the application framework layer is merely an example, and this example does not constitute a specific limitation on the electronic device 100. In some other embodiments of this application, the electronic device 100 may include more or fewer modules than those shown in the figure, some modules may be combined, some modules may be split, or there may be different module layouts. For example, the input module may be combined with the window manager. For another example, all modules at the application framework layer that are configured to compose a landscape/portrait mode switching animation may be collectively referred to as a landscape/portrait mode switching unit. This is not limited in this application.

The runtime may be all code libraries, frameworks, and the like that are needed for running a program. For example, for the C language, the runtime includes a series of function libraries needed for running a C program. For the Java language, the runtime includes a kernel library and a virtual machine, and the kernel library may include a function that needs to be invoked by the Java language. The application layer and the application framework layer run on the virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL). In this embodiment of this application, the three-dimensional graphics processing library includes a SurfaceFlinger that may be configured to obtain image layer information and determine a view region of a shared element.

The surface manager is configured to manage a display subsystem, and provide fusion of 2D and 3D layers for a plurality of applications.

The media library supports play and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes a diagram of modules of an electronic device 100 according to an embodiment of this application.

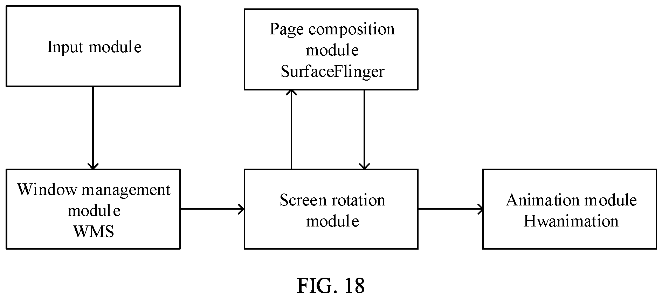

As shown in FIG. 18, the electronic device 100 may include a page composition (SurfaceFlinger) module, a window management (window manager service, WMS) module, an animation (huaweianimation, Hwanimation) module, an input module, and a screen rotation module.

The input module may be configured to recognize landscape/portrait mode switching input of a user. When detecting landscape/portrait mode switching input, the input module may indicate the window management module to start to perform a landscape/portrait mode switching operation. The landscape/portrait mode switching input may include but is not limited to input for a landscape/portrait mode switching control (for example, the switching control 221B shown in FIG. 2C), input of rotating the electronic device 100 clockwise or counterclockwise by a first angle, input of rotating the electronic device 100 at a first acceleration, and the like. If the landscape/portrait mode switching input is the input for the landscape/portrait mode switching control, a landscape/portrait mode switching input event may be sent to the input module to provide the input for the landscape/portrait mode switching control. The input module receives the landscape/portrait mode switching input event, and may indicate the window management module to start to perform a landscape/portrait mode switching operation. That the input module receives the landscape/portrait mode switching input event may be understood as that the input module detects the landscape/portrait mode switching input.

The window management module may be configured to: when receiving a notification from the input module, indicate the screen rotation module to obtain a page to be displayed after landscape/portrait mode switching. The window management module may be further configured to perform a screen freezing operation, a screen freezing cancellation operation, and an operation of capturing and displaying a screen image during screen freezing. The window management module may be further configured to: when receiving a notification from the input module or performing the screen freezing operation, indicate the page composition module to obtain image layer information in a first state; and when performing the screen freezing cancellation operation, indicate the page composition module to obtain image layer information in a second state. In some examples, the window management module may perform the screen freezing cancellation operation when receiving a page drawing message sent by the screen rotation module, where the page drawing message is used to indicate the page composition module to draw the page to be displayed after the switching. Specifically, for detailed descriptions of operations performed by the window management module, refer to the embodiment shown in FIG. 4. Details are not described herein again.

The screen rotation module may be configured to: when receiving a notification message from the window management module, invoke the page composition module to compose a page to be displayed after the landscape/portrait mode switching operation is performed. If the landscape/portrait mode switching operation is an operation of switching from a landscape-mode display state to a portrait-mode display state, the page composition module composes a portrait-mode page. If the landscape/portrait mode switching operation is an operation of switching from the portrait-mode display state to the landscape-mode display state, the page composition module composes a landscape-mode page.

In some examples, the screen rotation module may determine, based on the notification message, whether the page to be displayed after the landscape/portrait mode switching operation is performed is a landscape-mode page or a portrait-mode page, and then the page composition module composes a corresponding page. The notification message may include landscape/portrait mode switching information, and the landscape/portrait mode switching information may be used to indicate the electronic device 100 to switch from the landscape-mode display state to the portrait-mode display state or switch from the portrait-mode display state to the landscape-mode display state. For example, the landscape/portrait mode switching information may include a delta value.

The screen rotation module may be further configured to: when the page to be displayed after the switching is composed by the page composition module, transmit the page to be displayed after the switching to the animation module, and indicate the animation module to load a switching animation. In some examples, the screen rotation module may directly transmit landscape/portrait mode switching information to the animation module. The landscape/portrait mode switching information may be used to indicate the animation module to compose a switching animation for switching from the landscape-mode display state to the portrait-mode display state or compose a switching animation for switching from the portrait-mode display state to the landscape-mode display state.

The page composition module may be configured to obtain the image layer information in the first state when receiving, from the window management module, a notification for obtaining the image layer information in the first state. The page composition module may be configured to: when receiving an invocation instruction from the screen rotation module, draw the page to be displayed after the switching, and return the page to be displayed after the switching to the screen rotation module. The page composition module may be further configured to obtain the image layer information in the second state when receiving, from the window management module, a notification for obtaining the image layer information in the second state. The page composition module may send the image layer information in the first state, the image layer information in the second state, and the page to be displayed after the switching to the animation module through the screen rotation module.

The animation module may be configured to determine a view region of a shared element based on the image layer information in the first state and the image layer information in the second state. For details, refer to the embodiment shown in FIG. 7A and FIG. 7B. Details are not described herein again.

The animation module may be configured to obtain a rotational image layer and a background image layer. The animation module may receive the view region of the shared element and the page to be displayed after the switching that are transmitted by the screen rotation module, and determine a rotational angle of the rotational image layer, a translation distance, and a zoom ratio based on the view region of the shared element. The animation module may compose a switching animation, and then indicate the electronic device 100 to display the composed switching animation. Specifically, for descriptions of composing the switching animation by the animation module, refer to the foregoing embodiments. Details are not described herein again.

In some examples, the animation module may learn, through a specified interface, that the electronic device 100 is in the landscape-mode display state or the portrait-mode display state after the landscape/portrait mode switching operation is performed, and then compose a switching animation based on a display status of the electronic device 100. For example, the animation module may obtain, through a specified interface Resources.getSystem().getConfiguration().orientation, the display status of the electronic device 100 after the landscape/portrait mode switching operation is performed. If a value of orientation is 0, it may indicate that the electronic device 100 is in the portrait-mode display state. If a value of orientation is 1, it may indicate that the electronic device 100 is in the landscape-mode display state. If the electronic device 100 is in the landscape-mode display state after the landscape/portrait mode switching operation is performed, the animation module composes a switching animation for switching from the portrait-mode display state to the landscape-mode display state. If the electronic device 100 is in the portrait-mode display state after the landscape/portrait mode switching operation is performed, the animation module composes a switching animation for switching from the landscape-mode display state to the portrait-mode display state. In some examples, in a process in which the animation module obtains the view region of the shared element, the second state of the electronic device 100 may also be determined through orientation.

In some other examples, the animation module may receive the landscape/portrait mode switching information sent by the screen rotation module, and compose the switching animation based on the landscape/portrait mode switching information.

For example, if the landscape/portrait mode switching information is a delta value, the delta value may be further used to indicate the electronic device 100 to rotate clockwise or rotate counterclockwise. The animation module may control a rotation direction of the rotational image layer based on the delta value. For example, if the delta value indicates that the electronic device 100 rotates clockwise, the animation module may rotate the rotational image layer in a clockwise direction (or a counterclockwise direction) during the landscape/portrait mode switching; or if the delta value indicates that the electronic device 100 rotates counterclockwise, the animation module may rotate the rotational image layer in a counterclockwise direction (or a clockwise direction) during the landscape/portrait mode switching.

It can be understood that, if the landscape/portrait mode switching input is the input for the landscape/portrait mode switching control, both a delta value and an orientation value of the electronic device 100 are the same as a delta value and an orientation value of the electronic device 100 in a case in which the electronic device 100 is rotated clockwise (or counterclockwise) to enable the electronic device 100 to perform a landscape/portrait mode switching operation.

In some examples, the window management module is further configured to generate a blocking image layer, and send the blocking image layer to the animation module. Optionally, the window management module may send the blocking image layer to the animation module through the screen rotation module.

It should be noted that the electronic device 100 may implement the display method in embodiments of this application by using the foregoing plurality of modules. The plurality of modules shown in this embodiment of the present invention do not constitute a specific limitation on the electronic device 100. In some other embodiments of this application, the electronic device 100 may include more or fewer modules than those shown in the figure, some modules may be combined, some modules may be split, or there may be different module layouts. For example, the foregoing plurality of modules may be collectively referred to as a landscape/portrait mode switching module.

Specifically, steps of switching, by the electronic device 100, from a portrait mode to a landscape mode by using the plurality of modules shown in FIG. 18 include:

The electronic device 100 displays a portrait-mode page, where the portrait-mode page includes a portrait-mode video play window, and a picture of a first video is displayed in the portrait-mode video play window.

The input module of the electronic device 100 detects landscape/portrait mode switching input of a user, and indicates the window management module to perform a landscape/portrait mode switching operation.

The window management module of the electronic device 100 performs a screen freezing operation, and indicates the page composition module to obtain image layer information of the portrait-mode page. The window management module may further obtain landscape/portrait mode switching information through a preset interface, and send the landscape/portrait mode switching information to the screen rotation module. The landscape/portrait mode switching information may be used to determine whether the electronic device 100 is switching from a portrait-mode display state to a landscape-mode display state or from a landscape-mode display state to a portrait-mode display state. In some embodiments, the landscape/portrait mode switching information is the delta value mentioned in the embodiment shown in FIG. 7A and FIG. 7B. When performing the screen freezing operation, the window management module may capture an image of the portrait-mode page, and display the image of the portrait-mode page. The image of the portrait-mode page may be referred to as a background image layer herein. The window management module may further send the background image layer to the screen rotation module.

After receiving the landscape/portrait mode switching information, the screen rotation module determines, based on the landscape/portrait mode switching information, that the electronic device 100 is switching from the portrait-mode display state to the landscape-mode display state. The screen rotation module invokes, through an interface provided by the page composition module, the page composition module to draw a landscape-mode page, where the landscape-mode page includes a landscape-mode video play window, and the picture of the first video is displayed in the landscape-mode video play window.

After drawing the landscape-mode page, the page composition module returns the landscape-mode page to the screen rotation module. The screen rotation module indicates the window management module to perform a screen freezing cancellation operation.

After receiving, from the screen rotation module, a notification indicating that the drawing of the landscape-mode page is completed, the window management module cancels screen freezing, and indicates the page composition module to obtain image layer information of the landscape-mode page. It should be noted that, in some examples, the portrait-mode video play window and the landscape-mode video play window are a same window.

After obtaining the image layer information of the landscape-mode page, the page composition module may transmit the image layer information of the portrait-mode page and the image layer information of the landscape-mode page to the animation module. In some embodiments, the page composition module may transmit the image layer information of the portrait-mode page and the image layer information of the landscape-mode page to the animation module through the screen rotation module. Optionally, the page composition module may directly obtain the image layer information of the landscape-mode page after drawing the landscape-mode page.

The screen rotation module sends both the background image layer and the landscape-mode page to the animation module.

The animation module may obtain a view region of the portrait-mode video play window based on the image layer information of the portrait-mode page and the image layer information of the landscape-mode page. The view region parameter may include a display location of the portrait-mode video play window on a display and a size of the portrait-mode video play window.

The animation module obtains a rotational image layer based on the view region of the portrait-mode video play window and the landscape-mode page. The animation module may perform a transformation operation (for example, translation, rotation, and zoom-out operations, or a matrix transformation operation) on the landscape-mode page to obtain a landscape-mode page whose display location and size are the same as a display location and a size of the portrait-mode video play window. In addition, a direction of the picture of the first video on the landscape-mode page is the same as a direction of the picture of the first video in the portrait-mode video play window. The transformed landscape-mode page may be referred to as a rotational image layer.

Alternatively, the animation module may obtain a rotational image layer based on the view region of the portrait-mode video play window and an image of the landscape-mode page. The animation module may perform a transformation operation (for example, translation, rotation, and zoom-out operations, or a matrix transformation operation) on the image of the landscape-mode page to obtain an image, of the landscape-mode page, whose display location and size are the same as a display location and a size of the portrait-mode video play window. In addition, a direction of the picture of the first video in the image of the landscape-mode page is the same as a direction of the picture of the first video in the portrait-mode video play window. The animation module may obtain the image of the landscape-mode page from the page composition module, or the animation module may perform a screenshot operation on the landscape-mode page through the window management module to obtain the image (a screenshot) of the landscape-mode page. In some examples, the window management module may set a screenshot of the portrait-mode page to an invisible state or a transparent state, capture an image of the landscape-mode page, and then set the screenshot of the portrait-mode page to a visible state or an opaque state. The transformed image of the landscape-mode page may be referred to as a rotational image layer.

Alternatively, the animation module may obtain a rotational image layer based on the view region of the portrait-mode video play window and the image of the portrait-mode page. The animation module may capture, through the window management module based on the location of the portrait-mode video play window, an image of the portrait-mode video play window in the image of the portrait-mode page, to obtain the rotational image layer.

The animation module may compose a switching animation based on the view region of the portrait-mode video play window, the background image layer, and the rotational image layer. In the switching animation, the rotational image layer is displayed above the background image layer in a floating manner. First, a display location of the rotational image layer is the same as a display location of the portrait-mode video play window. Then the animation module controls the rotational image layer undergo rotation, translation, and zoom-in, to move the rotational image layer from the display location of the portrait-mode video play window to a display location of the landscape-mode video play window (or the landscape-mode page), increase a size of the rotational image layer to be the same as a size of the landscape-mode video play window (or the landscape-mode page), and rotate the picture of the first video at the rotational image layer to be in a same direction as a direction of the picture of the first video in the landscape-mode video play window (or on the landscape-mode page).

After the animation module composes the switching animation, the electronic device 100 may play the switching animation, and display the landscape-mode page after the playing of the switching animation ends. If the rotational image layer is the image of the portrait-mode video play window, after the playing of the switching animation ends, the electronic device 100 may cancel displaying the rotational image layer and the background image layer, and display the landscape-mode page. If the rotational image layer is the landscape-mode page, the electronic device 100 may cancel displaying the background image layer after the playing of the switching animation ends. Herein, the rotational image layer may be referred to as the landscape-mode page.

In some examples, the screen rotation module may directly indicate the animation module to compose a switching animation for switching from the portrait-mode display state to the landscape-mode display state. Alternatively, the screen rotation module sends landscape/portrait mode information to the animation module, and the animation module may determine, based on the landscape/portrait mode information, to compose a switching animation for switching from the portrait-mode display state to the landscape-mode display state. Alternatively, the animation module may determine and learn, through a specified interface, that the electronic device 100 is in the landscape-mode display state or the portrait-mode display state after a landscape/portrait mode switching operation is performed, and then compose a switching animation based on a display status of the electronic device 100. Herein, the electronic device 100 is in the landscape-mode display state after the landscape/portrait mode switching operation is performed, and the animation module composes a switching animation for switching from the portrait-mode display state to the landscape-mode display state.

In some embodiments, if the landscape/portrait mode switching input is clockwise rotation of the electronic device 100, the animation module may compose a switching animation in which the rotational image layer is rotated clockwise. If the landscape/portrait mode switching input is counterclockwise rotation of the electronic device 100, the animation module may compose a switching animation in which the rotational image layer is rotated counterclockwise. In some examples, the animation module may determine, based on the delta value, whether the electronic device 100 is rotated clockwise or counterclockwise.

In some embodiments, the animation module of the electronic device 100 may further obtain a blocking image layer through a window manager. The animation module may display the blocking image layer at an upper layer of the background image layer and at a lower layer of the rotational image layer. A display location of the blocking image layer is the same as a display location of the portrait-mode video play window. A size of the blocking image layer is the same as a size of the portrait-mode video play window. The blocking image layer is a preset image. After the playing the switching animation ends, the electronic device 100 cancels displaying the blocking image layer.

Specifically, steps of switching, by the electronic device 100, from a landscape mode to a portrait mode by using the plurality of modules shown in FIG. 18 include:

The electronic device 100 displays a landscape-mode page, where the landscape-mode page includes a landscape-mode video play window, and a picture of a first video is displayed in the landscape-mode video play window.

The input module of the electronic device 100 detects landscape/portrait mode switching input (to be specific, input for switching from a landscape-mode display state to a portrait-mode display state) performed by a user, and indicates the window management module to perform a landscape/portrait mode switching operation.

The window management module of the electronic device 100 performs a screen freezing operation, and indicates the page composition module to obtain image layer information of the landscape-mode page. The window management module may further obtain landscape/portrait mode switching information through a preset interface, and send the landscape/portrait mode switching information to the screen rotation module. The landscape/portrait mode switching information may be used to determine whether the electronic device 100 is switching from the landscape-mode display state to the portrait-mode display state or from the portrait-mode display state to the landscape-mode display state. In some embodiments, the landscape/portrait mode switching information is the delta value mentioned in the embodiment shown in FIG. 7A and FIG. 7B. When performing the screen freezing operation, the window management module may further capture an image of the landscape-mode page, and display the image of the landscape-mode page.

After receiving the landscape/portrait mode switching information, the screen rotation module determines, based on the landscape/portrait mode switching information, that the electronic device 100 is switching from the landscape-mode display state to the portrait-mode display state. The screen rotation module invokes, through an interface provided by the page composition module, the page composition module to draw a portrait-mode page, where the portrait-mode page includes a portrait-mode video play window, and the picture of the first video is displayed in the portrait-mode video play window.

After drawing the portrait-mode page, the page composition module returns the portrait-mode page to the screen rotation module. The screen rotation module indicates the window management module to perform a screen freezing cancellation operation.

After receiving, from the screen rotation module, a notification indicating that the drawing of the landscape-mode page is completed, the window management module cancels screen freezing, and indicates the page composition module to obtain image layer information of the portrait-mode page. It should be noted that, in some examples, the portrait-mode video play window and the landscape-mode video play window are a same window.

After obtaining the image layer information of the landscape-mode page, the page composition module may send the image layer information of the portrait-mode page and the image layer information of the landscape-mode page to the animation module. In some embodiments, the page composition module may transmit the image layer information of the portrait-mode page and the image layer information of the landscape-mode page to the animation module through the screen rotation module. Optionally, the page composition module may directly obtain the image layer information of the portrait-mode page after drawing the portrait-mode page.

The screen rotation module may send the portrait-mode page to the animation module.

The animation module may obtain a view region of the portrait-mode video play window based on the image layer information of the portrait-mode page and the image layer information of the landscape-mode page. The view region parameter may include a display location of the portrait-mode video play window on a display and a size of the portrait-mode video play window.

In some embodiments, the animation module may use an image, obtained by a window manager, of the landscape-mode page as a rotational image layer, and use the portrait-mode page as a background image layer. Alternatively, the animation module may capture, based on a view region of the portrait-mode video play window, an image of the portrait-mode video play window at first frequency through the window manager, and then perform a transformation operation on the image to obtain a rotational image layer. It can be understood that, because the picture of the first video in the portrait-mode video play window changes, when obtaining the image obtained by the window manager, the animation module needs to perform a transformation operation on the image to implement an action of rotating, zooming out, and moving the rotational image layer from the landscape-mode video play window to the portrait-mode video play window.

The animation module may compose a switching animation based on the view region of the portrait-mode video play window, the background image layer, and the rotational image layer. In the switching animation, the rotational image layer is displayed above the background image layer in a floating manner. First, a display location of the rotational image layer is the same as a display location of the landscape-mode video play window (or the landscape-mode page). Then the animation module controls the rotational image layer undergo rotation, translation, and zoom-out to move the rotational image layer from the display location of the landscape-mode video play window (or the landscape-mode page) to a display location of the portrait-mode video play window, reduce a size of the rotational image layer to be the same as a size of the portrait-mode video play window, and rotate the picture of the first video at the rotational image layer to be in a same direction as a direction of the picture of the first video in the portrait-mode video play window. Then the electronic device may cancel displaying the rotational image layer, and display only the background image layer. Herein, the background image layer may be referred to as the portrait-mode page.

In some other embodiments, the animation module may capture an image of the portrait-mode page through the window manager, and use the image as a background image layer. In some embodiments, the animation module may set a screenshot of the landscape-mode page to an invisible state or a transparent state (for example, set transparency of the screenshot of the landscape-mode page to 100%), and then capture an image on a display through the window management module to obtain an image of the portrait-mode page. In some other embodiments, the electronic device 100 may alternatively obtain an image of the portrait-mode page by using an HWC, and use the image as a background image layer.

The animation module may further perform a transformation operation on the portrait-mode page to obtain a rotational image layer. For example, the transformation operation may be: performing rotation, zoom-in, and translation operations on the portrait-mode page, so that a size of the portrait-mode video play window on the portrait-mode page is the same as a size of the landscape-mode page (or the landscape-mode video play window), a display location of the portrait-mode video play window on the portrait-mode page is the same as a display location of the landscape-mode page (or the landscape-mode video play window), and a direction of the picture of the first video on the portrait-mode page is the same as a direction of the picture of the first video on the landscape-mode page.

The animation module may compose a switching animation based on the view region of the portrait-mode video play window, the background image layer, and the rotational image layer. In the switching animation, the rotational image layer is displayed above the background image layer in a floating manner, and a part of the rotational image layer other than the portrait-mode video play window is not displayed (for example, the part of the rotational image layer other than the portrait-mode video play window is set to an invisible state or a transparent state). First, a display location of the portrait-mode video play window at the rotational image layer is the same as a display location of the landscape-mode video play window (or the landscape-mode page). Then the animation module controls the rotational image layer undergo rotation, translation, and zoom-out to move the portrait-mode video play window at the rotational image layer from the display location of the landscape-mode video play window (or the landscape-mode page) to a display location of the portrait-mode video play window, reduce a size of the portrait-mode video play window at the rotational image layer to be the same as a size of the portrait-mode video play window, and rotate the picture of the first video at the rotational image layer to be in a same direction as a direction of the picture of the first video in the portrait-mode video play window. Then the animation module may display the part of the rotational image layer other than the portrait-mode video play window (for example, set the part of the rotational image layer other than the portrait-mode video play window to a visible state or an opaque state). The electronic device may cancel displaying the background image layer, and display only the rotational image layer. Herein, the rotational image layer may be referred to as the portrait-mode page.

In some embodiments, if the landscape/portrait mode switching input is clockwise rotation of the electronic device 100, the animation module may compose a switching animation in which the rotational image layer is rotated clockwise. If the landscape/portrait mode switching input is counterclockwise rotation of the electronic device 100, the animation module may compose a switching animation in which the rotational image layer is rotated counterclockwise. In some examples, the animation module may determine, based on the delta value, whether the electronic device 100 is rotated clockwise or counterclockwise.

In some embodiments, the animation module of the electronic device 100 may further obtain a blocking image layer through a window manager. The animation module may display the blocking image layer at an upper layer of the background image layer and at a lower layer of the rotational image layer. A display location of the blocking image layer is the same as a display location of the portrait-mode video play window. A size of the blocking image layer is the same as a size of the portrait-mode video play window. The blocking image layer is a preset image. After the playing the switching animation ends, the electronic device 100 cancels displaying the blocking image layer.

In some embodiments, an application layer framework layer of the electronic device 100 includes a landscape/portrait mode switching unit, and the landscape/portrait mode switching unit may be configured to compose and display a landscape/portrait mode switching animation. The landscape/portrait mode switching unit and a first application are different modules of the electronic device 100. The landscape/portrait mode switching unit does not belong to the first application, and the first application does not belong to the landscape/portrait mode switching unit either. The first application is an application including the landscape-mode video play window and the portrait-mode video play window. Optionally, the landscape/portrait mode switching unit may be divided into a plurality of modules, and the plurality of modules include the window management module, the page composition module, the screen rotation module, and the animation module shown in FIG. 18.

In some embodiments, the electronic device 100 displays a first page of the first application, the first page includes a first window, and a picture of a first video is displayed in the first window. The first application is set to display a first switching animation when receiving landscape/portrait mode switching input. The electronic device 100 receives landscape/portrait mode switching input. In response to the landscape/portrait mode switching input, an operating system of the electronic device 100 may determine whether to indicate the first application to load (also referred to as compose) the first switching animation. When determining to indicate the first application to load the first switching animation, the operating system of the electronic device 100 may indicate the first application to load the first switching animation, and play the first switching animation after the first application completes loading the first switching animation. When the operating system of the electronic device 100 determines not to indicate the first application to load the first switching animation, the operating system of the electronic device 100 may load a second switching animation, and play the second switching animation. For specific descriptions of loading the second switching animation by the electronic device 100, refer to the foregoing embodiments. Details are not described herein again. It can be understood that, because an entity that loads the second switching animation is different from an entity that loads the first switching animation, the first switching animation may be different from the second switching animation.

For example, a flag bit may be set for the first application. When a value of the flag bit is a first value (for example, false), the operating system of the electronic device 100 may load (compose) and play the second switching animation. When a value of the flag bit is a second value (for example, true), the operating system of the electronic device 100 may indicate the first application to load (compose) the first switching animation, and play the first switching animation provided by the first application. The first switching animation is different from the second switching animation. The first application may invoke an overridePendingTransition method to load the first switching animation. In this way, when a method for loading a landscape/portrait mode switching animation is set in an application on the electronic device 100, the application may provide a landscape/portrait mode switching animation; or when no method for loading a landscape/portrait mode switching animation is set in an application on the electronic device 100, the operating system may provide a landscape/portrait mode switching animation. This can avoid a problem that a switching process is not smooth and double images occur during landscape/portrait mode switching for an application that does not provide a landscape/portrait mode switching animation.

In some embodiments, a size of a background image layer is the same as a size of a display of the electronic device 100. The background image layer may be a preset image. The preset image may be an image of any color (for example, black or white), or the preset image may be an image including a specified pattern.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A display method, comprising:
displaying, by an electronic device, a first page, wherein a first window is displayed in a first region of the first page, and a picture of a first video is displayed in the first window;
receiving, by the electronic device, first input for switching the electronic device from a portrait-mode display state to a landscape-mode display state;
displaying, by the electronic device, a first background image layer after receiving the first input, wherein the first background image layer comprises a screenshot of the first page;
displaying, by the electronic device, a first rotational image layer above the first background image layer in a floating manner, and switching the first rotational image layer from the first region to a second region of a second page for display, wherein the first window is displayed in the second region of the second page, a direction of the picture of the first video on the second page is different from a direction of the picture of the first video on the first page, the first rotational image layer comprises the picture of the first video, and a direction of the picture of the first video in a case in which the first rotational image layer is displayed in the second region is different from a direction of the picture of the first video in a case in which the first rotational image layer is displayed in the first region; and
displaying, by the electronic device, the second page after the first rotational image layer is switched to the second region for display.

2. The method according to claim 1, wherein the switching the first rotational image layer from the first region to a second region of a second page for display specifically comprises:
performing rotation, translation, and zoom-in operations on the first rotational image layer to switch the first rotational image layer from the first region to the second region for display.

3. The method according to claim 1 or 2, wherein during the displaying, by the electronic device, the first background image layer, the method further comprises:
displaying a first blocking image layer in a floating manner at a display location of the first window at the first background image layer, wherein the first blocking image layer and the first window have a same size, the first blocking image layer is a preset image, and the first blocking image layer is blocked by the first rotational image layer.

4. The method according to any one of claims 1 to 3, wherein during the displaying, by the electronic device, the first background image layer, the method further comprises:
drawing, by the electronic device, the second page;
obtaining, by the electronic device, a size and a location of the first window on the first page based on image layer information of the first page and image layer information of the second page, wherein the size of the first window on the first page is the same as a size of the first region, and the location of the first window on the first page is the same as a location of the first region; and
performing, by the electronic device, rotation, translation, and zoom-out transformation on the second page to obtain a transformed second page whose size and location are the same as the size and the location of the first region and in which a direction of the picture of the first video is the same as a direction of the picture of the first video in the first window on the first page, wherein the first rotational image layer is the transformed second page; or
obtaining, by the electronic device, an image of the first window in the screenshot of the first page based on the size and the location of the first window on the first page, wherein the first rotational image layer is the image of the first window on the first page.

5. The method according to claim 4, wherein the obtaining, by the electronic device, a size and a location of the first window on the first page based on image layer information of the first page and image layer information of the second page specifically comprises:
obtaining the image layer information of the first page, wherein the image layer information of the first page comprises view information of one or more views on the first page, the one or more views on the first page comprise the first window, and the view information comprises a view name, a parent-level view name, a view region parameter, and a view level;
obtaining the image layer information of the second page, wherein the image layer information of the second page comprises view information of one or more views on the second page, the one or more views on the second page comprise the first window, and the view information comprises a view name, a parent-level view name, a view region parameter, and a view level; and
determining the first window on the first page and the first window on the second page based on the image layer information of the first page and the image layer information of the second page, wherein a view region parameter of the first window on the first page comprises the location and the size of the first window, the first window on the first page and the first window on the second page have a same view name and a same parent-level view name, the first window on the first page has a highest view level on the first page, and the first window on the second page has a highest view level on the second page.

6. The method according to any one of claims 1 to 5, wherein after the displaying, by the electronic device, the second page, the method further comprises:
receiving, by the electronic device, second input of a user for switching the electronic device from the landscape-mode display state to the portrait-mode display state;
in response to the second input, displaying, by the electronic device, a second background image layer, and displaying a second rotational image layer in a floating manner at a display location of the second background image layer, wherein the second background image layer comprises a third page, the first window is displayed in a third region of the third page, and the third region is the same as the first region;
switching, by the electronic device, the second rotational image layer from the second region to the third region for display, wherein the second rotational image layer comprises the picture of the first video, and a direction of the picture of the first video in a case in which the second rotational image layer is displayed in the third region is different from a direction of the picture of the first video in a case in which the second rotational image layer is displayed in the second region; and
displaying, by the electronic device, the third page after the second rotational image layer is switched to the third region for display.

7. The method according to claim 6, wherein the switching, by the electronic device, the second rotational image layer from the second region to the third region for display specifically comprises:
performing rotation, translation, and zoom-out operations on the second rotational image layer to switch the second rotational image layer from the second region to the third region for display.

8. The method according to claim 6 or 7, wherein the displaying, by the electronic device, a second background image layer, and displaying a second rotational image layer in a floating manner at a display location of the second background image layer specifically comprises:
capturing and displaying an image of the second page in response to the second input; and
displaying the image of the second page above the second background image layer in a floating manner, wherein the image of the second page is the second rotational image layer.

9. The method according to any one of claims 6 to 8, wherein during the displaying a second background image layer, and displaying a second rotational image layer in a floating manner at a display location of the second background image layer, the method further comprises:
displaying a second blocking image layer in a floating manner at a display location of the first window on the third page at the second background image layer, wherein the second blocking image layer and the first window on the third page have a same size, the second blocking image layer is a preset image, and the second blocking image layer is blocked by the second rotational image layer.

10. The method according to any one of claims 1 to 5, wherein after the displaying, by the electronic device, the second page, the method further comprises:
receiving, by the electronic device, third input of a user for switching the electronic device from the landscape-mode display state to the portrait-mode display state;
displaying, by the electronic device, a third background image layer in response to the third input, and displaying a third rotational image layer in a floating manner at a display location of the third background image layer, wherein the third background image layer comprises a screenshot of a third page, the first window is displayed in a third region of the third page, and the third region is the same as the first region;
switching, by the electronic device, the third rotational image layer from the second region to the third region for display, wherein the third rotational image layer comprises the picture of the first video, and a direction of the picture of the first video in a case in which the third rotational image layer is displayed in the third region is different from a direction of the picture of the first video in a case in which the third rotational image layer is displayed in the second region; and
displaying, by the electronic device, the third page after the third rotational image layer is switched to the third region for display.

11. The method according to claim 10, wherein before the displaying, by the electronic device, a third background image layer, the method further comprises:
capturing and displaying, by the electronic device, an image of the second page;
drawing, by the electronic device, the third page;
capturing, by the electronic device, an image of the third page to obtain the third background image layer;
obtaining a size and a location of the third window based on the image layer information of the second page and image layer information of the third page, wherein the size and the location of the third window are the same as a size and a location of the third region;
performing, by the electronic device, rotation, translation, and zoom-in on the third page to obtain the third rotational image layer, wherein the first window at the third rotational image layer and the first window on the second page have a same size, a direction of the picture of the first video at the third rotational image layer is the same as the direction of the picture of the first video on the second page, and a location of the first window at the third rotational image layer is the same as a location of the first window on the second page; and
canceling, by the electronic device, displaying the image of the second page.

12. The method according to claim 11, wherein the switching, by the electronic device, the third rotational image layer from the second region to the third region for display specifically comprises:
skipping, by the electronic device, displaying a part of the third rotational image layer other than the third window;
performing, by the electronic device, rotation, translation, and zoom-out operations on the third window at the third rotational image layer to switch the third window at the third rotational image layer from the second region to the third region for display; and
when the electronic device switches the third window at the third rotational image layer from the second region to the third region for display, displaying the part of the third rotational image layer other than the third window.

13. The method according to any one of claims 10 to 12, wherein during the displaying, by the electronic device, a third background image layer, and displaying a third rotational image layer in a floating manner at a display location of the third background image layer, the method further comprises:
displaying a third blocking image layer in a floating manner at a display location of the third window at the background image layer, wherein the third blocking image layer and the third window have a same size, the third blocking image layer is a preset image, and the third blocking image layer is blocked by the second rotational image layer.

14. The method according to any one of claims 1 to 13, wherein the first window on the first page comprises a first control, and the first input is input for the first control, or the first input is input of rotating the electronic device clockwise or counterclockwise by a first angle, and/or the first input is input of rotating the electronic device at a first acceleration.

15. The method according to any one of claims 1 to 14, wherein a size of the second region is the same as a size of a display of the electronic device.

16. A display method, comprising:
displaying, by an electronic device, a fourth page, wherein a first window is displayed in a fourth region of the fourth page, and a picture of a first video is displayed in the first window;
receiving, by the electronic device, fourth input for switching the electronic device from a landscape-mode display state to a portrait-mode display state;
in response to the fourth input, displaying, by the electronic device, a fourth background image layer, and displaying a fourth rotational image layer in a floating manner at a display location of the fourth background image layer, wherein the fourth background image layer comprises a fifth page, the first window is displayed in a fifth region of the fifth page, and a direction of the picture of the first video on the fifth page is different from a direction of the picture of the first video on the fourth page;
switching, by the electronic device, the fourth rotational image layer from the fourth region to the fifth region for display, wherein the fourth rotational image layer comprises the picture of the first video, and a direction of the picture of the first video in a case in which the fourth rotational image layer is displayed in the fifth region is different from a direction of the picture of the first video in a case in which the fourth rotational image layer is displayed in the fourth region; and
displaying, by the electronic device, the fifth page after the fourth rotational image layer is switched to the fifth region for display.

17. The method according to claim 16, wherein the in response to the fourth input, displaying, by the electronic device, a fourth background image layer, and displaying a fourth rotational image layer in a floating manner at a display location of the fourth background image layer specifically comprises:
capturing and displaying a screenshot of the fourth page in response to the fourth input; and
displaying the screenshot of the fourth page above the fourth background image layer in a floating manner, wherein the screenshot of the fourth page is the fourth rotational image layer.

18. The method according to claim 16 or 17, wherein after the displaying, by the electronic device, the fifth page, the method further comprises:
receiving, by the electronic device, fifth input of a user for switching the electronic device from the portrait-mode display state to the landscape-mode display state;
displaying, by the electronic device, a fifth background image layer after receiving the fifth input, and displaying a fifth rotational image layer above the fifth background image layer in a floating manner, wherein the fifth background image layer comprises a screenshot of the fifth page;
switching, by the electronic device, the fifth rotational image layer from the fifth region to a sixth region of a sixth page for display, wherein the sixth region of the sixth page is used to display the first window, the sixth region is the same as the fourth region, the fifth rotational image layer comprises the picture of the first video, and a direction of the picture of the first video in a case in which the fifth rotational image layer is displayed in the sixth region is different from a direction of the picture of the first video in a case in which the fifth rotational image layer is displayed in the fifth region; and
displaying, by the electronic device, the sixth page after the fifth rotational image layer is switched to the sixth region for display.

19. The method according to claim 18, wherein during the displaying, by the electronic device, the fifth background image layer, the method further comprises:
drawing, by the electronic device, the sixth page;
obtaining, by the electronic device, a size and a location of the first window on the fifth page based on image layer information of the fifth page and image layer information of the sixth page, wherein the size of the first window on the fifth page is the same as a size of the fifth region, and the location of the first window on the fifth page is the same as a location of the fifth region; and
performing, by the electronic device, rotation, translation, and zoom-out transformation on the sixth page to obtain a transformed sixth page whose size and location are the same as the size and the location of the fifth region and in which a direction of the picture of the first video is the same as a direction of the picture of the first video on the fifth page, wherein the fifth rotational image layer is the transformed sixth page; or
obtaining, by the electronic device, an image of the first window on the fifth page based on the size and the location of the first window on the fifth page, wherein the fifth rotational image layer is the image of the first window on the fifth page.

20. A display method, comprising:
displaying, by an electronic device, a fourth page, wherein a first window is displayed in a fourth region of the fourth page, and a picture of a first video is displayed in the first window;
receiving, by the electronic device, fourth input for switching the electronic device from a landscape-mode display state to a portrait-mode display state;
in response to the fourth input, displaying, by the electronic device, a fourth background image layer, and displaying a fourth rotational image layer in a floating manner at a display location of the fourth background image layer, wherein the fourth background image layer comprises a screenshot of a fifth page, the first window is displayed in a fifth region of the fifth page, and a direction of the picture of the first video on the fifth page is different from a direction of the picture of the first video on the fourth page;
switching, by the electronic device, the fourth rotational image layer from the fourth region to the fifth region for display, wherein the fourth rotational image layer comprises the picture of the first video, and a direction of the picture of the first video in a case in which the fourth rotational image layer is displayed in the fifth region is different from a direction of the picture of the first video in a case in which the fourth rotational image layer is displayed in the fourth region; and
displaying, by the electronic device, the fifth page after the fourth rotational image layer is switched to the fifth region for display.

21. The method according to claim 20, wherein before the displaying, by the electronic device, a fourth background image layer, the method further comprises:
capturing and displaying, by the electronic device, an image of the fourth page;
drawing, by the electronic device, the fifth page;
capturing, by the electronic device, an image of the fifth page to obtain the fourth background image layer;
obtaining a size and a location of the first window on the fifth page based on image layer information of the fifth page and image layer information of the fourth page, wherein the size and the location of the first window on the fifth page are the same as a size and a location of the fifth region;
performing, by the electronic device, rotation, translation, and zoom-in on the fifth page to obtain the fourth rotational image layer, wherein the first window at the fourth rotational image layer and the first window on the fourth page have a same size, a direction of the picture of the first video at the rotational image layer is the same as the direction of the picture of the first video on the fourth page, and a location of the first window at the rotational image layer is the same as a location of the first window on the fourth page; and
canceling, by the electronic device, displaying the image of the fourth page.

22. The method according to claim 20 or 21, wherein after the displaying, by the electronic device, the fifth page, the method further comprises:
receiving, by the electronic device, fifth input of a user for switching the electronic device from the portrait-mode display state to the landscape-mode display state;
displaying, by the electronic device, a fifth background image layer after receiving the fifth input, and displaying a fifth rotational image layer above the fifth background image layer in a floating manner, wherein the fifth background image layer comprises a screenshot of the fifth page;
switching, by the electronic device, the fifth rotational image layer from the fifth region to a sixth region of a sixth page for display, wherein the sixth region of the sixth page is used to display the first window, the sixth region is the same as the fourth region, the fifth rotational image layer comprises the picture of the first video, and a direction of the picture of the first video in a case in which the fifth rotational image layer is displayed in the sixth region is different from a direction of the picture of the first video in a case in which the fifth rotational image layer is displayed in the fifth region; and
displaying, by the electronic device, the sixth page after the fifth rotational image layer is switched to the sixth region for display.

23. The method according to claim 22, wherein during the displaying, by the electronic device, the fifth background image layer, the method further comprises:
drawing, by the electronic device, the sixth page;
obtaining, by the electronic device, the size and the location of the first window on the fifth page based on the image layer information of the fifth page and image layer information of the sixth page, wherein the size of the first window on the fifth page is the same as the size of the fifth region, and the location of the first window on the fifth page is the same as the location of the fifth region; and
performing, by the electronic device, rotation, translation, and zoom-out transformation on the sixth page to obtain a transformed sixth page whose size and location are the same as the size and the location of the fifth region and in which a direction of the picture of the first video is the same as a direction of the picture of the first video in the first window on the fifth page, wherein the fifth rotational image layer is the transformed sixth page; or
obtaining, by the electronic device, an image of the first window on the fifth page based on the size and the location of the first window on the fifth page, wherein the fifth rotational image layer is the image of the first window on the fifth page.

24. An electronic device, comprising a display, one or more processors, and one or more memories, wherein the touchscreen and the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 15, 16 to 19, or 20 to 23.

25. A computer-readable storage medium, comprising instructions, wherein when the instructions are run on an electronic device, the electronic device is enabled to perform the method according to any one of claims 1 to 15, 16 to 19, or 20 to 23.
